# EUROPÄISCHE PATENTSCHRIFT

(11) **EP 0 524 148 B1**
(45) Veröffentlichungstag und Bekanntmachung des Hinweises auf die Patenterteilung: **19.03.1997**
(21) Anmeldenummer: 92810527.9
(22) Anmeldetag: 10.07.1992
(51) Int. Cl.: C09B 67/22, D06P 3/26, D06P 3/24

(54) **Farbstoffmischungen und deren Verwendung**
Dye mixtures and their use
Mélanges de colorants et leur utilisation

(30) Priorität: 19.07.1991 CH 2162/91
(43) Veröffentlichungstag der Anmeldung: 20.01.1993
(73) Patentinhaber: Ciba Specialty Chemicals Holding Inc., 4057 Basel (CH)
(72) Erfinder: Schaetzer, Jürgen, Dr., W-7888 Rheinfelden (DE)

(56) Entgegenhaltungen:
- EP-A- 0 425 434
- EP-A- 0 439 423
- FR-A- 2 030 380

## Beschreibung

Die vorliegende Erfindung betrifft Mischungen gelb- oder orangefärbender Farbstoffe, die zum Färben von natürlichen oder synthetischen textilen Polyamidfasermaterialien aus wässrigem Bad geeignet sind, die sehr gute Echtheitseigenschaften aufweisen und die insbesondere in Kombination mit anderen Farbstoffen ein gutes Ziehverhalten, insbesondere aus Kurzflotten, zeigen.

Gegenstand der vorliegenden Erfindung ist eine Farbstoffmischung, die mindestens einen Farbstoff der Formel 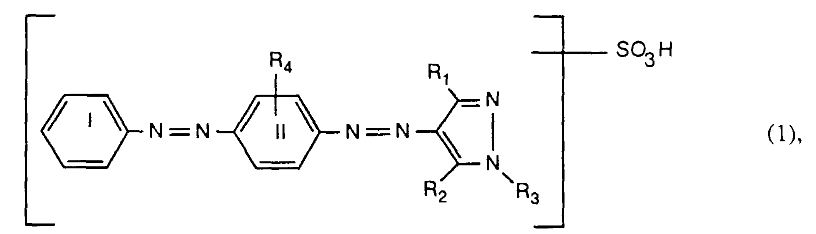 worin R₁ und R₂ unabhängig voneinander Wasserstoff oder gegebenenfalls substituiertes C₁-C₈-Alkyl oder Phenyl sind, R₃ Wasserstoff oder gegebenenfalls substituiertes C₁-C₈-Alkyl, C₅-C₇-Cycloalkyl oder Phenyl ist, R₄ Wasserstoff oder ein Rest der Formel 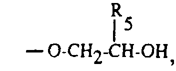 R₅ Wasserstoff oder gegebenenfalls substituiertes C₁-C₈-Alkyl oder Phenyl ist und die Benzolringe I und II gegebenenfalls weitersubstituiert sind, zusammen mit mindestens einem Farbstoff der Formeln (2) bis (6): 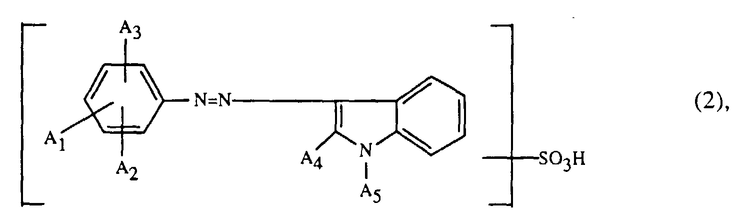 worin A₁ und A₂ Wasserstoff, Halogen, C₁₋₄-Alkoxy, C₂₋₄-Alkanoylamino oder gegebenenfalls substituiertes C₁₋₄-Alkyl, A₃ gegebenenfalls substituiertes Phenylsulfonyl, Naphthylsulfonyl oder C₁₋₄-Alkylaminosulfonyl, A₄ Wasserstoff, gegebenenfalls substituiertes C₁-C₄-Alkyl, Phenyl oder Naphthyl und A₅ Wasserstoff oder C₁-C₈-Alkyl ist, 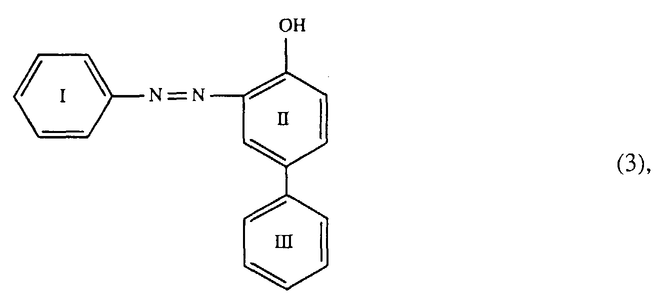 worin die Benzolringe I, II und III gegebenenfalls substituiert sind, 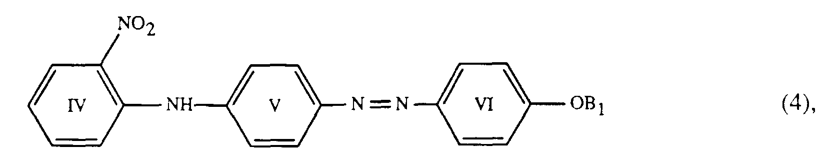 worin die Benzolringe IV, V und VI gegebenenfalls substituiert sind und B₁ Wasserstoff oder gegebenenfalls substituiertes Phenyl- oder Naphthylsulfonyl ist, 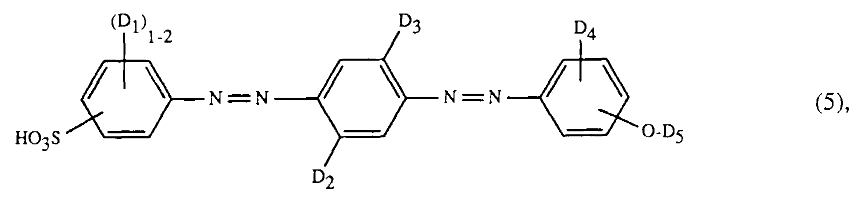 worin D₁, D₂ und D₃ Wasserstoff, C₁₋₄-Alkyl, C₁₋₄-Alkoxy, C₂₋₄-Hydroxyalkoxy, C₂-C₄-Alkanoylamino oder Carbamoyl und D₄ und D₅ Wasserstoff, C₁₋₄-Alkyl oder C₂₋₄-Hydroxylalkyl bedeuten und (D₁)₁₋₂ für einen oder zwei Substituenten D₁ steht, und 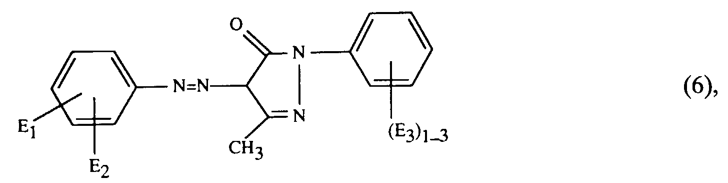 worin E₁ Wasserstoff, C₁₋₄-Alkyl, C₁₋₄-Alkoxy, C₂₋₄-Alkanoylamino, Sulfo oder Halogen, E₂ Wasserstoff, Halogen, Sulfo oder gegebenenfalls substituiertes Phenyl- oder Naphthylaminosulfonyl ist und (E₃)₁₋₃ für 1 bis 3 Substituenten E₃ steht und E₃ Wasserstoff, Halogen, C₁₋₄-Alkyl, C₁₋₄-Alkoxy oder Sulfo ist, enthält.

Aus der EP-A-425,434 sind Farbstoffmischungen bekannt, welche im Unterschied zu den erfindungsgemässen Mischungen keinen Farbstoff der Formel (1) enthalten.

Aus der FR-A-2,030,380 sind Einzelfarbstoffe bekannt, welche sich von den Farbstoffen der Formel (1) hinsichtlich des Restes R₂ unterscheiden.

Die Azofarbstoffe der Formel (1), worin R₁ und R₂ voneinander verschiedene Bedeutungen haben und zusätzlich R₃ nicht Wasserstoff bedeutet, liegen in der Regel als Isomerengemisch der Verbindungen der Fomeln 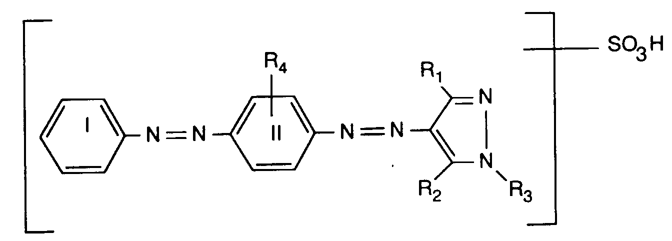 und 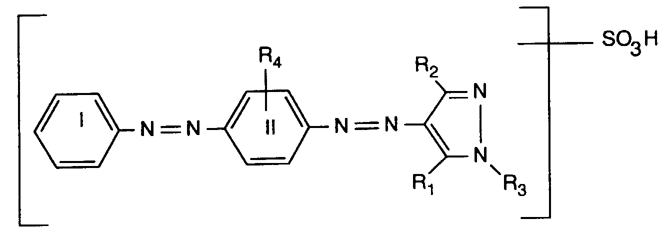 vor. Unter der Bezeichnung Azofarbstoffe der Formel (1) werden hier und im folgenden auch die oben angegebenen Isomerengemische verstanden.

Als C₁-C₈-Alkyl kommen für R₁, R₂, R₃ und R₅ in Formel (1) unabhängig voneinander z.B. Methyl, Aethyl, Propyl, Isopropyl, Butyl, Isobutyl, sek.-Butyl, tert.-Butyl, Pentyl, Hexyl, Heptyl oder Octyl, sowie die entsprechenden Reste, die z.B. substituiert sind durch Hydroxy, C₁-C₄-Alkoxy oder Halogen, in Betracht. Als substituiertes C₁-C₈-Alkyl kommt für R₅ insbesondere durch Hydroxy substituiertes C₁-C₈-Alkyl in Betracht.

Als C₅-C₇-Cycloalkyl kommt für R₃ in Formel (1) z.B. unsubstituiertes Cyclohexyl oder durch C₁-C₄-Alkyl, wie z.B. Methyl oder Aethyl, substituiertes Cyclohexyl in Betracht.

Als Phenyl kommt für R₁, R₂, R₃ und R₅ in Formel (1) z.B. unsubstituiertes Phenyl oder durch C₁-C₄-Alkyl, wie z.B. Methyl oder Aethyl, C₁-C₄-Alkoxy, wie z.B. Methoxy oder Aethoxy, C₂-C₄-Alkanoylamino, wie z.B. Acetylamino oder Propionylamino, Hydroxy, Sulfo oder Halogen, wie z.B. Fluor, Chlor oder Brom, substituiertes Phenyl in Betracht.

Als Substituenten der Benzolringe I und II der Azofarbstoffe der Formel (1) kommen unabhängig voneinander z.B. C₁-C₄-Alkyl, wie z.B. Methyl oder Aethyl, C₁-C₄-Alkoxy, wie z.B. Methoxy oder Aethoxy, C₂-C₄-Alkanoylamino, wie z.B. Acetylamino oder Propionylamino, Hydroxy, Sulfo, Nitro, Halogen, wie z.B. Fluor, Chlor oder Brom, Sulfamoyl oder am Stickstoffatom durch C₁-C₄-Alkyl, Phenyl oder Naphthyl mono- oder disubstituiertes Sulfamoyl, welches im C₁-C₄-Alkyl-, Phenyl- und Naphthylrest durch die oben genannten Substituenten weitersubstituiert sein kann, in Betracht. Bevorzugte Substituenten der Benzolringe I und II sind C₁-C₄-Alkyl, C₁-C₄-Alkoxy, C₂-C₄-Alkanoylamino und Halogen, insbesondere Methyl, Methoxy, Acetylamino und Chlor.

Vorzugsweise enthalten die Azofarbstoffe der Formel (1) nur eine Sulfogruppe.

Bedeuten A₁, A₂, A₄, D₁, D₂, D₃, D₄, D₅, E₁ oder E₃ C₁₋₄-Alkyl, so handelt es sich um Methyl, Äthyl, n-Propyl, Isopropyl, n-Butyl, sek.-Butyl, Isobutyl oder tert.-Butyl.

Bedeutet A₅ einen Alkylrest, so kommt vorzugsweise ein geradkettiger oder verzweigter C₁₋₈-Alkylrest in Betracht. Als Beispiele seien genannt: Methyl, Äthyl, Propyl, Isopropyl, Butyl, sek.-Butyl, tert.-Butyl, Isobutyl, Pentyl-(1), Pentyl-(3), Heptyl-(1), Heptyl-(3) und Octyl-(1).

Als Hydroxyalkylrest kommt für D₄ und D₅ ein geradkettiger oder verzweigter Hydroxyalkylrest in Betracht, wie z.B. der β-Hydroxyäthyl-, β-Hydroxypropyl-, β-Hydroxybutyloder der α-Äthyl-β-hydroxyäthylrest.

Bedeuten A₁, A₂, D₁, D₂, D₃, E₁ oder E₃ C₁₋₄-Alkoxy, so handelt es sich um Methoxy, Äthoxy, n-Propoxy, Isopropoxy, n-Butoxy, sek.-Butoxy, Isobutoxy oder tert.-Butoxy.

Als Hydroxyalkoxyrest kommt für D₁, D₂ oder D₃ ein geradkettiger oder verzweigter Hydroxyalkoxyrest in Betracht, wie beispielsweise der β-Hydroxyäthoxy-, β-Hydroxypropoxy-, β-Hydroxybutoxy- oder der α-Äthyl-β-hydroxyäthoxyrest.

Bedeuten A₁, A₂, D₁, D₂, D₃ oder E₁ C₂₋₄-Alkanoylamino, so handelt es sich beispielsweise um Acetylamino, Propionylamino oder Butyrylamino.

Bedeuten A₃ oder B₁ gegebenenfalls substituiertes Phenyl- oder Naphthylsulfonyl, oder E₂ gegebenenfalls substituiertes Phenyl- oder Naphthylaminosulfonyl, oder A₄ gegebenenfalls substituiertes Phenyl- oder Naphthyl, so können diese Reste im Phenyl- oder Naphthylring beispielsweise durch C₁₋₄-Alkylgruppen, wie Methyl und Äthyl, C₁₋₄-Alkoxygruppen, wie Methoxy und Äthoxy, Halogen, wie Fluor, Chlor und Brom, Alkanoylaminogruppen mit 1 bis 6 Kohlenstoffatomen, wie Acetylamino, und Hydroxy weitersubstituiert sein. Der Rest A₄ als Phenyl- oder Naphthyl kann auch durch Sulfo substituiert sein.

Bedeuten A₁, A₂, E₁, E₂ oder E₃ Halogen, so handelt es sich um Fluor, Chlor oder Brom.

Bedeutet A₃ einen gegebenenfalls substituierten C₁₋₄-Alkylaminosulfonylrest, so kommt z.B. ein durch Sulfo substituierter Rest in Betracht. Als Beispiele seien Aethylaminosulfonyl und β-Sulfoäthylaminosulfonyl genannt.

Bedeuten A₁, A₂ oder A₄ einen gegebenenfalls substituierten Alkylrest, so handelt es sich unabhängig voneinander vorzugsweise um einen geradkettigen oder verzweigten C₁₋₄-Alkylrest, der weitersubstituiert sein kann, z.B. durch Halogen, wie Fluor, Chlor oder Brom, Hydroxy, Cyano, C₁₋₄-Alkoxy, wie Methoxy oder Äthoxy, und Alkanoylgruppen mit 1 bis 6 Kohlenstoffatomen, wie die Acetyl- oder Propionylgruppe, und die Benzoylgruppe. Der Alkylrest A₄ kann auch durch Sulfo substituiert sein. Als Beispiele seien genannt: Methyl, Äthyl, Propyl, Isopropyl, Butyl, sek.-Butyl, tert.-Butyl, Isobutyl und Trifluormethyl.

Als Substituenten der Benzolringe I, II, III, IV, V und VI kommen z.B. in Betracht: Alkylgruppen mit 1 bis 8, vorzugsweise 1 bis 4 Kohlenstoffatomen, wie z.B. Methyl, Äthyl, Propyl, Isopropyl, Butyl, Isobutyl, sek.-Butyl, tert.-Butyl, Hexyl, Octyl, wobei die Alkylgruppen durch Sulfo oder Sulfato substituiert sein können, Alkoxygruppen mit 1 bis 8 Kohlenstoffatomen, insbesondere 1 bis 4 Kohlenstoffatomen, wie z.B. Methoxy, Äthoxy, Propoxy, Isopropoxy, Butoxy, wobei die Alkoxygruppe im Alkylrest durch Sulfo oder Sulfato substituiert sein kann, Acylaminogruppen wie Alkanoylaminogruppen mit 2 bis 8 Kohlenstoffatomen und Alkoxycarbonylaminogruppen mit 2 bis 8 Kohlenstoffatomen, wie z.B. Acetylamino, Propionylamino, Methoxycarbonylamino, Äthoxycarbonylamino, Alkanoylgruppen mit 2 bis 8, vorzugsweise 2 bis 4 Kohlenstoffatomen, wie z.B. Acetyl, Propionyl, Butyryl oder Isobutyryl, C₅-C₇-Cycloalkylcarbonyl, wie z.B. Cyclohexylcarbonyl, im Cycloalkylring durch C₁-C₄-Alkyl, wie z.B. Methyl, Äthyl, Propyl, Butyl, oder Halogen, wie z.B. Fluor, Chlor, Brom, Sulfo oder Sulfato substituiertes C₅-C₇-Cycloalkylcarbonyl, Benzoyl, im Phenylring durch C₁-C₄-Alkyl, wie z.B. Methyl, Äthyl, Propyl, Butyl, oder Halogen, wie z.B. Fluor, Chlor, Brom, Sulfo oder Sulfato substituiertes Benzoyl, gegebenenfalls durch C₁-C₄-Alkyl, Halogen, Sulfo oder Sulfato substituiertes Benzthiazol oder Benzoxazol, Benzoylamino, Amino, Mono- oder Dialkylamino mit 1 bis 8 Kohlenstoffatomen im Alkylrest, Phenylamino, Alkoxycarbonyl mit 1 bis 8 Kohlenstoffatomen im Alkoxyrest, C₅-C₇-Cycloalkylaminosulfonyl, Nitro, Cyan, Trifluormethyl, Halogen, wie Fluor, Brom oder insbesondere Chlor, Sulfamoyl, am Stickstoffatom ein- oder zweifach durch C₁-C₄-Alkyl, C₅-C₇-Cycloalkyl oder Phenyl substituiertes Sulfamoyl, Carbamoyl, Ureido, Hydroxy, C₁-C₈-Alkylsulfonyl, C₁-C₈-Alkylaminosulfonyl, C₁-C₄-Alkylsulfonylaminosulfonyl, gegebenenfalls im Phenylring durch C₁-C₄-Alkyl, Halogen, wie z.B. Fluor, Chlor, Brom, Sulfo oder Sulfato substituiertes Phenylsulfonyl, Carboxy, Sulfomethyl, Sulfo, Sulfato, Thiosulfato, sowie Phenyl, Naphthyl, Phenoxy, Phenoxysulfonyl oder Phenylaminosulfonyl, wobei die angegebenen Phenyl- oder Naphthylreste durch die oben angegebenen Substituenten weitersubstituiert sein können.

Für die erfindungsgemässen Farbstoffmischungen sind Azofarbstoffe der Formel (1) bevorzugt, worin
- R₁ und R₂ unabhängig voneinander Wasserstoff, C₁-C₄-Alkyl oder Phenyl sind;
- R₃ Wasserstoff, C₁-C₄-Alkyl oder Phenyl ist;
- R₄ Wasserstoff oder ein Rest der Formel 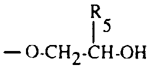 und R₅ Wasserstoff oder gegebenenfalls durch Hydroxy substituiertes C₁-C₄-Alkyl ist;
- die Benzolringe I und II unabhängig voneinander gegebenenfalls durch C₁-C₄-Alkyl, C₁-C₄-Alkoxy, C₂-C₄-Alkanoylamino oder Halogen weitersubstituiert sind;
- die Sulfogruppe an den Benzolring I gebunden ist.

Besonders bevorzugt für die erfindungsgemässen Farbstoffmischungen sind Azofarbstoffe der Formel (1), worin R₁ und R₂ unabhängig voneinander Wasserstoff oder C₁-C₄-Alkyl sind, R₃ Wasserstoff, C₁-C₄-Alkyl oder Phenyl ist, R₄ Wasserstoff oder ein Rest der Formel 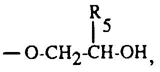 R₅ Wasserstoff oder gegebenenfalls durch Hydroxy substituiertes C₁-C₄-Alkyl ist, die Benzolringe I und II unabhängig voneinander gegebenenfalls durch C₁-C₄-Alkyl, C₁-C₄-Alkoxy, C₂-C₄-Alkanoylamino oder Halogen weitersubstituiert sind und die Sulfogruppe an den Benzolring I gebunden ist.

Interessant sind ferner Azofarbstoffe der Formel (1), worin R₁ und R₂ unabhängig voneinander Wasserstoff oder C₁-C₄-Alkyl, insbesondere Methyl oder Aethyl, sind, und R₄ ein Rest der Formel 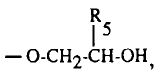 wobei R₅ Wasserstoff oder gegebenenfalls durch Hydroxy substituiertes C₁-C₄-Alkyl bedeutet, ist, oder Azofarbstoffe der Formel (1), worin R₁ Wasserstoff oder C₁-C₄-Alkyl, insbesondere Methyl oder Aethyl, R₂ C₂-C₄-Alkyl, insbesondere Aethyl, und R₄ Wasserstoff ist.

Ganz besonders bevorzugt für die erfindungsgemässen Farbstoffmischungen sind als Azofarbstoffe der Formel (1) Farbstoffe der Formel 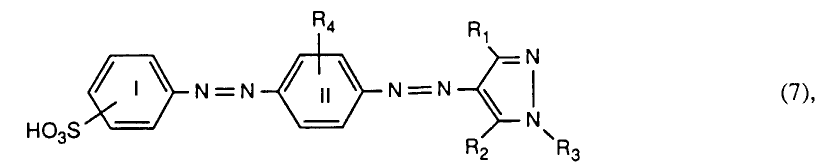 worin R₁ und R₂ unabhängig voneinander Methyl oder Aethyl sind, R₃ Wasserstoff. Methyl, Aethyl oder Phenyl, R₄ Wasserstoff oder ein Rest der Formel 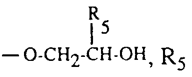 R₅ Methyl oder Aethyl ist und die Benzolringe I und II unabhängig voneinander gegebenenfalls durch Methyl, Methoxy, Acetylamino oder Chlor weitersubstituiert sind. Interessant sind Farbstoffe der Formel (7), worin R₁ und R₂ unabhängig voneinander Methyl oder Aethyl, R₄ ein Rest der Formel 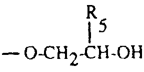 und R₅ Methyl oder Aethyl ist, oder worin R₁ Methyl oder Aethyl, R₂ Aethyl und R₄ Wasserstoff ist.

Als bevorzugte Farbstoffe der Formel (2) kommen Farbstoffe der Formel 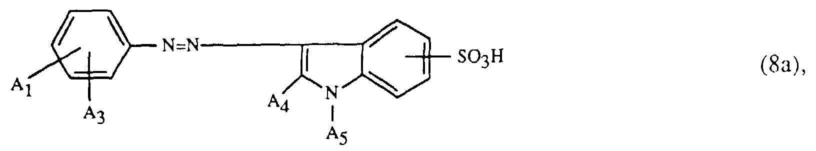 worin A₁ Wasserstoff, C₁₋₄-Alkyl, C₁₋₄-Alkoxy, C₂₋₄-Alkanoylamino oder Halogen, A₃ Phenylsulfonyl, A₄ C₁-C₄-Alkyl oder Phenyl und A₅ Wasserstoff oder C₁-C₈-Alkyl ist, und Farbstoffe der Formel 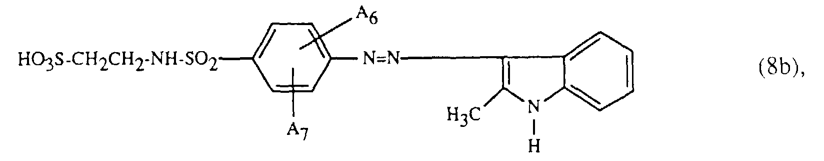 worin A₆ und A₇ Wasserstoff, C₁₋₄-Alkyl, C₁₋₄-Alkoxy, C₂₋₄-Alkanoylamino oder Halogen sind, in Betracht.

Als bevorzugte Farbstoffe der Formel (3) kommen Farbstoffe der Formel 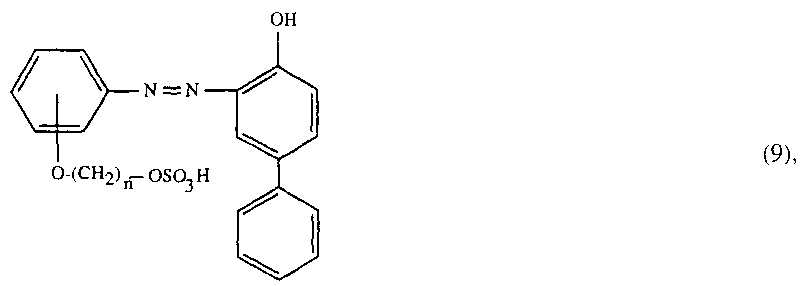 worin n die Zahl 1 bis 3 ist, in Betracht.

Als bevorzugte Farbstoffe der Formel (4) kommen Farbstoffe der Formel 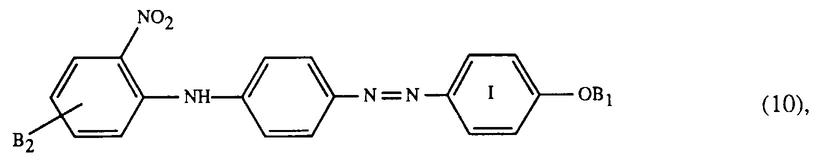 worin B₁ Wasserstoff oder gegebenenfalls durch C₁-C₄-Alkyl, C₁₋₄-Alkoxy oder Halogen substituiertes Phenylsulfonyl, B₂ Sulfo oder C₁-C₄-Alkylsulfonylaminosulfonyl ist und der Benzolring I gegebenenfalls durch C₁-C₄-Alkyl, C₁₋₄-Alkoxy oder Halogen substituiert ist, in Betracht.

Als bevorzugte Farbstoffe der Formel (5) kommen Farbstoffe der Formel 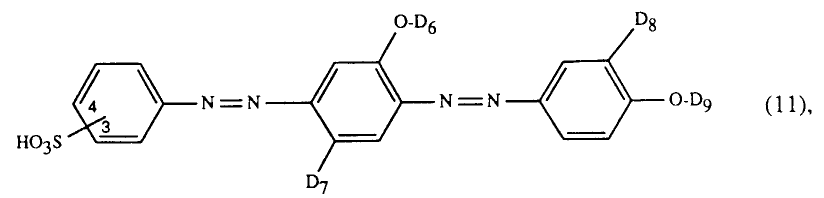 worin D₇ Wasserstoff oder Methyl, D₈ Wasserstoff oder Methyl und D₆ und D₉ unabhängig voneinander Wasserstoff, Methyl, Äthyl, β-Hydroxyäthyl, β-Hydroxypropyl, β-Hydroxybutyl oder α-Äthyl-β-hydroxyäthyl ist, und die Sulfogruppe in 3- oder 4-Stellung gebunden ist, in Betracht.

Als Farbstoffe der Formel (6) sind solche bevorzugt, worin E₁ Wasserstoff oder Sulfo und E₂ Halogen oder Phenylaminosulfonyl ist, (E₃)₁₋₃ für 1 bis 3 Substituenten E₃ steht und E₃ Wasserstoff, Halogen oder Sulfo ist.

Bevorzugt ist eine Farbstoffmischung, die mindestens einen Farbstoff der Formel (1) und mindestens einen Farbstoff der Formeln (8a), (8b), (9), (10), (11) und des bevorzugten Farbstoffs der Formel (6) enthält, wobei vorzugsweise für den Farbstoff der Formel (1) die oben angegebenen Bevorzugungen gelten. Insbesondere enthält die Farbstoffmischung als Farbstoff der Formel (1) einen Farbstoff der Formel (7).

Ganz besonders bevorzugt ist eine Farbstoffmischung, die mindestens einen Farbstoff der Formel (1) und mindestens einen Farbstoff der Formeln (2) und (5), insbesondere mindestens einen Farbstoff der Formeln (8a) und (11), enthält, wobei vozugsweise für den Farbstoff der Formel (1) die oben angegebenen Bevorzugungen gelten. Insbesondere enthält die Farbstoffmischung als Farbstoff der Formel (1) einen Farbstoff der Formel (7).

Ganz besonders wichtig ist eine Farbstoffmischung, die mindestens einen Farbstoff der Formel (1) und mindestens einen Farbstoff der Formeln 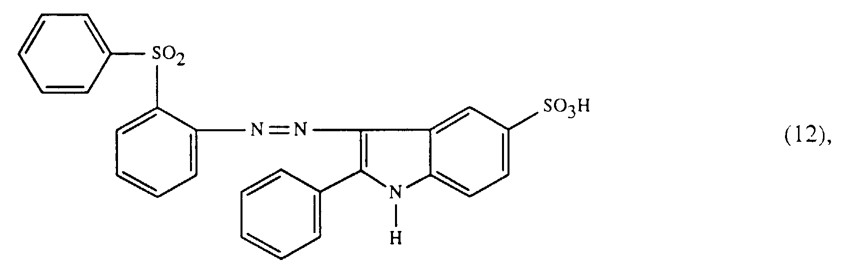 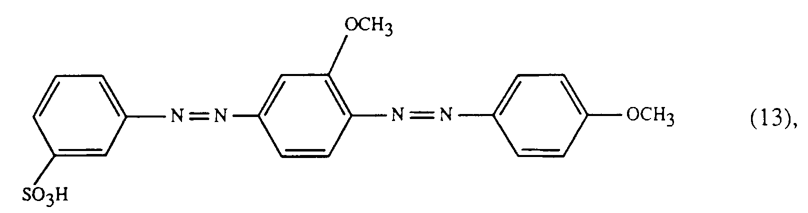 und 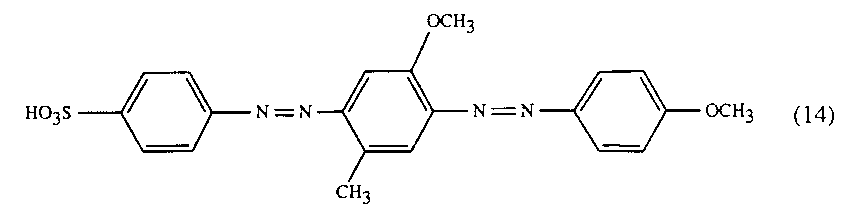 enthält.

In den erfindungsgemässen Farbstoffmischungen ist das Verhältnis der Farbstoffe der Formeln (1) und (2) bis (6) von 20:80 bis 80:20 und insbesondere von 40:60 bis 60:40 bevorzugt. Das Verhältnis der Farbstoffe der Formeln (1) und (2) bis (6) von 55:45 bis 45:55 ist ganz besonders bevorzugt.

Die Farbstoffe der Formeln (2), (3), (4), (5) und (6) sind bekannt oder können in Analogie zu bekannten Verbindungen hergestellt werden.

Die Azofarbstoffe der Formel (1) werden z.B. hergestellt, indem man ein Amin der Formel 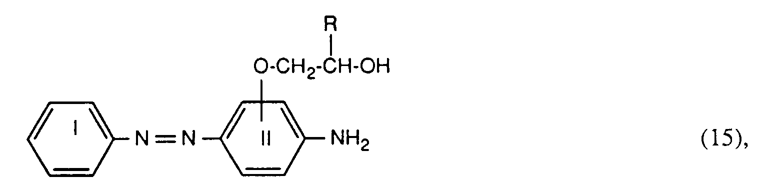 worin R die unter Formel (1) angegebenen Bedeutungen hat und die Benzolringe I und II gegebenenfalls substituiert sind, diazotiert und auf eine Kupplungskomponente der Formel 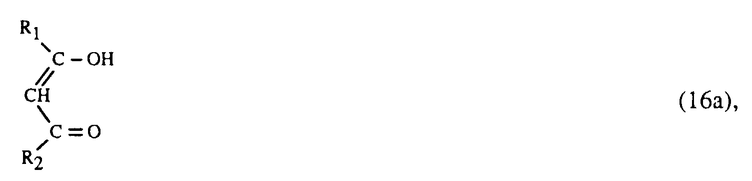 worin R₁ und R₂ unabhängig voneinander gegebenenfalls substituiertes C₁-C₈-Alkyl oder Phenyl sind,
oder auf eine Kupplungskomponente der Formel 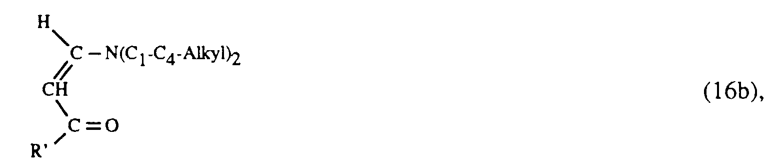 worin R' die für R₁ und R₂ unter Formel (1) angegebenen Bedeutungen hat, kuppelt und das Reaktionsprodukt der Formel 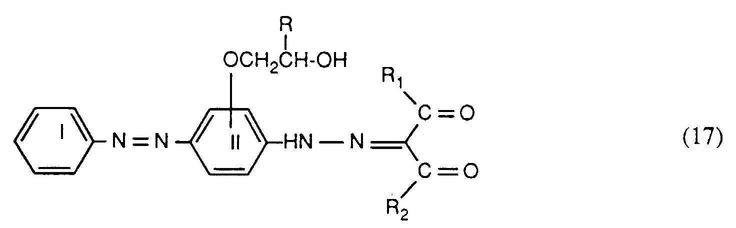 mit einem Hydrazin der Formel

H₂N-NH-R₃ (18),

worin R₃ die unter Formel (1) angegebenen Bedeutungen hat, umsetzt, wobei das Amin der Formel (15), die umgesetzte Kupplungskomponente der Formel (16a) oder (16b) und das Hydrazin der Formel (18) zusammen mindestens eine Sulfogruppe enthalten. Das Reaktionsprodukt der Formel (17) enthält somit, falls das Amin der Formel (15) oder die umgesetzte Kupplungskomponente der Formel (16a) oder (16b) eine Sulfogruppe enthält, ebenfalls eine solche Gruppe.

Die Diazotierung des Amins der Formel (15) erfolgt in der Regel durch Einwirken salpetriger Säure in wässrig-mineralsaurer Lösung bei tiefer Temperatur, die Kupplung auf die Kupplungskomponente der Formel (16a) oder (16b) bei sauren, neutralen bis schwach alkalischen pH-Werten, insbesondere bei einem pH-Wert von 2 bis 6.

Die Umsetzung der Verbindung der Formel (17) mit einem Hydrazin der Formel (18) erfolgt in Wasser, einem organischen Lösungsmittel, wie z.B. Methanol, Aethanol, Pyridin oder Eisessig, oder einer Mischung von Wasser und einem organischen Lösungsmittel, wie z.B. Wasser/Eisessig, bei einer Temperatur von 40 bis 100°C, insbesondere bei einer Temperatur von 40 bis 60°C.

Die Amine der Formel (15), die Kupplungskomponenten der Formeln (16a) und (16b) und die Hydrazine der Formel (18) sind an sich bekannt oder können in Analogie zu bekannten Verbindungen hergestellt werden.

Als Beispiele für Amine der Formel (15) seien
3-(β-Hydroxypropoxy)-4-amino-azobenzol-2'-, -3'- oder -4'-sulfonsäure,
3-(β-Hydroxypropoxy)-4-amino-6-methyl-azobenzol-2'-, -3'- oder -4'-sulfonsäure,
3-(β-Hydroxypropoxy)-4-amino-6-methoxy-azobenzol-2'-, -3'- oder -4'-sulfonsäure,
3-(β-Hydroxypropoxy)-4-amino-6-acetylamino-azobenzol-2'-, -3'- oder -4'-sulfonsäure,
3-(β-Hydroxypropoxy)-4-amino-6-chloro-azobenzol-2'-, -3'- oder -4'-sulfonsäure,
3-(β-Hydroxypropoxy)-4-amino-2'-chloro-azobenzol-3'-, -4'-, -5'- oder -6'-sulfonsäure,
3-(β-Hydroxybutoxy)-4-amino-azobenzol-2'-, -3'- oder -4'-sulfonsäure,
3-(β-Hydroxybutoxy)-4-amino-6-methyl-azobenzol-2'-, -3'- oder -4'-sulfonsäure,
3-(β-Hydroxybutoxy)-4-amino-6-methoxy-azobenzol-2'-, -3'- oder -4'-sulfonsäure,
3-(β-Hydroxybutoxy)-4-amino-6-acetylamino-azobenzol-2'-, -3'- oder -4'-sulfonsäure,
3-(β-Hydroxybutoxy)-4-amino-6-chloro-azobenzol-2'-, -3'- oder -4'-sulfonsäure,
3-(β-Hydroxybutoxy)-4-amino-2'-chloro-azobenzol-3'-, -4'-, -5'- oder -6'-sulfonsäure,
4-Amino-azobenzol-2'-, -3'- oder -4'-sulfonsäure und
3-Methoxy-4-amino-azobenzol-2'-, -3'- oder -4'-sulfonsäure genannt.

Als Beispiele für Kupplungskomponenten der Formeln (16a) und (16b) seien 3-Diäthylamino-propenal-(1), 4-Diäthylamino-butenon-(2), 2,4-Pentandion, 2,4-Hexandion, 3,5-Heptandion, 2,4-Heptandion, 3,5-Oktandion, 4,6-Oktandion, Dibenzoylmethan, Formylacetophenon und Benzoylaceton genannt.

Als Beispiele für Verbindungen der Formel (18) seien Hydrazin, Methyl-, Aethyl-, Propyl-, Isopropyl-, Butyl-, Isobutyl-, sek.-Butyl-, tert.-Butyl-, Phenyl- und Cyclohexylhydrazin sowie Phenylhydrazin-4-sulfonsäure genannt.

Die erfindungsgemässe Farbstoffmischung kann z.B. durch Mischung der Einzelfarbstoffe hergestellt werden. Dieser Mischprozess erfolgt beispielsweise in geeigneten Mühlen, z.B. Kugel- und Stiftmühlen, sowie in Knetern oder Mixern.

Ferner können die Farbstoffmischungen z.B. durch Zerstäubungstrocknung der wässrigen Farbstoffmischungen hergestellt werden.

Gegenstand der Erfindung ist ferner ein Verfahren zum Färben und Bedrucken von natürlichen oder synthetischen Polyamidfasermaterialien mit einer Farbstoffmischung, die mindestens einen Farbstoff der Formel (1) und mindestens einen Farbstoff der Formeln (2) bis (6) enthält. Als synthetische Polyamidfasermaterialien kommen z.B. Polyamid 6.6- oder Polyamid 6-Fasermaterialien in Betracht und als natürliche Polyamidfasermaterialien z.B. Wolle. Zum Färben und Bedrucken werden dabei die üblichen Färbe- bzw. Druckverfahren angewendet.

Die Farbstoffmischung mit einem Farbstoff der Formel (1) und mindestens einem Farbstoff der Formeln (2) bis (6) eignet sich besonders zum Färben und Bedrucken in Kombination mit anderen Farbstoffen und insbesondere zum Färben und Bedrucken nach dem Trichromie-Prinzip. Unter Trichromie ist dabei die additive Farbmischung dreier passend gewählter gelb- oder orange-, rot- und blaufärbender Farbstoffe in den zur Erzielung der gewünschten Nuance notwendigen Mengen zu verstehen. Besonders geeignet ist die erfindungsgemässe Farbstoffmischung zum Färben aus Kurzflotten wie z.B. bei Kontinuefärbeverfahren oder diskontinuierlichen und kontinuierlichen Schaumfärbeverfahren.

Die erfindungsgemässe Farbstoffmischung zeichnet sich durch allgemein gute Eigenschaften wie z.B. gute Löslichkeit, Kaltlösungsbeständigkeit, gutes Aufziehverhalten und insbesondere durch gute Kombinierbarkeit mit anderen Farbstoffen sowie gleichmässiges gutes Ziehverhalten auf unterschiedlichen Fasermaterialien aus.

Das zu färbende oder zu bedruckende Textilmaterial kann in verschiedenen Verarbeitungsformen vorliegen, wie z.B. als Faser, Garn, Gewebe oder Gewirke und insbesondere in Form von Teppichen.

In der erfindungsgemässen Farbstoffmischung liegen die Farbstoffe der Formeln (1), (2), (3), (4), (5) und (6) entweder in der Form ihrer freien Sulfonsäure oder vorzugsweise als deren Salze wie z.B. der Alkali-, Erdalkali- oder Ammoniumsalze oder als Salze eines organischen Amins vor. Als Beispiele seien die Natrium-, Lithium- oder Ammoniumsalze oder das Salz des Triäthanolamins genannt.

Die Farbstoffmischung enthält in der Regel weitere Zusätze, wie z.B. Kochsalz oder Dextrin.

Die Färbeflotten oder Druckpasten können ebenfalls weitere Zusätze, beispielsweise Netzmittel, Antischaummittel, Egalisiermittel oder die Eigenschaft des Textilmaterials beeinflussende Mittel, wie z.B. Weichmachungsmittel, Zusätze zum Flammfestausrüsten oder schmutz-, wasser- und öl-abweisende Mittel sowie wasserenthärtende Mittel und natürliche oder synthetische Verdicker, wie z.B. Alginate und Celluloseäther, enthalten.

Gegenstand der Erfindung ist ferner ein Verfahren zum Trichromie-Färben oder -Bedrucken von natürlichen und synthetischen Polyamidfasermaterialien mit einer Farbstoffmischung, die eine erfindungsgemässe gelb- oder orangefärbende Mischung aus mindestens einem Farbstoff der Formel (1) und mindestens einem Farbstoff der Formeln (2) bis (6), zusammen mit mindestens einem rotfärbenden Farbstoff und mindestens einem blaufärbenden Farbstoff enthält, wobei für die erfindungsgemässe gelb- oder orangefärbende Mischung aus mindestens einem Farbstoff der Formel (1) und mindestens einem Farbstoff der Formeln (2) bis (6) insbesondere die zuvor angegebenen Bevorzugungen gelten.
Bevorzugt verwendet man in dem erfindungsgemässen Verfahren zum Trichromie-Färben oder -Bedrucken mindestens einen Farbstoff der Formel (1) zusammen mit mindestens einem der rotfärbenden Farbstoffe der Formeln (19), (20) und (21) 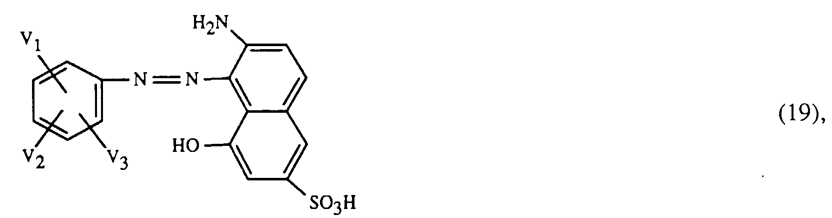 worin V₁ gegebenenfalls substituiertes C₁-C₈-Alkyl, Halogen, gegebenenfalls im Phenylring durch C₁-C₄-Alkyl substituiertes Phenylsulfonyl oder Phenoxysulfonyl, Cyclohexyloxycarbonylamino, C₂-C₄-Alkanoylamino, gegebenenfalls im Phenylring durch Halogen substituiertes Benzoylamino, 1-Azacycloheptan-N-sulfonyl oder 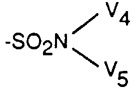 ist, wobei V₄ C₁-C₈-Alkyl oder gegebenenfalls durch C₁-C₄-Alkyl substituiertes Phenyl oder Cyclohexyl und V₅ Wasserstoff oder C₁-C₈-Alkyl ist, V₂ Wasserstoff, Halogen, C₁-C₈-Alkyl oder C₂-C₄-Alkanoylamino und V₃ Wasserstoff oder Halogen ist, 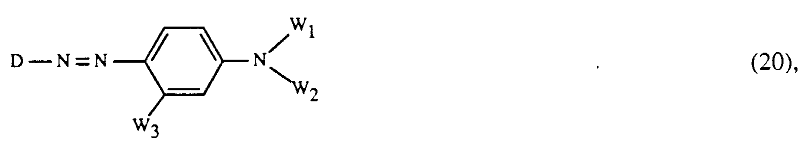 worin D gegebenenfalls substituiertes Phenyl, Thiophenyl oder Benzthiazolyl, W₁ C₁-C₈-Alkyl, W₂ gegebenenfalls substituiertes C₁-C₈-Alkyl und W₃ Wasserstoff oder C₁-C₄-Alkyl ist, und 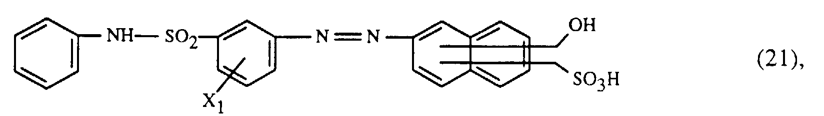 worin X₁ C₁-C₄-Alkyl ist, zusammen mit mindestens einem blaufärbenden Farbstoff der Formel 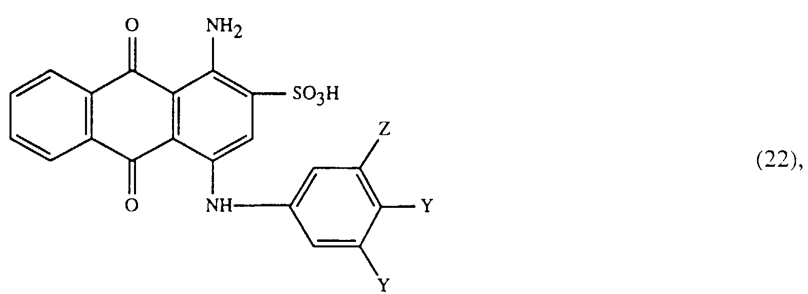 worin ein Y Wasserstoff oder Methyl und das andere Y C₂₋₄-Alkanoylamino oder C₂-C₄-Hydroxyalkylsulphamoyl bedeutet und Z Wasserstoff oder Methyl ist, wobei für die erfindungsgemässe gelb- oder orangefärbende Mischung aus mindestens einem Farbstoff der Formel (1) und mindestens einem Farbstoff der Formeln (2) bis (6) insbesondere die zuvor angegebenen Bevorzugungen gelten.

Die in dem erfindungsgemässen Verfahren zum Trichromie-Färben oder -Bedrucken verwendeten Farbstoffe der Formeln (19), (20), (21) und (22) sind an sich bekannt oder können in Analogie zu bekannten Farbstoffen hergestellt werden.

Als C₁-C₈-Alkyl kommen für V₁, V₂, V₄ und V₅ in der Formel (19) und für W₁ und W₂ in Formel (20) unabhängig voneinander z. B. Methyl, Äthyl, Propyl, Isopropyl, Butyl, sek.-Butyl, tert.-Butyl, Isobutyl, Pentyl, Hexyl, Heptyl und Octyl in Betracht. Vorzugsweise sind V₁, V₂, V₄, V₅, W₁ und W₂ C₁-C₄-Alkyl.

Der Rest V₁ in Formel (19) als C₁-C₈-Alkyl kann substituiert sein z.B. durch Halogen, wie z.B. Chlor oder Brom und insbesondere Fluor. Als Beispiel sei der Trifluormethylrest genannt.

Der Rest W₂ in Formel (20) als C₁-C₈-Alkyl kann substituiert sein z.B. durch Sulfo, Sulfato oder Phenyl. Als Beispiele seien Benzyl, β-Sulfoäthyl, γ-Sulfopropyl und β-Sulfatoäthyl genannt.

Als Halogen kommen für V₁, V₂ und V₃ in Formel (19) unabhängig voneinander z.B. Fluor, Brom oder insbesondere Chlor in Betracht.

Der Rest V₁ in Formel (19) als Benzoylamino kann im Phenylring durch Halogen, wie z.B. Fluor, Brom oder insbesondere Chlor, substituiert sein.

Der Rest V₄ als Phenyl oder Cyclohexyl sowie der Rest V₁ als Phenylsulfonyl oder Phenoxysulfonyl kann durch C₁-C₄-Alkyl, wie z. B. Methyl, Äthyl, Propyl, Isopropyl, Butyl, sek.-Butyl, tert.-Butyl oder Isobutyl, insbesondere Methyl, substituiert sein.

Als C₁-C₄-Alkyl kommen für W₃ in Formel (20) und für X₁ in Formel (21) unabhängig voneinander z. B. Methyl, Äthyl, Propyl, Isopropyl, Butyl, sek.-Butyl, tert.-Butyl oder Isobutyl, insbesondere Methyl, in Betracht.

Als C₂-C₄-Alkanoylamino kommen für V₁ und V₂ in Formel (19) und für Y in Formel (22) unabhängig voneinander z.B. Acetylamino, Propionylamino oder Butyrylamino in Betracht.

Der Rest D in Formel (20) kann z.B. durch Halogen, wie Fluor, Chlor oder Brom, C₁-C₄-Alkyl, wie Methyl, Äthyl, Propyl, Isopropyl, Butyl, sek.-Butyl, tert.-Butyl oder Isobutyl, C₁-C₄-Alkoxy, wie z.B. Methoxy, Äthoxy, Propoxy oder Butoxy, C₁-C₄-Alkoxycarbonyl, wie z.B. Methoxycarbonyl oder Aethoxycarbonyl, Sulfo oder gegebenenfalls im Alkylteil durch Sulfo substituiertes C₁-C₄-Alkylaminosulfonyl, wie z.B. Methylaminosulfonyl, Aethylaminosulfonyl oder β-Sulfoäthylaminosulfonyl, substituiert sein.

Als C₁₋₄-Hydroxylalkylsulphamoylrest kommt für Y in Formel (22) beispielsweise der β-Hydroxyäthylsulphamoyl-, β-Hydroxypropylsulphamoyl-, γ-Hydroxypropylsulphamoyl- oder der β-Hydroxybutylsulphamoylrest in Betracht.

Bevorzugt verwendet man für das erfindungsgemässe Verfahren zum Trichromie-Färben oder -Bedrucken mindestens einen der rotfärbenden Farbstoffe der Formeln (19), (20) und (21 ), wobei im Farbstoff der Formel (19) V₁ Trifluoromethyl, Chlor, Acetylamino, -SO₂N(n-C₄H₉)₂, Phenoxysulfonyl, Phenylsulfonyl, 1-Azacycloheptan-N-sulfonyl, Cyclohexyloxycarbonylamino, gegebenenfalls im Phenylring durch Chlor substituiertes Benzoylamino oder gegebenenfalls im Phenylring durch Methyl substituiertes Phenylaminosulfonyl, Cyclohexylaminosulfonyl, N-(C₁-C₂-Alkyl)phenyl- oder N-(C₁-C₂-Alkyl)-cyclohexyl-aminosulfonyl, V₂ Wasserstoff, Methyl, Chlor oder Acetylamino und V₃ Wasserstoff oder Chlor ist, und im Farbstoff der Formel (20) D durch Chlor, Sulfo, Methylaminosulfonyl, Aethylaminosulfonyl oder β-Sulfoäthylaminosulfonyl substituiertes Phenyl, durch Methyl, Methoxy- oder Aethoxycarbonyl substituiertes Thiophenyl oder gegebenenfalls durch Methyl, Methoxy oder Sulfo substituiertes Benzthiophenyl ist, W₁ Aethyl, W₂ Aethyl, β-Sulfatoäthyl, 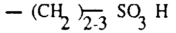 oder Benzyl und W₃ Wasserstoff oder Methyl ist, und im Farbstoff der Formel (21) X₁ Methyl ist.

Besonders bevorzugt verwendet man mindestens einen der rotfärbenden Farbstoffe der Formeln 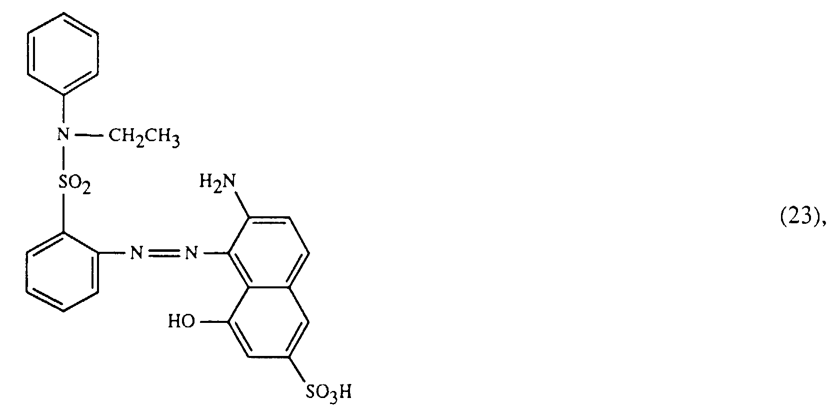 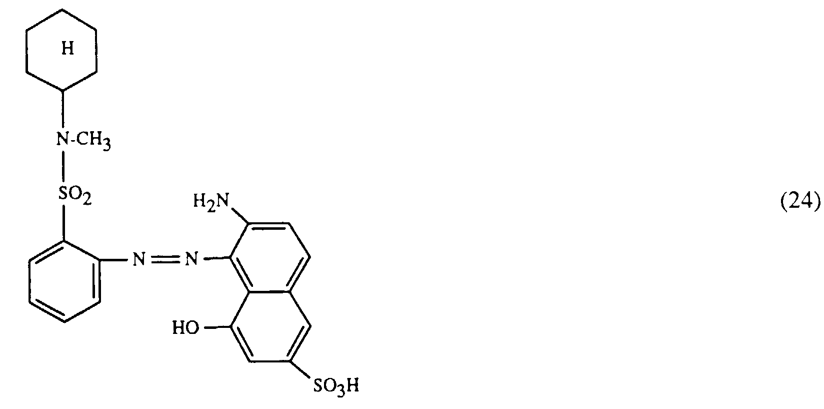 und

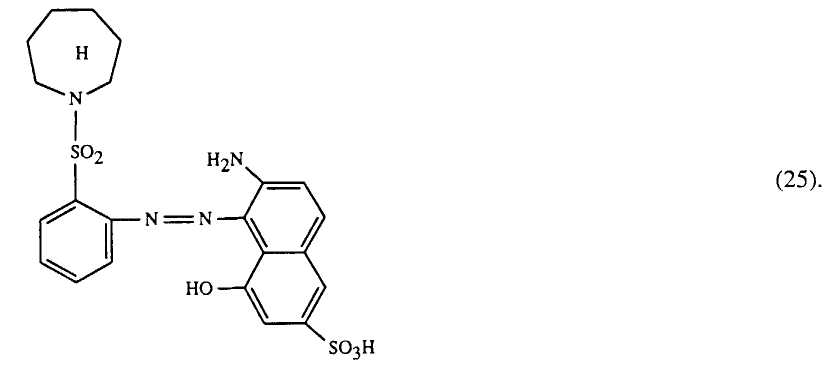

Ebenfalls besonders bevorzugt verwendet man für das erfindungsgemässe Verfahren mindestens einen der blaufärbenden Farbstoffe der Formeln 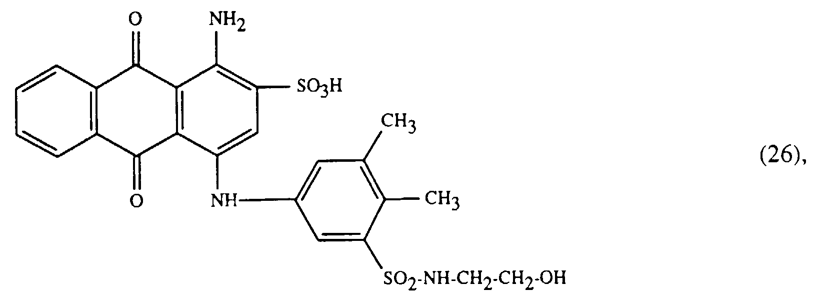 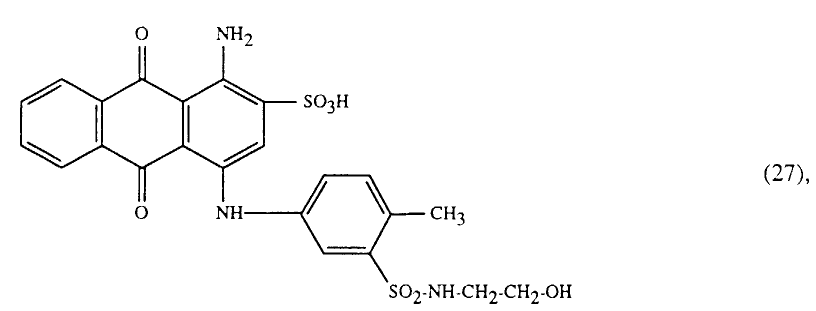 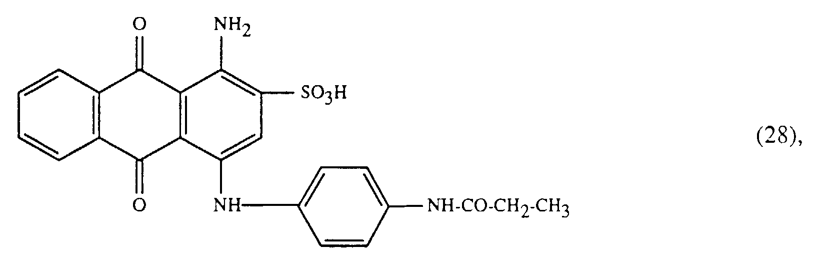 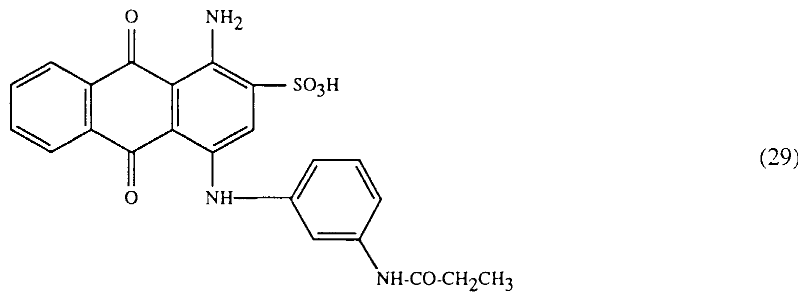 und

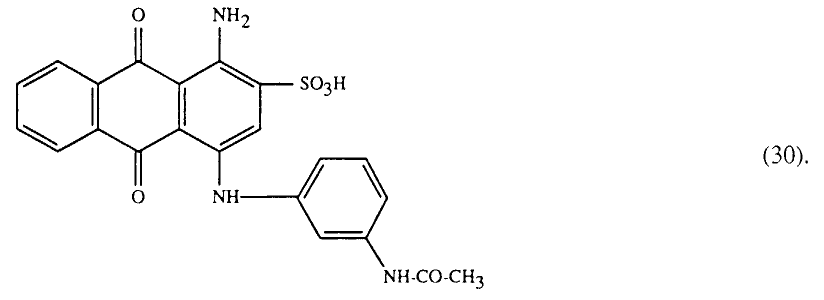

Verwendet man für das erfindungsgemässe Verfahren Mischungen blaufärbender Farbstoffe, so ist die Mischung der blaufärbenden Farbstoffe der Formeln (26) oder (27) mit einem Farbstoff der Formel (28), (29) oder (30) bevorzugt. Ganz besonders wichtig ist die Mischung der blaufärbenden Farbstoffe der Formeln 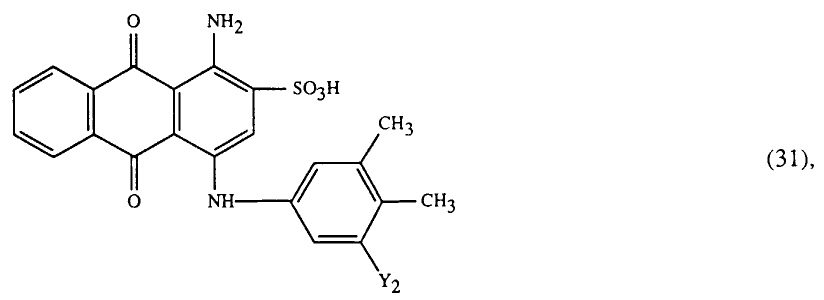 worin Y₂ ein C₂₋₄-Hydroxyalkylsulphamoylrest ist, und 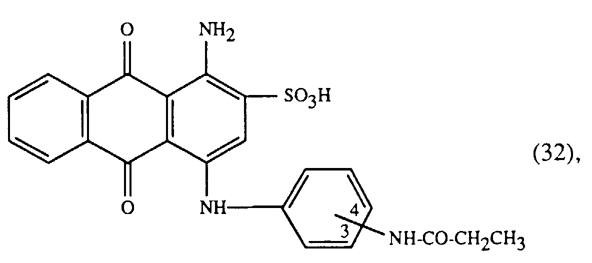 worin der Rest -NH-CO-CH₂CH₃ in 3- oder 4-Stellung gebunden ist.

Ganz besonders bevorzugt verwendet man für das erfindungsgemässe Verfahren zum Trichromie-Färben oder -Bedrucken eine erfindungsgemässe gelb- oder orangefärbende Mischung aus mindestens einem Farbstoff der Formel (1) und mindestens einem Farbstoff der Formeln (2) bis (6), zusammen mit mindestens einem der rotfärbenden Farbstoffe der Formeln (23), (24) und (25), insbesondere (23) und (24), und mindestens einem der blaufärbenden Farbstoffe der Formeln (26), (27), (28), (29) und (30), wobei für die erfindungsgemässe gelb- oder orangefärbende Mischung aus mindestens einem Farbstoff der Formel (1) und mindestens einem Farbstoff der Formeln (2) bis (6) insbesondere die zuvor angegebenen Bevorzugungen gelten.

Die in dem erfindungsgemässen Verfahren verwendeten Farbstoffmischungen können z.B. durch Mischung der Einzelfarbstoffe hergestellt werden. Dieser Mischprozess erfolgt beispielsweise in geeigneten Mühlen, z.B. Kugel- und Stiftmühlen, sowie in Knetern oder Mixern.

Ferner können die Farbstoffmischungen der Farbstoffe z.B. durch Zerstäubungstrocknen der wässrigen Farbstoffmischungen hergestellt werden.

Die in dem erfindungsgemässen Verfahren zum Trichromie-Färben oder -Bedrucken verwendeten Farbstoffe liegen entweder in der Form ihrer freien Sulfonsäure oder vorzugsweise als deren Salze vor.

Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Mono-, Di- oder Triäthanolamins genannt.

Die in dem erfindungsgemässen Verfahren verwendeten Farbstoffe enthalten in der Regel weitere Zusätze, wie z.B. Kochsalz oder Dextrin.

Das erfindungsgemässe Verfahren zum Trichromie-Färben oder -Bedrucken kann auf die üblichen Färbe- bzw. Druckverfahren angewendet werden. Die Färbeflotten oder Druckpasten können ausser Wasser und den Farbstoffen weitere Zusätze, beispielsweise Netzmittel, Antischaummittel, Egalisiermittel oder die Eigenschaft des Textilmaterials beeinflussende Mittel, wie z.B. Weichmachungsmittel, Zusätze zum Flammfestausrüsten oder schmutz-, wasser- und öl-abweisende Mittel sowie wasserenthärtende Mittel und natürliche oder synthetische Verdicker, wie z.B. Alginate und Celluloseäther, enthalten.

Das erfindungsgemässe Verfahren zum Trichromie-Färben oder -Bedrucken ist besonders zum Färben aus Kurzflotten, wie z.B. bei Kontinuefärbeverfahren oder diskontinuierlichen und kontinuierlichen Schaumfärbeverfahren, geeignet.

Die in dem erfindungsgemässen Verfahren verwendeten Farbstoffe zeichnen sich beim Trichromie-Färben oder -Bedrucken durch gleichmässigen Farbaufbau, gutes Aufziehverhalten, guten Nuancenkonstanz auch in verschiedenen Konzentrationen, gute Echtheiten sowie insbesondere durch sehr gute Kombinierbarkeit aus.

Das erfindungsgemässe Verfahren zum Trichromie-Färben oder -Bedrucken eignet sich zum Färben oder Bedrucken sowohl von natürlichen Polyamidfasermaterialien wie z.B. Wolle, wie insbesondere von synthetischen Polyamidfasermaterialien, wie z.B. Polyamid 6 oder Polyamid 6.6, und ist geeignet zum Färben oder Bedrucken von Woll- und synthetischen Polyamid-Mischgeweben oder -Garnen.

Das genannte Textilmaterial kann dabei in den verschiedensten Verarbeitungsformen vorliegen, wie z.B. als Faser, Garn, Gewebe oder Gewirke und insbesondere in Form von Teppichen.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

Herstellungsbeispiel 1: Eine neutrale, 50° heisse Lösung von 37 Teilen 3-(β-Hydroxypropoxy)-4-amino-azobenzol-3'-sulfonsäure in 500 Teilen Wasser lässt man gleichzeitig mit 26 Teilen einer wässrigen Natriumnitritlösung (4N) in die Mischung von 28 Teilen konzentrierter Salzsäure in 200 Teilen Wasser einlaufen und hält die Temperatur der Reaktionsmischung durch Zugabe von Eis bei 20 bis 25°. Nach beendeter Zugabe wird noch 2 Stunden nachgerührt und der Nitritüberschuss mit wenig Amidosulfonsäure zerstört. Das so bereitete Diazotierungsgemisch lässt man langsam in eine 0 bis 5° kalte Lösung von 14 Teilen 2,4-Pentandion und 180 Teilen Natriumacetat in 500 Teilen Wasser einfliessen. Nach mehrstündigem Rühren bei 0 bis 5° wird zur Vervollständigung der Reaktion auf 30° erwärmt und mit Natriumacetat der pH auf einen Wert von 5,5 gestellt. Anschliessend wird der Niederschlag abgesaugt und bei 60° getrocknet. Man erhält 44 Teile eines orangefarbenen Pulvers.

5 Teile des nach obigen Angaben hergestellten Reaktionsproduktes werden in 80 Teilen Eisessig und 6 Teilen Wasser bei Raumtemperatur suspendiert. Unter Rühren werden auf einmal 1,2 Teile Hydrazinhydrat zugefügt. Das Reaktionsgemisch wird langsam auf 50° erwärmt und 2 Stunden gerührt. Zum Schluss wird ca. 10 Minuten auf 90° erhitzt, bis dünnschichtchromatographisch kein Edukt mehr nachweisbar ist. Nach Abkühlung auf Raumtemperatur wird der Farbstoff durch Zusatz von Salzsäure (2N) ausgefällt. Nach Filtration, Nachwaschen mit wenig Wasser und Trocknung bei einer Temperatur von 80° erhält man 4,8 Teile eines Farbstoffs, der in Form der freien Säure der Verbindung der Formel 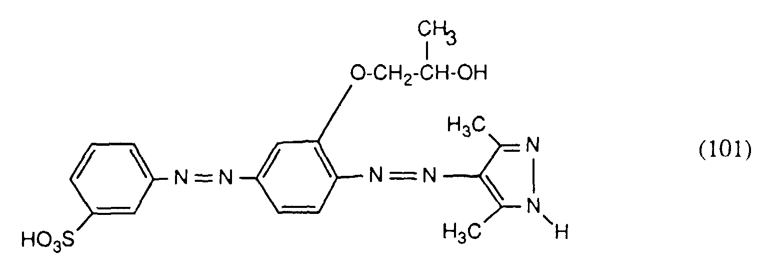 entspricht. Der Farbstoff der Formel (101) färbt synthetisches und natürliches Polyamidfasermaterial in gelben Farbtönen.

Herstellungsbeispiele 2 bis 18: Verfährt man wie in Herstellungsbeispiel 1 angegeben, verwendet jedoch gegebenenfalls anstelle von 37 Teilen 3-(β-Hydroxypropoxy)-4-amino-azobenzol-3'-sulfonsäure eine äquimolare Menge eines der in der folgenden Tabelle 1 in Spalte 2 in Form der freien Säure angegebenen Amine, gegebenenfalls anstelle von 14 Teilen 2,4-Pentandion eine äquimolare Menge einer Kupplungskomponente der Formel 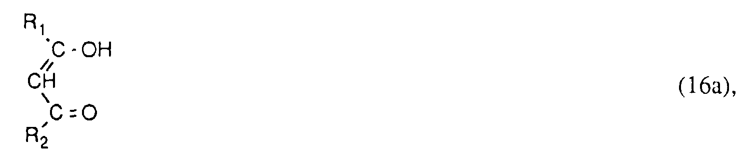 worin R₁ und R₂ die in den Spalten 3 und 4 angegebenen Bedeutungen haben, und gegebenenfalls anstelle von 1,2 Teilen Hydrazinhydrat eine äquimolare Menge einer Verbindung der Formel

H₂N-NH-R₃ (18),

worin R₃ die in der Spalte 5 angegebene Bedeutung hat, so erhält man analoge Farbstoffe, die synthetische und natürliche Polyamidfasermaterialien in gelben oder orangen Farbtönen färben.

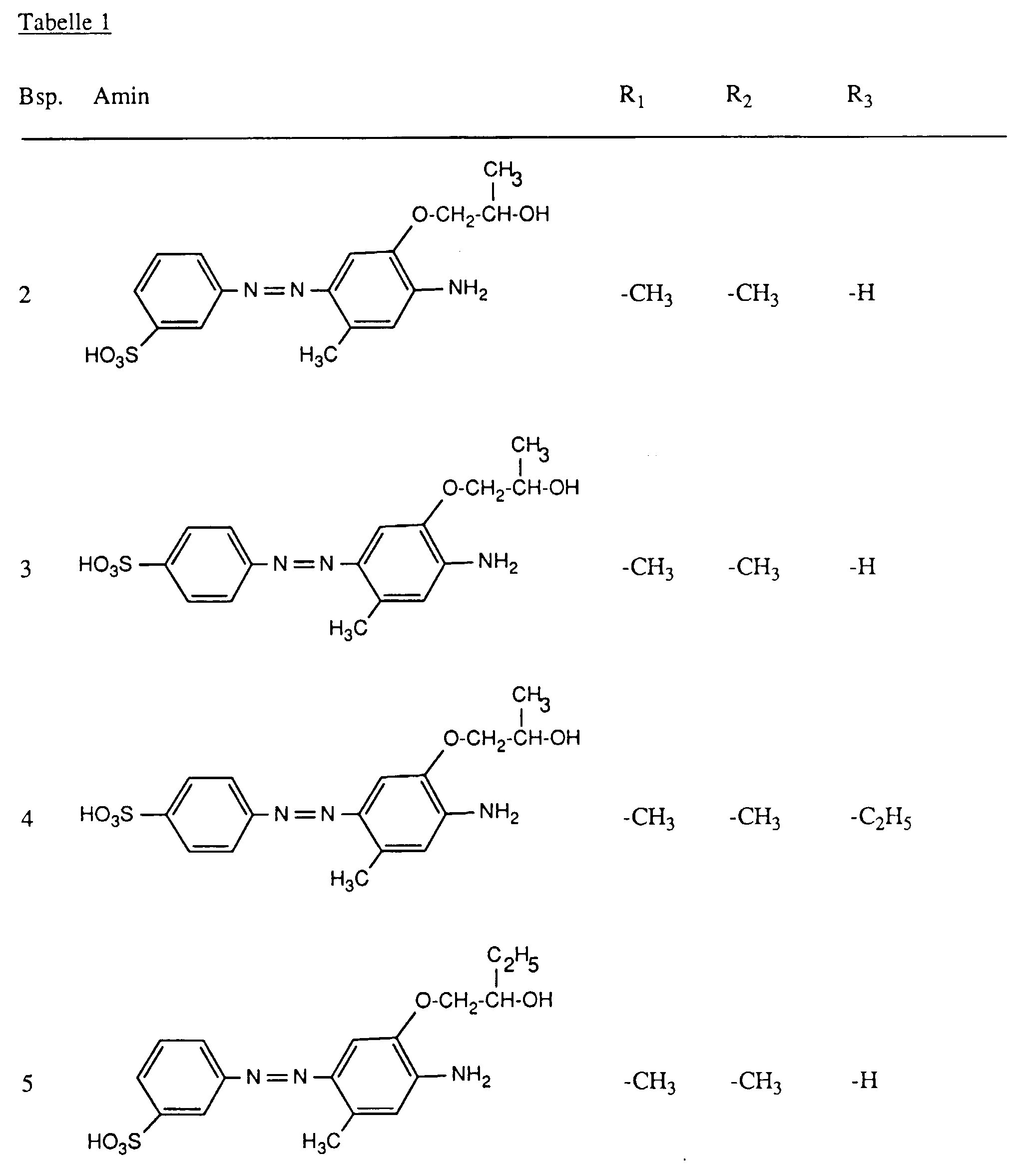

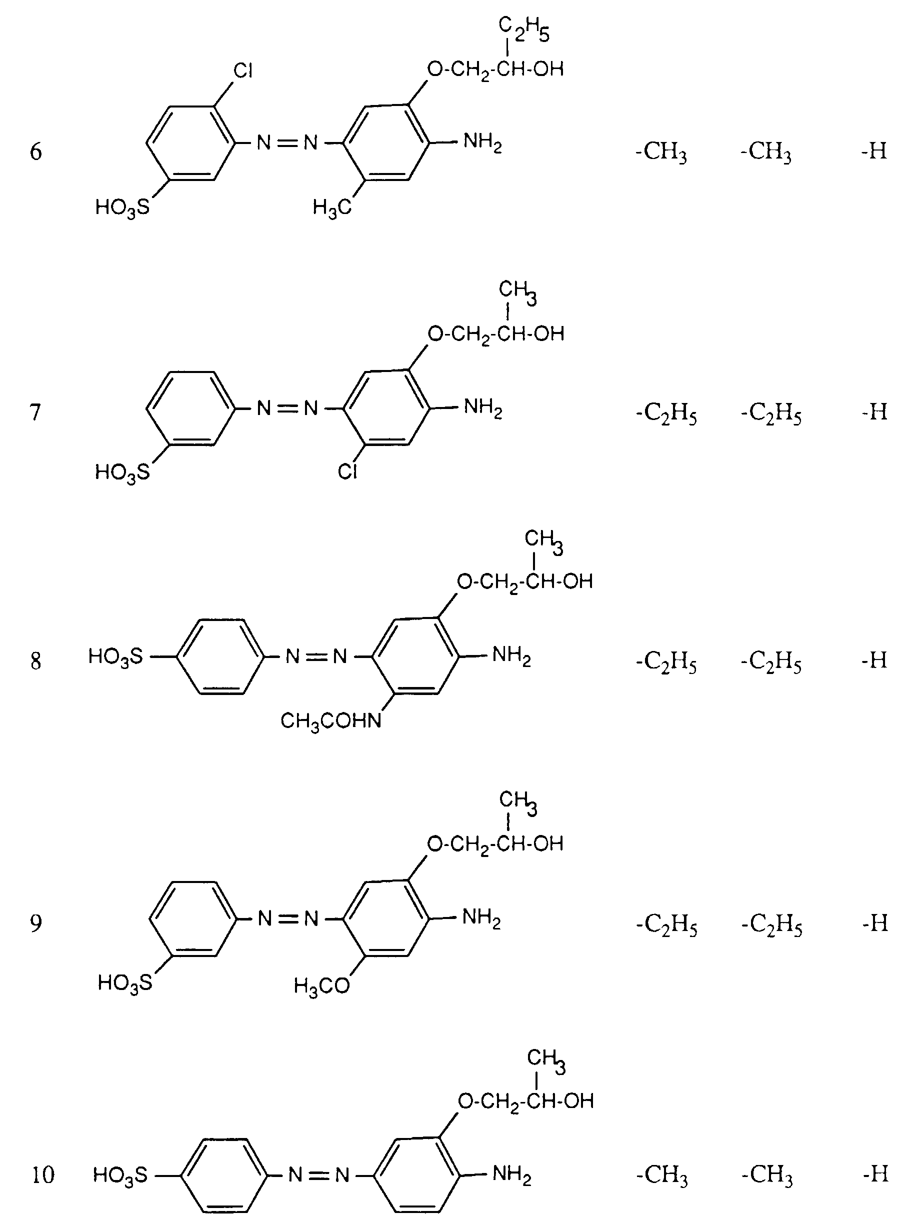

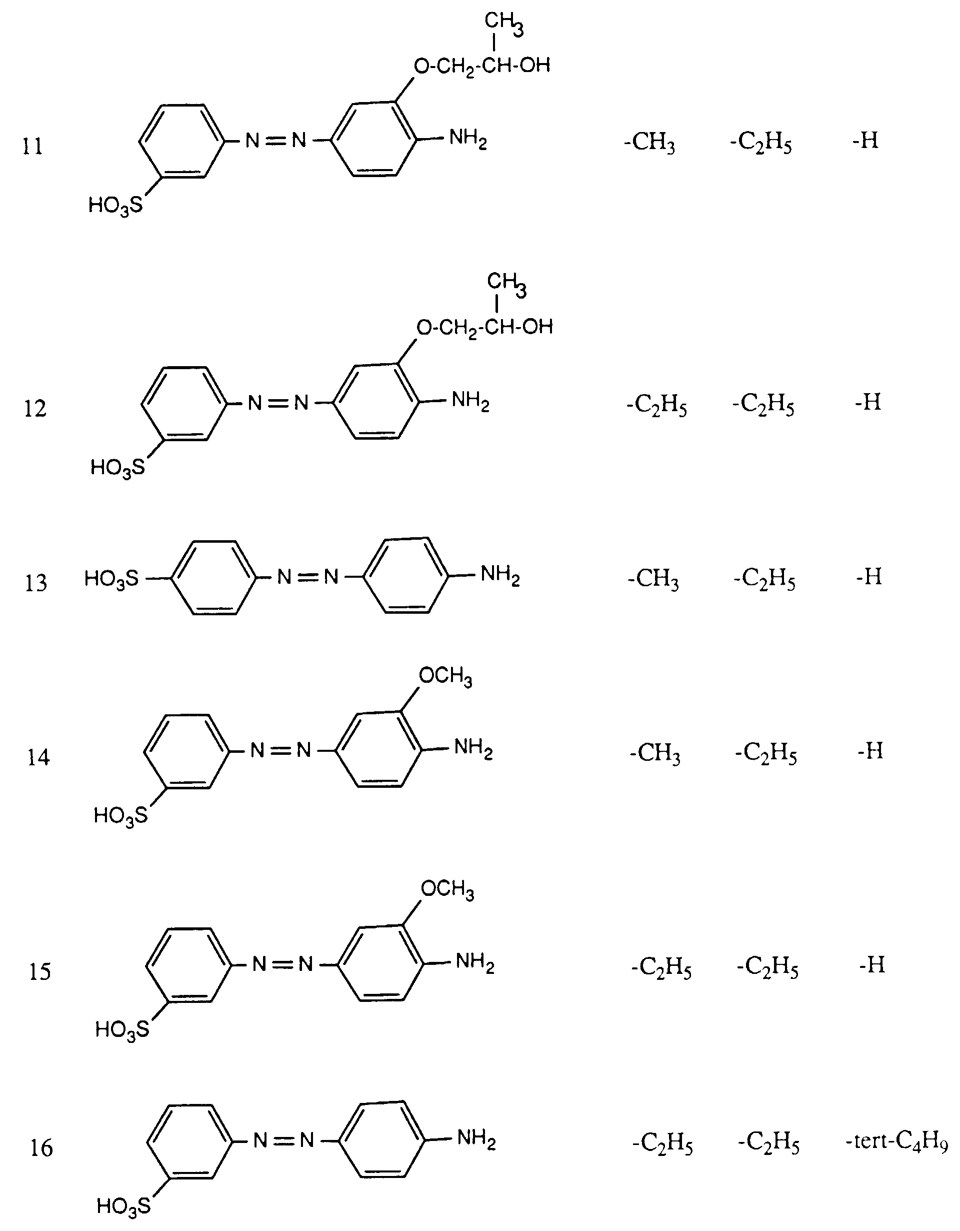

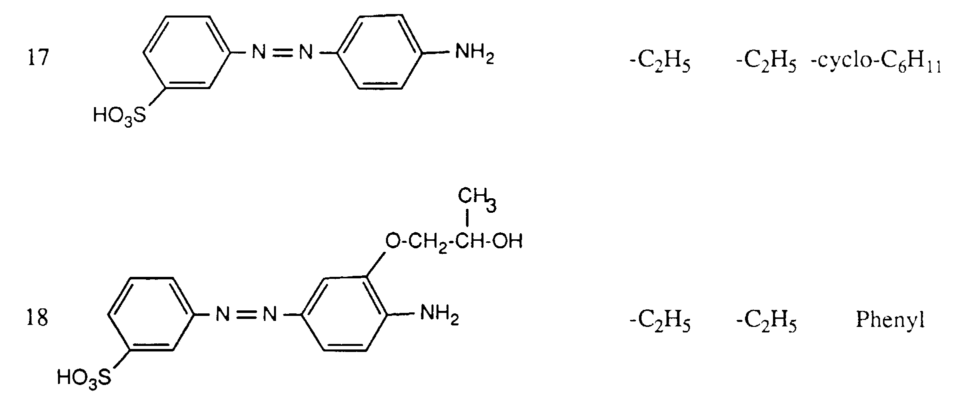

Beispiel 1A: Zur Herstellung der Farbstoffmischung, die einen Farbstoff der Formel 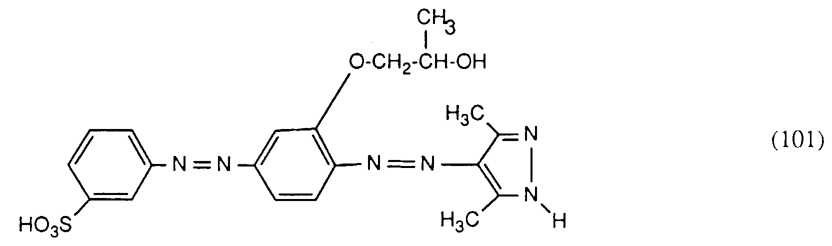 und einen Farbstoff der Formel 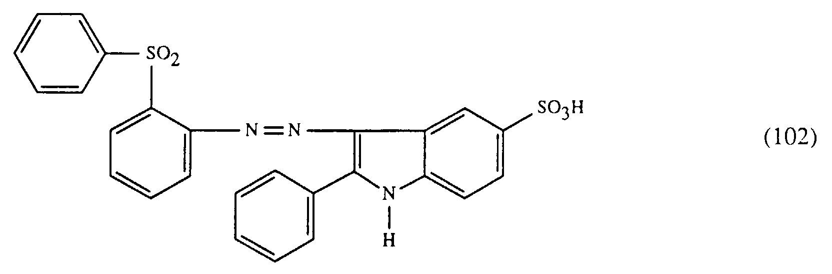 enthält, werden in einem Mixer 50 Teile des Farbstoffs der Formel (101) und 50 Teile des Farbstoffs der Formel (102) homogen gemischt und ergeben 100 Teile der Mischung, die im folgenden als Farbstoffmischung A bezeichnet wird.

Beispiel 1B: Zur Herstellung der Farbstoffmischung, die einen Farbstoff der Formel 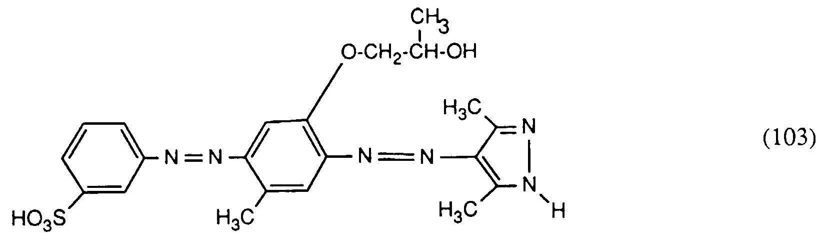 und einen Farbstoff der Formel 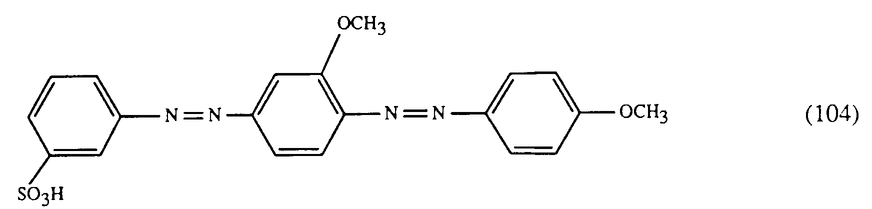 enthält, werden in einem Mixer 60 Teile des Farbstoffs der Formel (103) und 40 Teile des Farbstoffs der Formel (104) homogen gemischt und ergeben 100 Teile der Mischung, die im folgenden als Farbstoffmischung B bezeichnet wird.

Beispiel 1C: Zur Herstellung der Farbstoffmischung, die einen Farbstoff der Formel 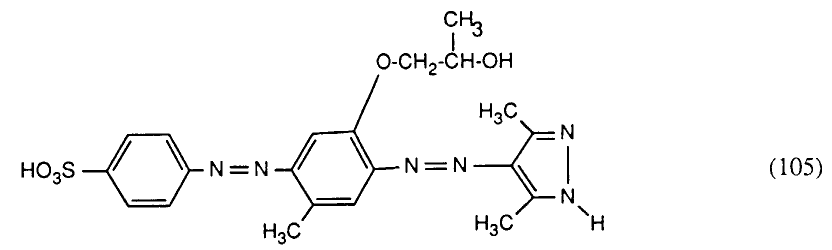 und einen Farbstoff der Formel 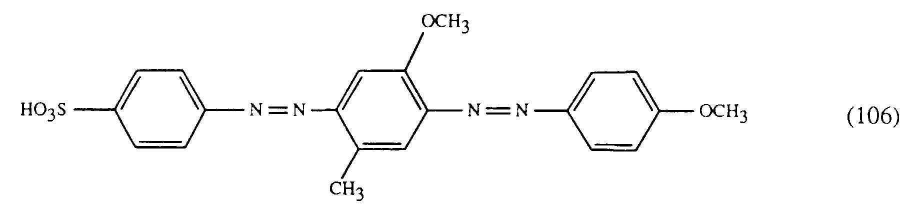 enthält, werden in einem Mixer 80 Teile des Farbstoffs der Formel (105) und 20 Teile des Farbstoffs der Formel (106) homogen gemischt und ergeben 100 Teile der Mischung, die im folgenden als Farbstoffmischung C bezeichnet wird.

Beispiel 1D: Zur Herstellung der Farbstoffmischung, die einen Farbstoff der Formel 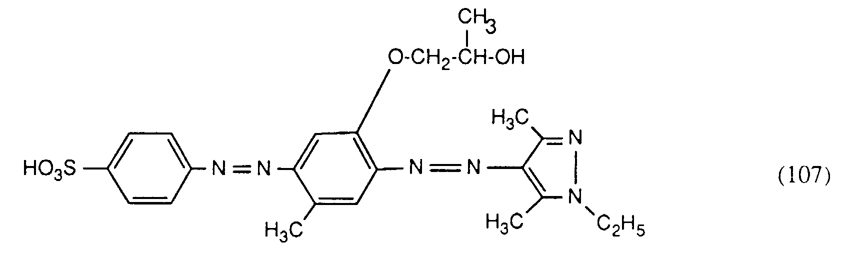 und einen Farbstoff der Formel 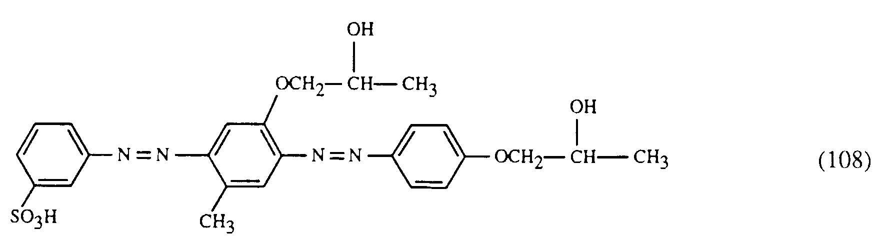 enthält, werden in einem Mixer 40 Teile des Farbstoffs der Formel (107) und 60 Teile des Farbstoffs der Formel (108) homogen gemischt und ergeben 100 Teile der Mischung, die im folgenden als Farbstoffmischung D bezeichnet wird.

Beispiel 1E: Zur Herstellung der Farbstoffmischung, die einen Farbstoff der Formel 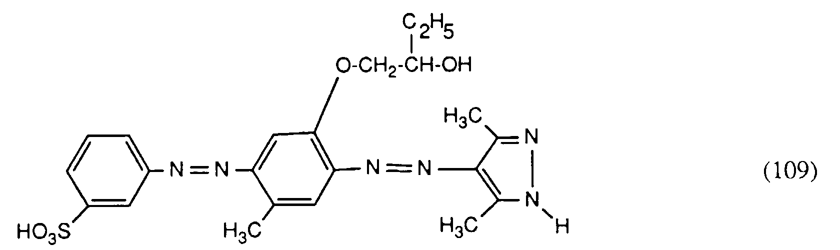 und einen Farbstoff der Formel 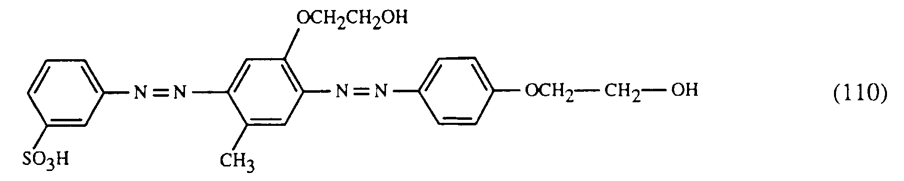 enthält, werden in einem Mixer 20 Teile des Farbstoffs der Formel (109) und 80 Teile des Farbstoffs der Formel (110) homogen gemischt und ergeben 100 Teile der Mischung, die im folgenden als Farbstoffmischung E bezeichnet wird.

Beispiel 1F: Zur Herstellung der Farbstoffmischung, die einen Farbstoff der Formel 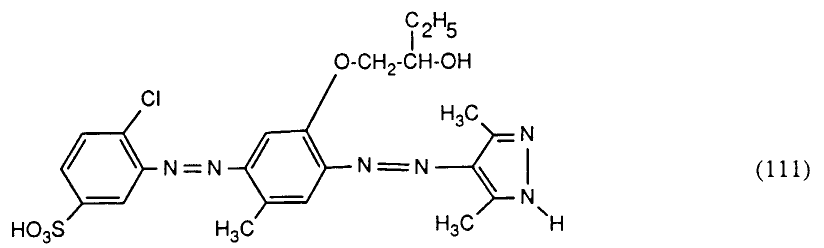 und einen Farbstoff der Formel 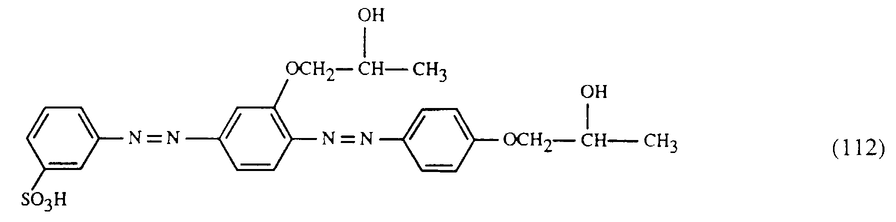 enthält, werden in einem Mixer 70 Teile des Farbstoffs der Formel (111) und 30 Teile des Farbstoffs der Formel (112) homogen gemischt und ergeben 100 Teile der Mischung, die im folgenden als Farbstoffmischung F bezeichnet wird.

Beispiel 1G: Zur Herstellung der Farbstoffmischung, die einen Farbstoff der Formel 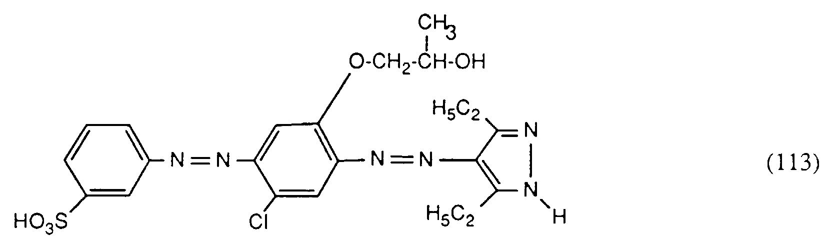 und einen Farbstoff der Formel 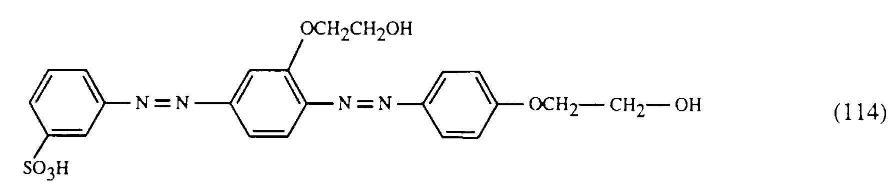 enthält, werden in einem Mixer 25 Teile des Farbstoffs der Formel (113) und 75 Teile des Farbstoffs der Formel (114) homogen gemischt und ergeben 100 Teile der Mischung, die im folgenden als Farbstoffmischung G bezeichnet wird.

Beispiel 1H: Zur Herstellung der Farbstoffmischung, die einen Farbstoff der Formel 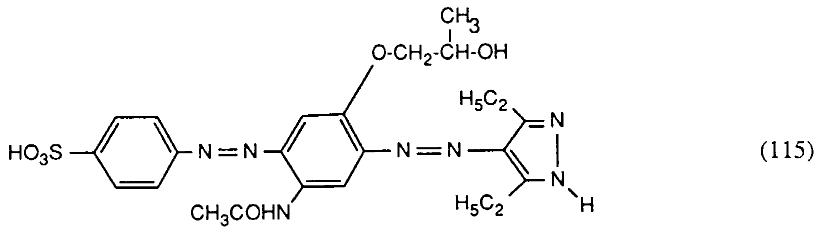 und einen Farbstoff der Formel 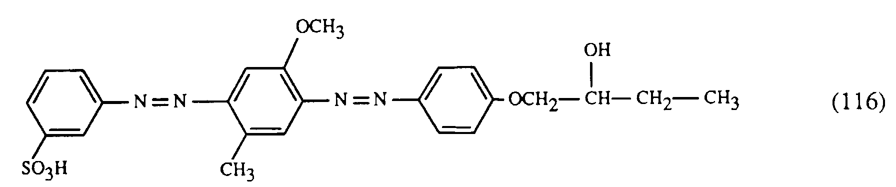 enthält, werden in einem Mixer 80 Teile des Farbstoffs der Formel (115) und 20 Teile des Farbstoffs der Formel (116) homogen gemischt und ergeben 100 Teile der Mischung, die im folgenden als Farbstoffmischung H bezeichnet wird.

Beispiel 1I: Zur Herstellung der Farbstoffmischung, die einen Farbstoff der Formel 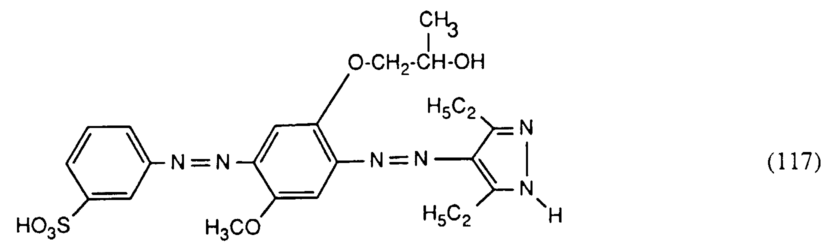 und einen Farbstoff der Formel 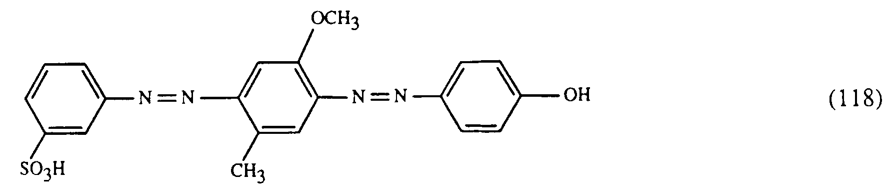 enthält, werden in einem Mixer 75 Teile des Farbstoffs der Formel (117) und 25 Teile des Farbstoffs der Formel (118) homogen gemischt und ergeben 100 Teile der Mischung, die im folgenden als Farbstoffmischung I bezeichnet wird.

Beispiel 1J: Zur Herstellung der Farbstoffmischung, die einen Farbstoff der Formel 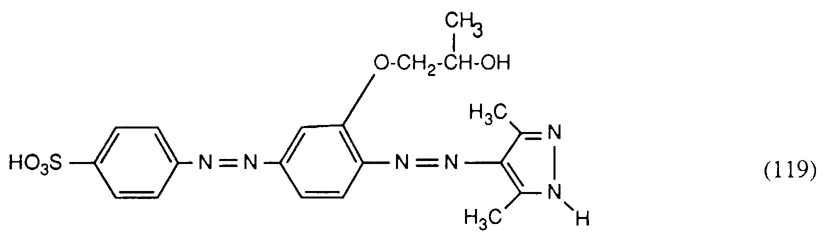 und einen Farbstoff der Formel 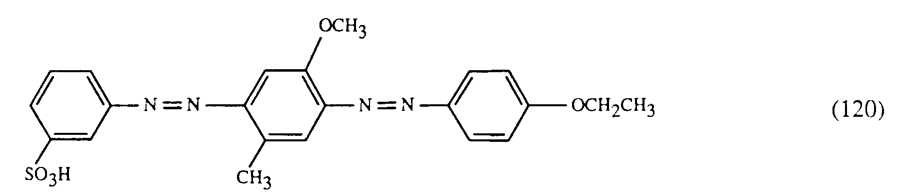 enthält, werden in einem Mixer 40 Teile des Farbstoffs der Formel (119) und 60 Teile des Farbstoffs der Formel (120) homogen gemischt und ergeben 100 Teile der Mischung, die im folgenden als Farbstoffmischung J bezeichnet wird.

Beispiel 1K: Zur Herstellung der Farbstoffmischung, die einen Farbstoff der Formel 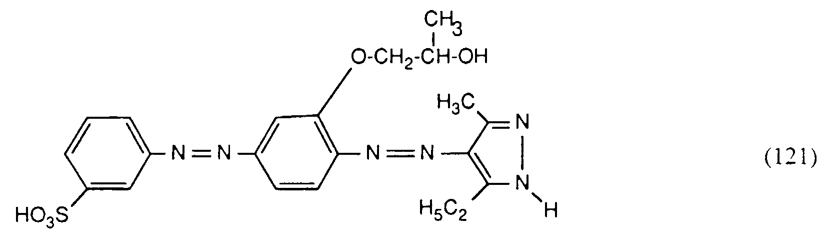 und einen Farbstoff der Formel 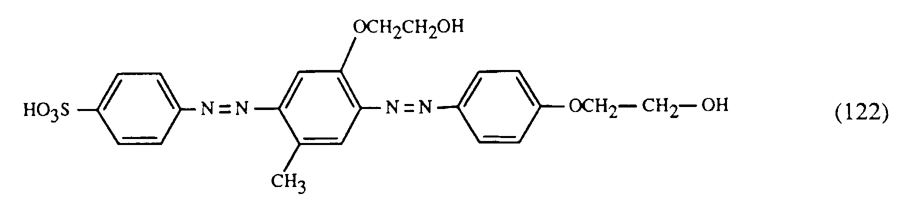 enthält, werden in einem Mixer 60 Teile des Farbstoffs der Formel (121) und 40 Teile des Farbstoffs der Formel (122) homogen gemischt und ergeben 100 Teile der Mischung, die im folgenden als Farbstoffmischung K bezeichnet wird.

Beispiel 1L: Zur Herstellung der Farbstoffmischung, die einen Farbstoff der Formel 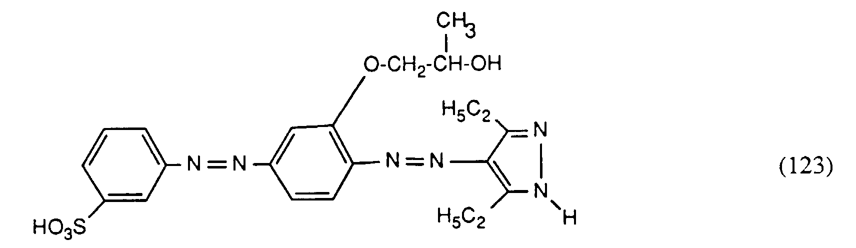 und einen Farbstoff der Formel 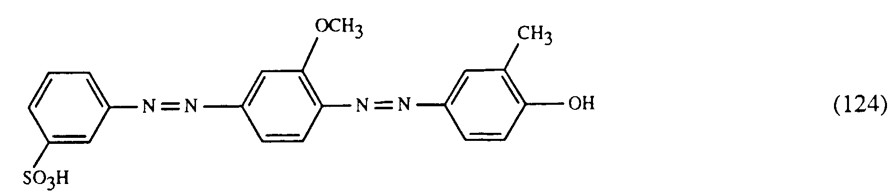 enthält, werden in einem Mixer 30 Teile des Farbstoffs der Formel (123) und 70 Teile des Farbstoffs der Formel (124) homogen gemischt und ergeben 100 Teile der Mischung, die im folgenden als Farbstoffmischung L bezeichnet wird.

Beispiel 1M: Zur Herstellung der Farbstoffmischung, die einen Farbstoff der Formel 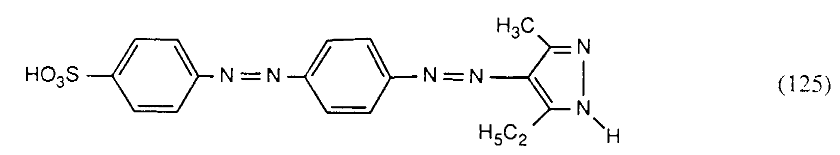 und einen Farbstoff der Formel 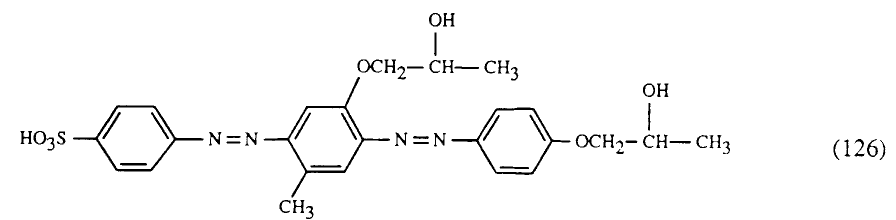 enthält, werden in einem Mixer 80 Teile des Farbstoffs der Formel (125) und 20 Teile des Farbstoffs der Formel (126) homogen gemischt und ergeben 100 Teile der Mischung, die im folgenden als Farbstoffmischung M bezeichnet wird.

Beispiel 1N: Zur Herstellung der Farbstoffmischung, die einen Farbstoff der Formel 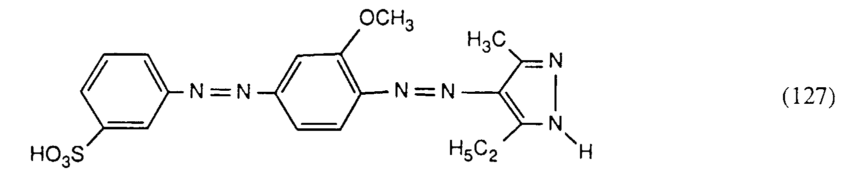 und einen Farbstoff der Formel 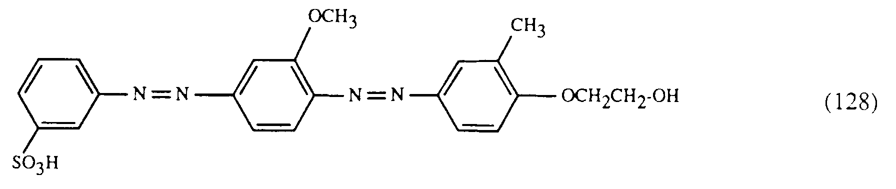 enthält, werden in einem Mixer 60 Teile des Farbstoffs der Formel (127) und 40 Teile des Farbstoffs der Formel (128) homogen gemischt und ergeben 100 Teile der Mischung, die im folgenden als Farbstoffmischung N bezeichnet wird.

Beispiel 1P: Zur Herstellung der Farbstoffmischung, die einen Farbstoff der Formel 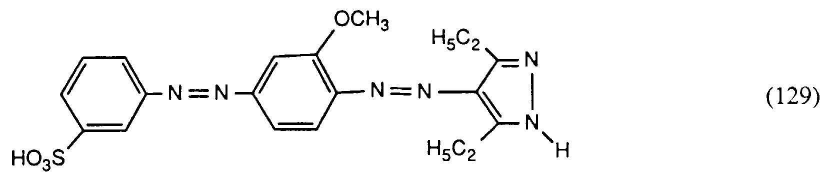 und einen Farbstoff der Formel 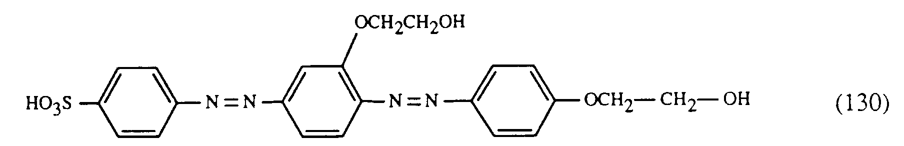 enthält, werden in einem Mixer 40 Teile des Farbstoffs der Formel (129) und 60 Teile des Farbstoffs der Formel (130) homogen gemischt und ergeben 100 Teile der Mischung, die im folgenden als Farbstoffmischung P bezeichnet wird.

Beispiel 1Q: Zur Herstellung der Farbstoffmischung, die einen Farbstoff der Formel 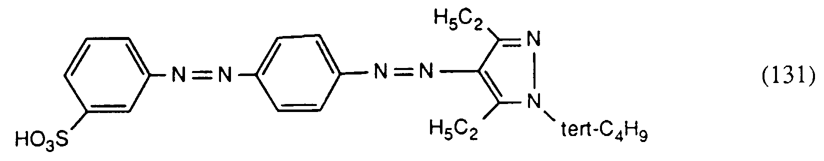 und einen Farbstoff der Formel 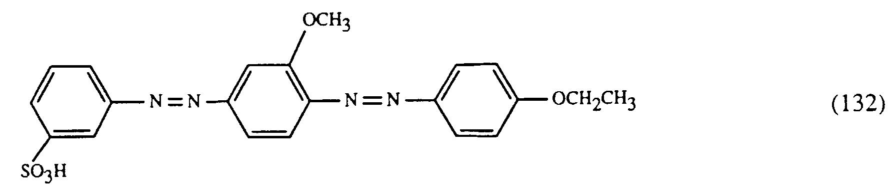 enthält, werden in einem Mixer 75 Teile des Farbstoffs der Formel (131) und 25 Teile des Farbstoffs der Formel (132) homogen gemischt und ergeben 100 Teile der Mischung, die im folgenden als Farbstoffmischung Q bezeichnet wird.

Beispiel 1R: Zur Herstellung der Farbstoffmischung, die einen Farbstoff der Formel 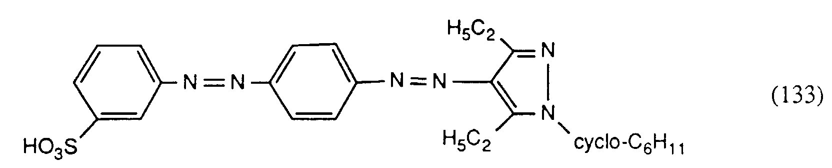 und einen Farbstoff der Formel 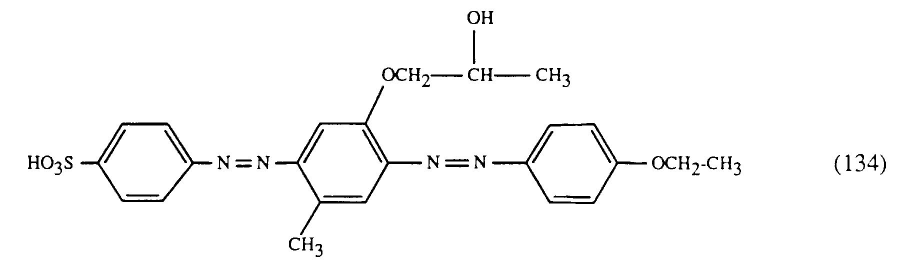 enthält, werden in einem Mixer 25 Teile des Farbstoffs der Formel (133) und 75 Teile des Farbstoffs der Formel (134) homogen gemischt und ergeben 100 Teile der Mischung, die im folgenden als Farbstoffmischung R bezeichnet wird.

Beispiel 1S: Zur Herstellung der Farbstoffmischung, die einen Farbstoff der Formel 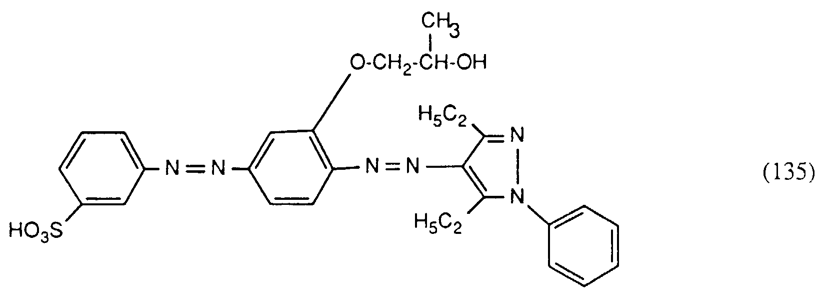 und einen Farbstoff der Formel 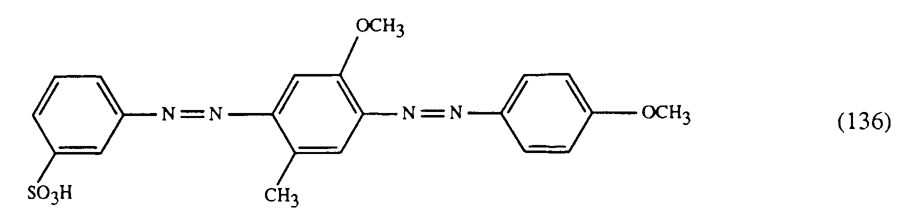 enthält, werden in einem Mixer 80 Teile des Farbstoffs der Formel (135) und 20 Teile des Farbstoffs der Formel (136) homogen gemischt und ergeben 100 Teile der Mischung, die im folgenden als Farbstoffmischung S bezeichnet wird.

Beispiel 2: Man färbt 10 Teile Polyamid 6.6-Fäsermaterial (Helancatrikot) in 500 Teilen einer wässrigen Flotte, die 2 g/l Ammonacetat enthält und mit Essigsäure auf pH 5 gestellt wird. Als Farbstoffe werden 0,27 % der gelben Farbstoffmischung A gemäss Beispiel 1A), 0,12 % des roten Farbstoffs der Formel 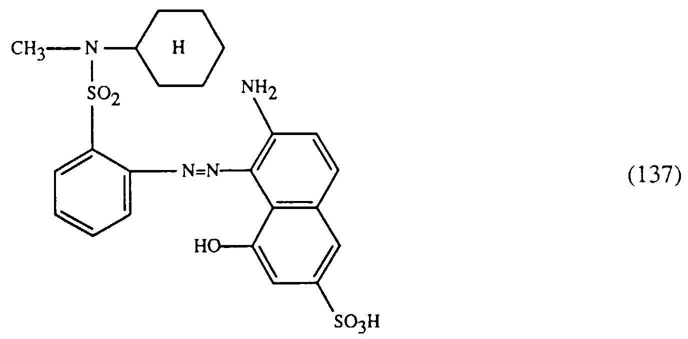 und 0,13 % des blauen Farbstoffs der Formel 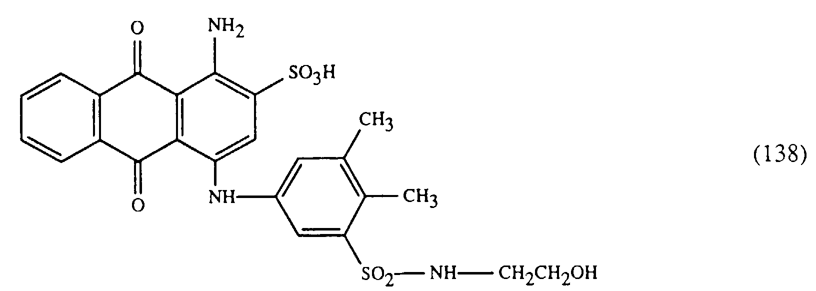 verwendet, wobei sich die Mengenangaben auf das Fasergewicht beziehen. Die Färbedauer bei einer Temperatur von 60 bis 98° beträgt 30 bis 90 Minuten. Das gefärbte Polyamid 6.6-Fasermaterial wird anschliessend herausgenommen und wie üblich gespült und getrocknet. Man erhält ein in neutral braunem Farbton völlig egal gefärbtes Gewebestück, das keinerlei materialbedingte Streifigkeit aufweist.

Verwendet man anstelle von 0,27 % der gelben Farbstoffmischung A und 0,12 % des roten Farbstoffs der Formel (137) sowie 0,13 % des blauen Farbstoffs der Formel (138) die in der folgenden Tabelle 2 angegebenen Farbstoffe der Formeln (137) und (138) sowie die Farbstoffmischungen aus Beispiel 1, so erhält man die in dem angegebenen Farbton völlig egal gefärbten Gewebestücke.

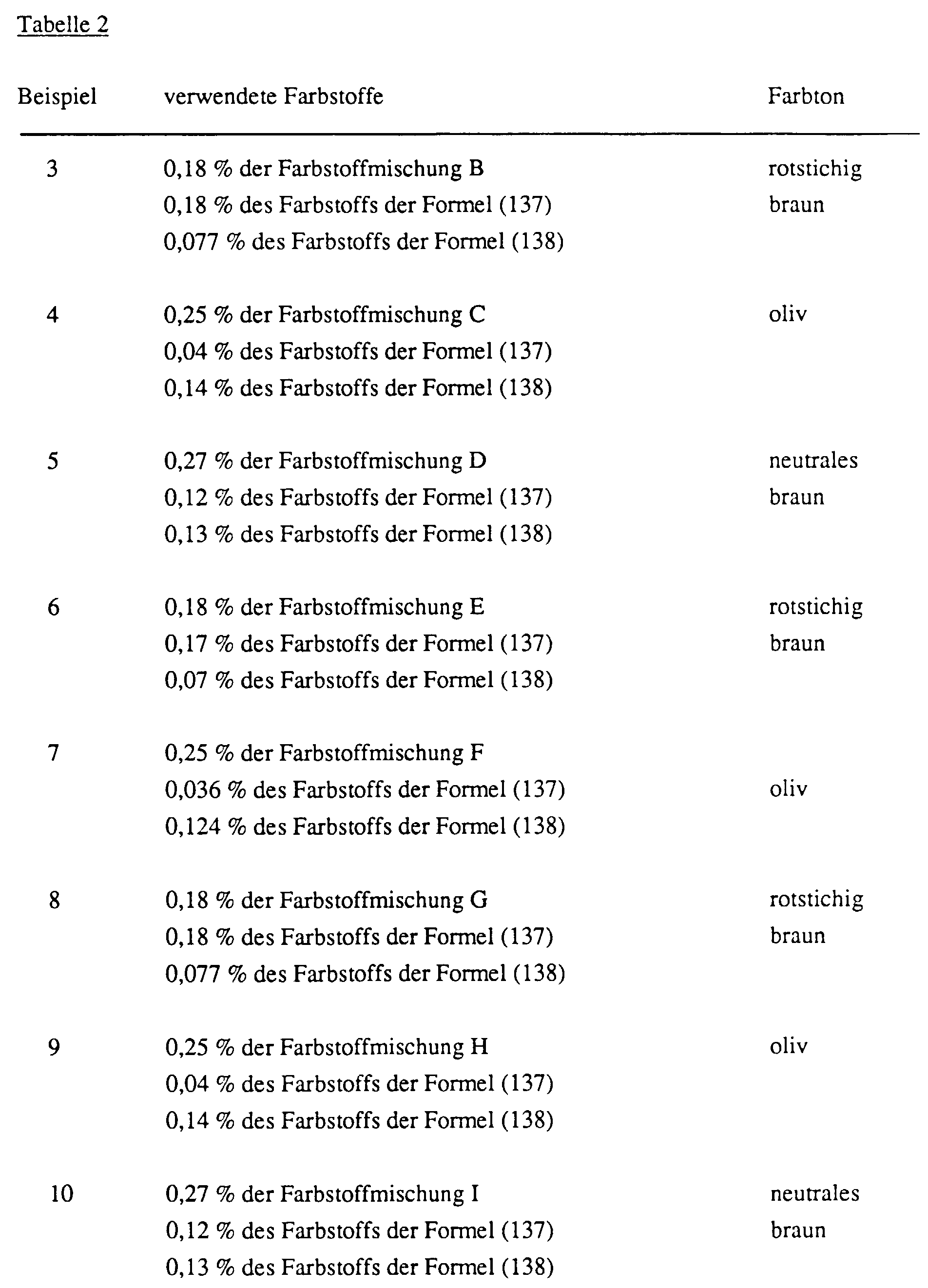

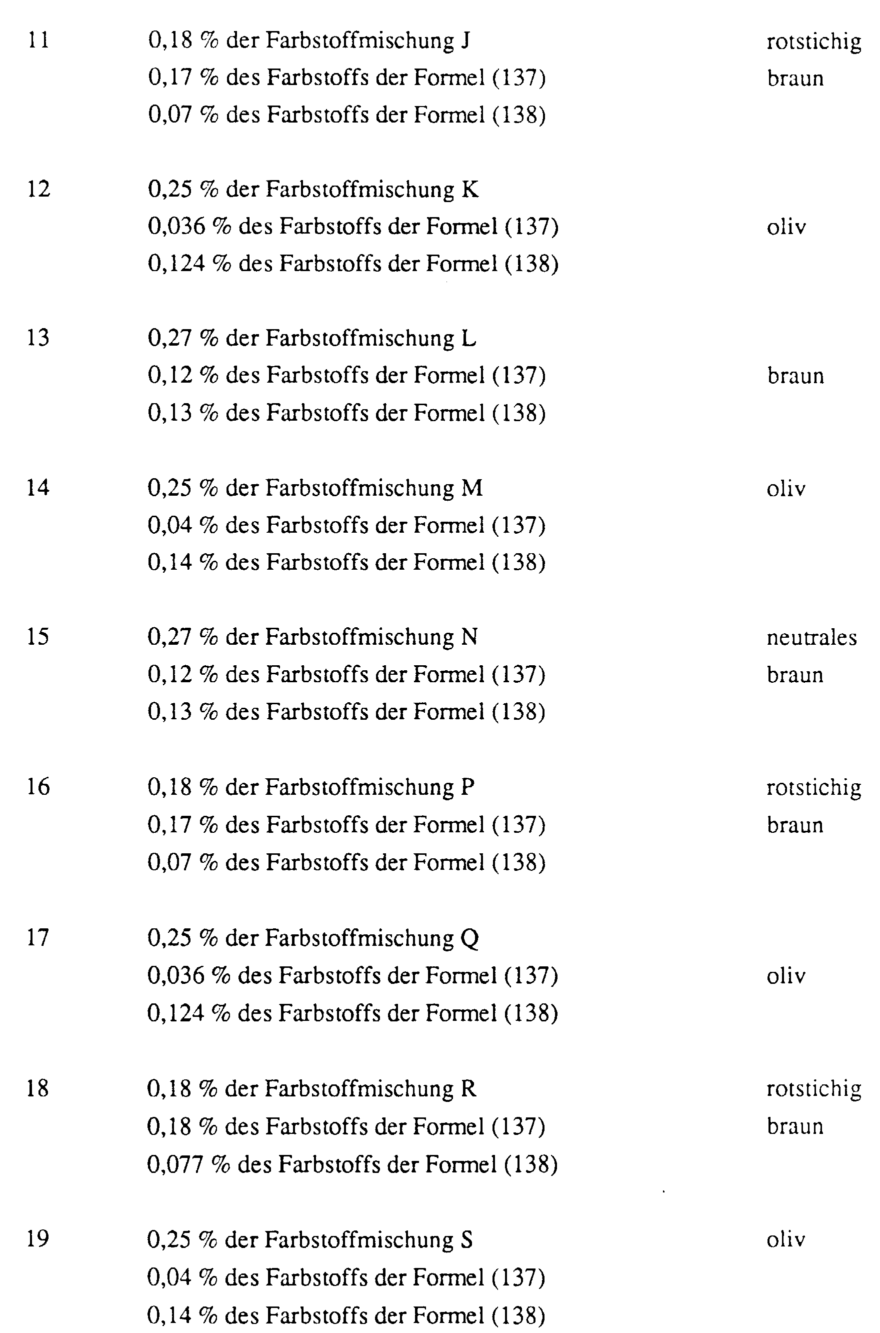

Beispiel 20: Man färbt 10 Teile Polyamid 66-Garn in 400 Teilen einer wässrigen Flotte, die 1,5 g/l Ammonacetat enthält und mit Essigsäure auf pH 5,5 gestellt wird. Als Farbstoffe werden 0,27 % der Farbstoffmischung H, 0,12 % des Farbstoffs der Formel (137) und 0,13 % des Farbstoffs der Formel (138) verwendet, wobei sich die Mengenangaben auf das Fasergewicht beziehen. Das Färbebad wird innerhalb von 30 Minuten auf 98° erhitzt und 60 Minuten bei 96° bis 98° gehalten. Das gefärbte Garn wird anschliessend herausgenommen und wie üblich gespült und getrocknet. Man erhält ein in neutral braunem Farbton gefärbtes Garn.

Beispiel 21: (Teppichausziehverfahren):
Ein Baumfärbeapparat (Labor-Stückfärbeapparat, Modell 10 der Firma Rudolf Then) besteht in seinen Hauptteilen aus dem liegenden Färbekessel mit Kühlmantel, der mit dem Nebenkessel mit seiner Spezial-Umkehrpumpe zu einem Zirkulationssystem verbunden ist.

In diesen Färbeapparat wird ein Warenbaum eingeführt, der mit einer Polyamid-6 Schlingenflor-Teppichware von 50 cm Breite, 135 cm Länge und einem Gewicht von 380 g bestückt wurde. In den Nebenkessel wurden 6 Liter enthärtetes Wasser eingefüllt und 60 ml 2n Natronlauge zugegeben. Durch Öffnen der entsprechenden Ventile (Nebenkessel, bzw. Verbindungsleitungen, Pumpe/Färbekessel) strömt die Flotte aus dem Nebenkessel mit eigenem Gefälle in den Färbekessel, dabei fliesst die verdrängte Luft durch Entlüftungsleitung in den Nebenkessel ab. Nach Füllung des Färbeapparates bleibt im Nebenkessel ein Flottenrest von ca. 5 cm Höhe, danach wird die Umwälzpumpe eingeschaltet. Zur Kontrolle des pH-Wertes wurde in die Rohrleitung zwischen Färbe- und Nebenkessel (Fliessrichtung) eine Bohrung angebracht und eine kombinierte Glaselektrode eingeführt. Die Färbeflotte zirkuliert während des gesamten Färbeprozesses von innen nach aussen, dabei beträgt das Druckgefälle 0,1 bis 0,2 Bar, die Förderleistung der Pumpe ca. 6 Liter pro Minute. Die Flotte wird auf 98° erhitzt und 7,6 g eines anionischen faseraffinen Egalisiermittels, gelöst in 100 ml Wasser, innerhalb von 5 Minuten in den Nebenkessel zugegeben.

Die Färbetemperatur wird auf 97 bis 98° eingestellt, der pH-Wert beträgt 10,7. Der pH-Wert einer entnommenen, auf 20° abgekühlten Probe beträgt 11,9.

Nun werden 2,5 g der gelben Farbstoffmischung D und 1,8 g des blauen Farbstoffs der Formel (138), beide gelöst in 200 ml heissem Wasser, innerhalb von 10 Minuten aus einem Tropftrichter in den Nebenkessel zulaufen gelassen. Nach 30 Minuten werden mittels einer Kolbenbürette während 10 Minuten mit einer Geschwindigkeit von 5,5 ml pro Minute und während weiteren 20 Minuten mit einer Geschwindigkeit von 2,25 ml pro Minute, insgesamt 100 ml 1n Schwefelsäure zudosiert.

Der pH-Wert beträgt nach weiteren 10 Minuten 3,8. Das Färbebad ist erschöpft, d.h. die Farbstoffe sind zu über 99 % auf das Färbegut aufgezogen. Die Beheizung wird abgestellt und mit Hilfe der indirekten Kühlung der Färbeflotte auf 60° gekühlt. Während dieser Zeit erhöht sich der pH-Wert auf 3,9. Die fast wasserklare Flotte wird in den Nebenkessel zurückgepumpt und der Warenbaum herausgenommen. Das Teppichmaterial wird abgewickelt, zentrifugiert und getrocknet. Die Polyamid-6-Schlingen-Teppichware ist flächenegal grün gefärbt.

Wenn man wie in Beispiel 21 angegeben vorgeht und anstelle der dort verwendeten Farbstoffmischung D die gleiche Menge einer Farbstoffmischung aus 50 Gewichtsprozent des Farbstoffs der Formel (101) und 50 Gewichtsprozent eines der in der folgenden Tabelle angegebenen Farbstoffs verwendet, so erhält man ebenfalls grün gefärbte Polyamid-6-Schlingen-Teppichware.

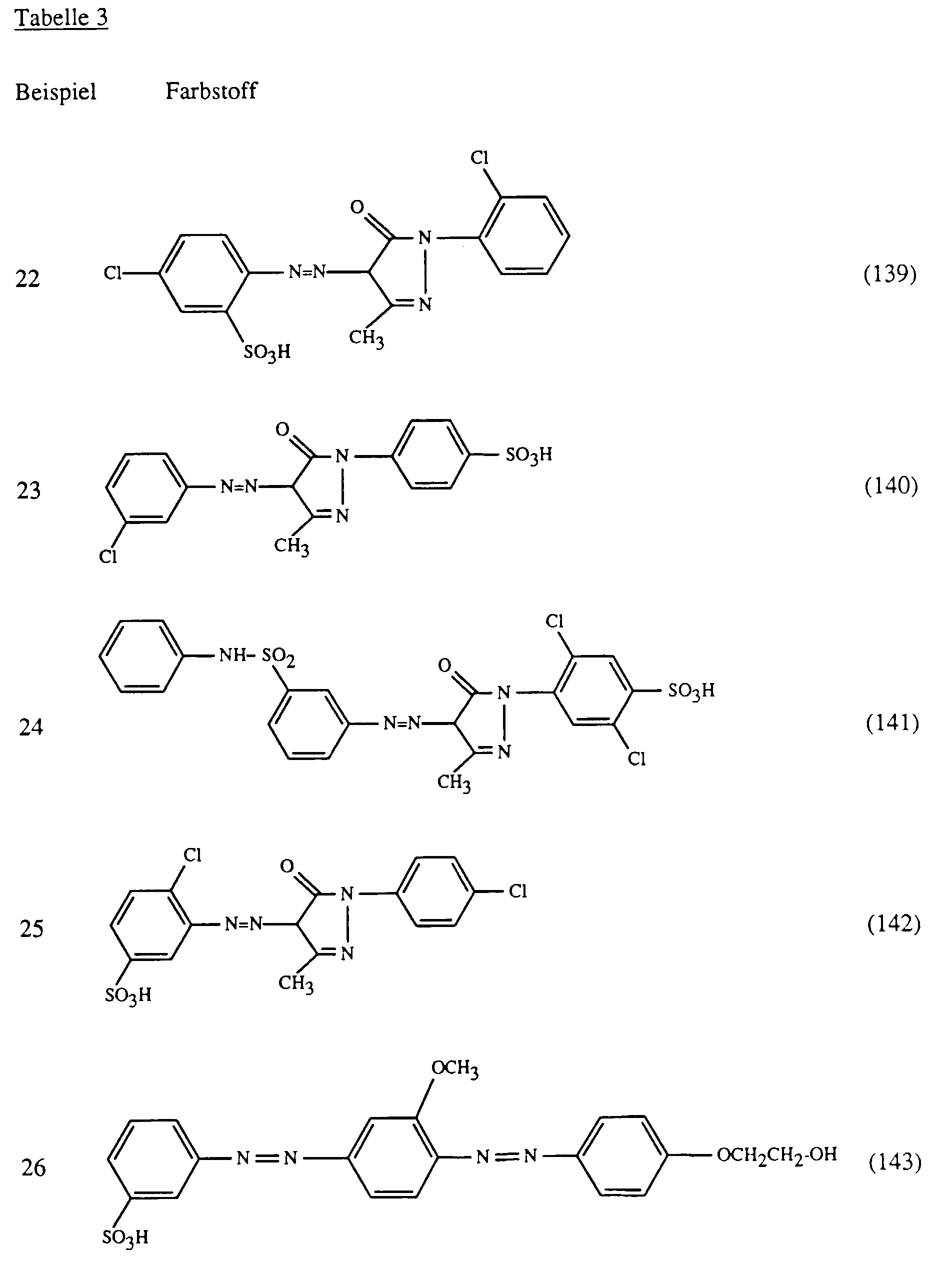

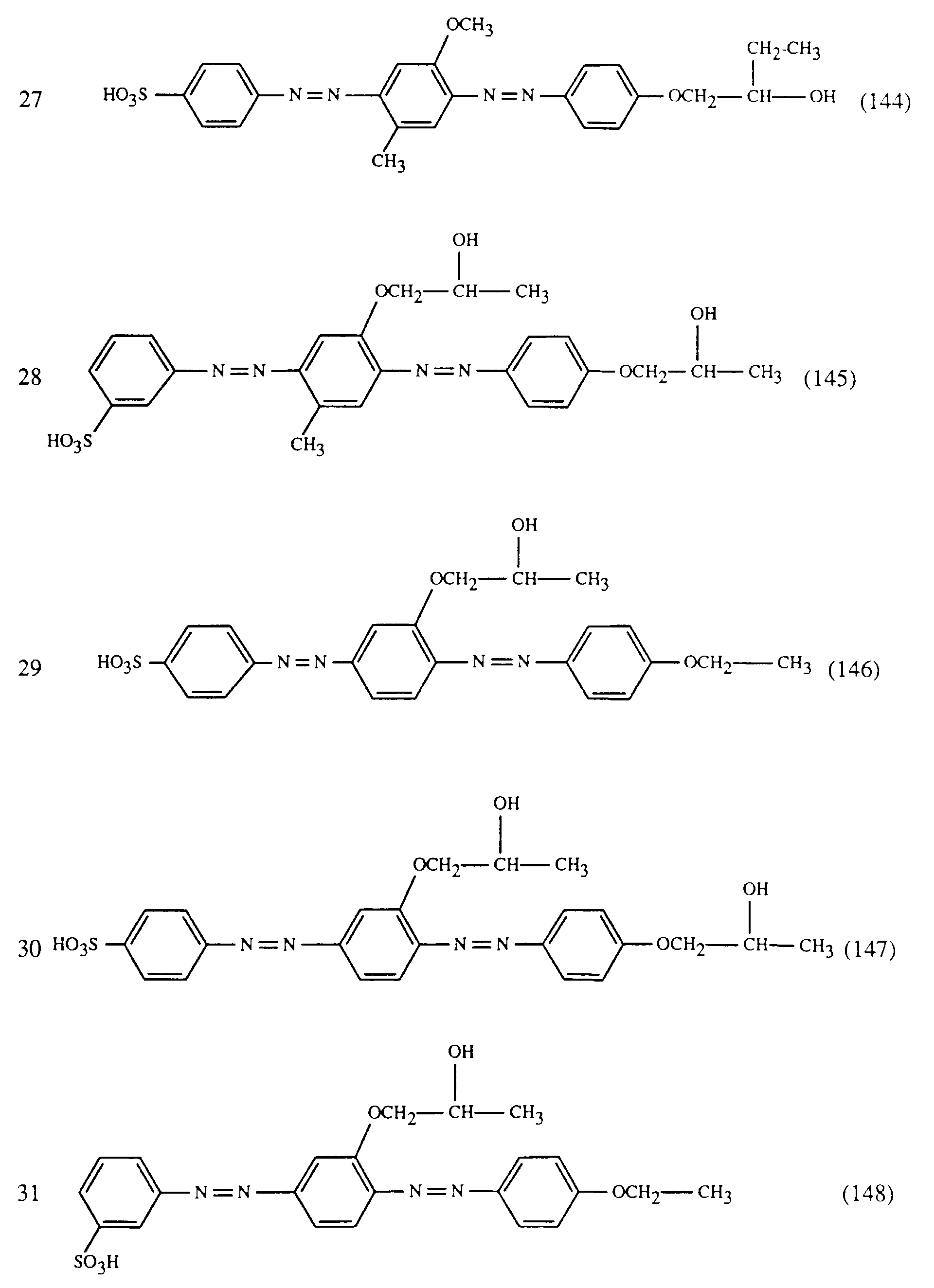

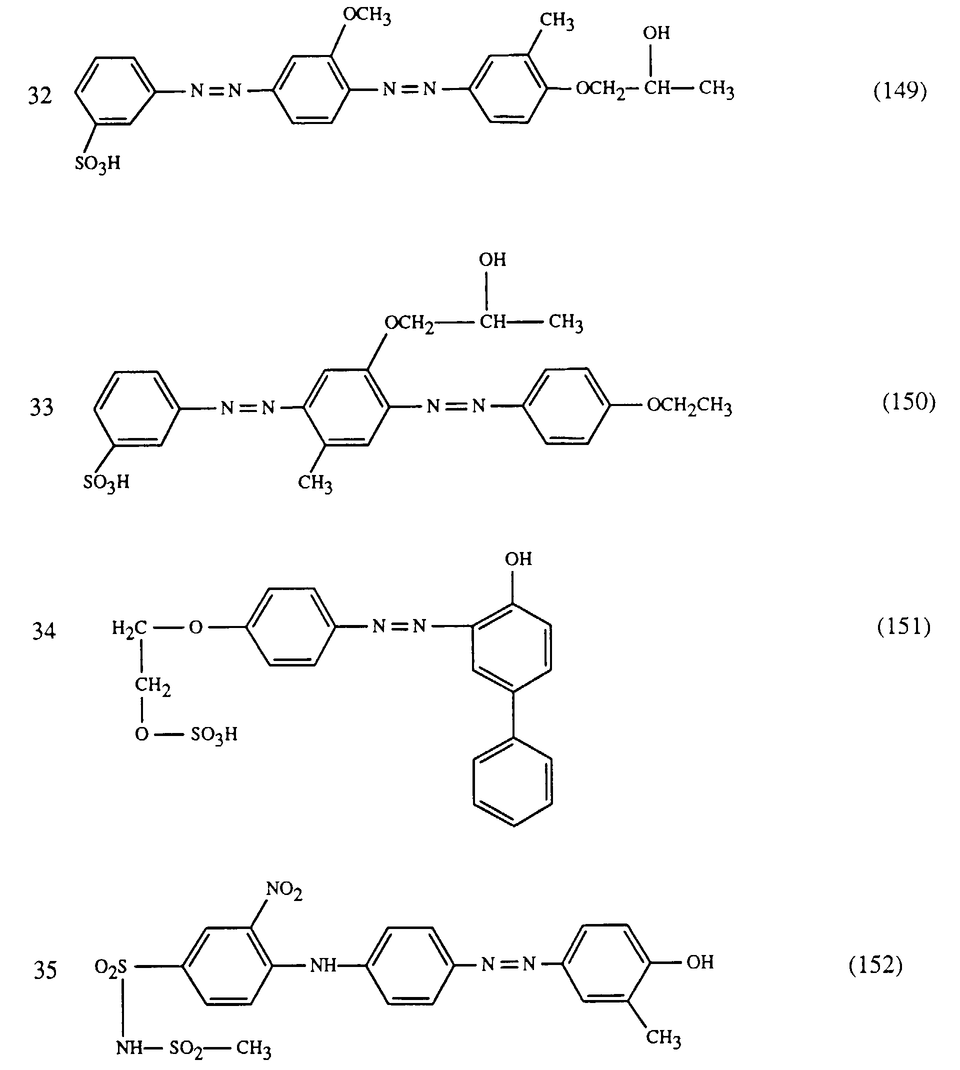

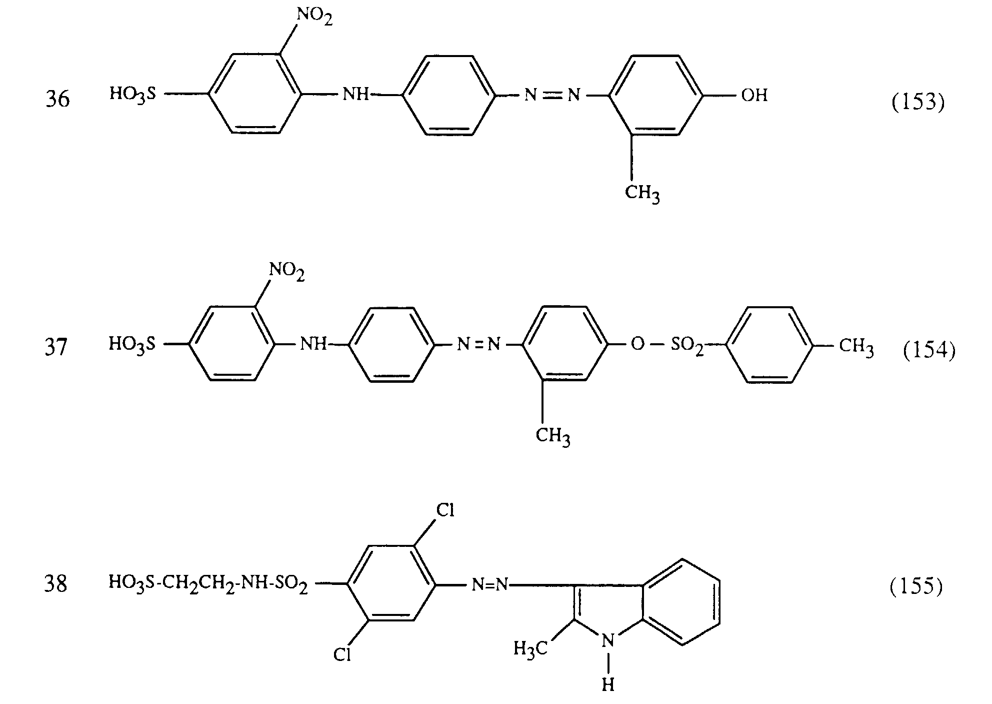

## Patentansprüche (Patentansprüche für folgende(n) Vertragsstaat(en): BE, CH, DE, FR, GB, IT, LU)

1. Farbstoffmischung, dadurch gekennzeichnet, dass sie mindestens einen Farbstoff der Formel 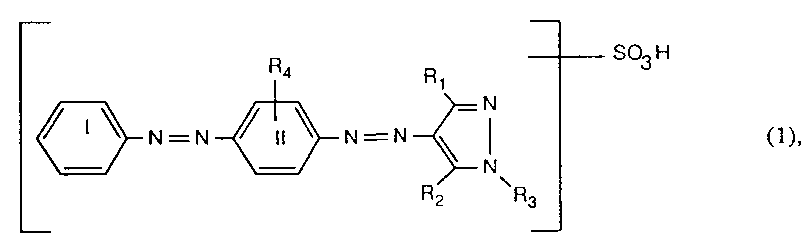 worin R₁ und R₂ unabhängig voneinander Wasserstoff oder gegebenenfalls substituiertes C₁-C₈-Alkyl oder Phenyl sind, R₃ Wasserstoff oder gegebenenfalls substituiertes C₁-C₈-Alkyl, C₅-C₇-Cycloalkyl oder Phenyl ist, R₄ Wasserstoff oder ein Rest der Formel 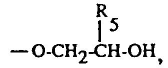 R₅ Wasserstoff oder gegebenenfalls substituiertes C₁-C₈-Alkyl oder Phenyl ist und die Benzolringe I und II gegebenenfalls weitersubstituiert sind, zusammen mit mindestens einem Farbstoff der Formeln (2) bis (6): 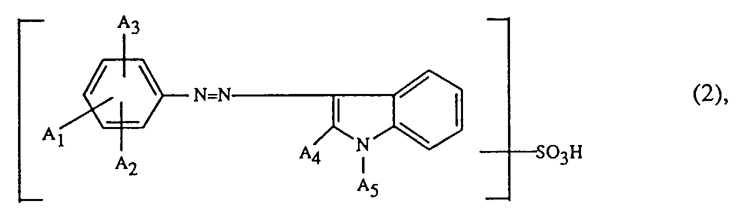 worin A₁ und A₂ Wasserstoff, Halogen, C₁₋₄-Alkoxy, C₂₋₄-Alkanoylamino oder gegebenenfalls substituiertes C₁₋₄-Alkyl, A₃ gegebenenfalls substituiertes Phenylsulfonyl, Naphthylsulfonyl oder C₁₋₄-Alkylaminosulfonyl, A₄ Wasserstoff, gegebenenfalls substituiertes C₁-C₄-Alkyl, Phenyl oder Naphthyl und A₅ Wasserstoff oder C₁-C₈-Alkyl ist, 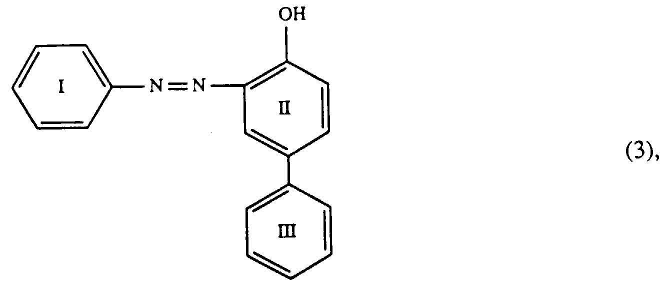 worin die Benzolringe I, II und III gegebenenfalls substituiert sind, 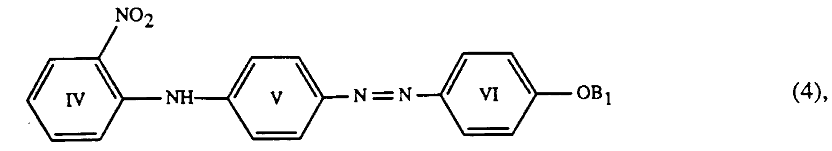 worin die Benzolringe IV, V und VI gegebenenfalls substituiert sind und B₁ Wasserstoff oder gegebenenfalls substituiertes Phenyl- oder Naphthylsulfonyl ist, 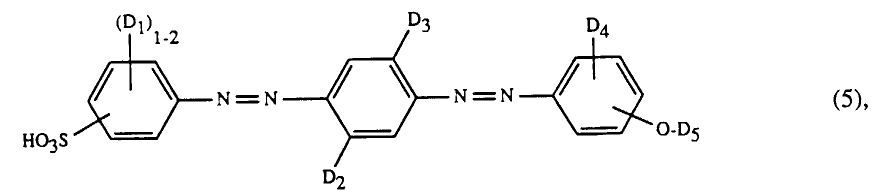 worin D₁, D₂ und D₃ Wasserstoff, C₁₋₄-Alkyl, C₁₋₄-Alkoxy, C₂₋₄-Hydroxyalkoxy, C₂-C₄-Alkanoylamino oder Carbamoyl und D₄ und D₅ Wasserstoff, C₁₋₄-Alkyl oder C₂₋₄-Hydroxylalkyl bedeuten und (D₁)₁₋₂ für einen oder zwei Substituenten D₁ steht, und 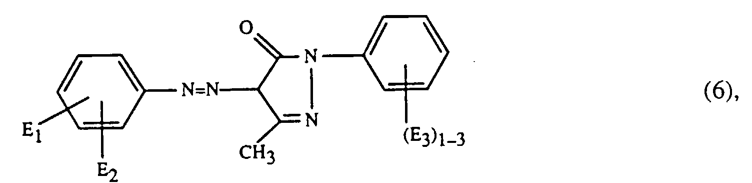 worin E₁ Wasserstoff, C₁₋₄-Alkyl, C₁₋₄-Alkoxy, C₂₋₄-Alkanoylamino, Sulfo oder Halogen, E₂ Wasserstoff, Halogen, Sulfo oder gegebenenfalls substituiertes Phenyl- oder Naphthylaminosulfonyl ist und (E₃)₁₋₃ für 1 bis 3 Substituenten E₃ steht und E₃ Wasserstoff, Halogen, C₁₋₄-Alkyl, C₁₋₄-Alkoxy oder Sulfo ist, enthält.

2. Farbstoffmischung gemäss Anspruch 1, dadurch gekennzeichnet, dass im Farbstoff der Formel (1) R₁ und R₂ unabhängig voneinander Wasserstoff, C₁-C₄-Alkyl oder Phenyl sind.

3. Farbstoffmischung gemäss einem der Ansprüche 1 und 2, dadurch gekennzeichnet, dass im Farbstoff der Formel (1) R₃ Wasserstoff, C₁-C₄-Alkyl oder Phenyl ist.

4. Farbstoffmischung gemäss einem der Ansprüche 1 bis 3, dadurch gekennzeichnet, dass im Farbstoff der Formel (1) R₄ Wasserstoff oder ein Rest der Formel 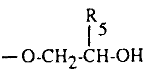 und R₅ Wasserstoff oder gegebenenfalls durch Hydroxy substituiertes C₁-C₄-Alkyl ist.

5. Farbstoffmischung gemäss einem der Ansprüche 1 bis 4, dadurch gekennzeichnet, dass im Farbstoff der Formel (1) R₁ und R₂ unabhängig voneinander Wasserstoff oder C₁-C₄-Alkyl sind, R₃ Wasserstoff, C₁-C₄-Alkyl oder Phenyl ist, R₄ Wasserstoff oder ein Rest der Formel 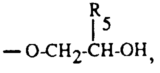 R₅ Wasserstoff oder gegebenenfalls durch Hydroxy substituiertes C₁-C₄-Alkyl ist, die Benzolringe I und II unabhängig voneinander gegebenenfalls durch C₁-C₄-Alkyl, C₁-C₄-Alkoxy, C₂-C₄-Alkanoylamino oder Halogen weitersubstituiert sind und die Sulfogruppe an den Benzolring I gebunden ist.

6. Farbstoffmischung gemäss einem der Ansprüche 1 bis 5, dadurch gekennzeichnet, dass im Farbstoff der Formel (1) R₁ und R₂ unabhängig voneinander Wasserstoff oder C₁-C₄-Alkyl sind und R₄ ein Rest der Formel 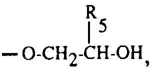 wobei R₅ Wasserstoff oder gegebenenfalls durch Hydroxy substituiertes C₁-C₄-Alkyl ist, oder im Farbstoff der Formel (1) R₁ Wasserstoff oder C₁-C₄-Alkyl, R₂ C₂-C₄-Alkyl und R₄ Wasserstoff ist.

7. Farbstoffmischung gemäss Anspruch 1, dadurch gekennzeichnet, dass sie als Farbstoff der Formel (1) mindestens einen Farbstoff der Formel 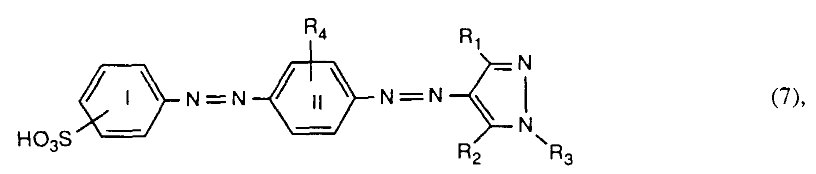 worin R₁ und R₂ unabhängig voneinander Methyl oder Aethyl sind, R₃ Wasserstoff, Methyl, Aethyl oder Phenyl, R₄ Wasserstoff oder ein Rest der Formel 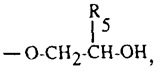 R₅ Methyl oder Aethyl ist und die Benzolringe I und II unabhängig voneinander gegebenenfalls durch Methyl, Methoxy, Acetylamino oder Chlor weitersubstituiert sind, enthält.

8. Farbstoffmischung gemäss einem der Ansprüche 1 bis 7, dadurch gekennzeichnet, dass sie mindestens einen Farbstoff der Formel (1) zusammen mit mindestens einem Farbstoff der Formeln (6), (8a), (8b), (9), (10) und (11): 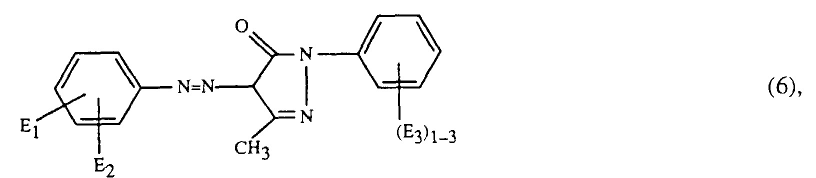 worin E₁ Wasserstoff oder Sulfo und E₂ Halogen oder Phenylaminosulfonyl ist, (E₃)₁₋₃ für 1 bis 3 Substituenten E₃ steht und E₃ Wasserstoff, Halogen oder Sulfo ist, 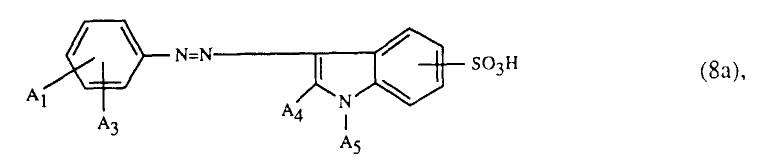 worin A₁ Wasserstoff, C₁₋₄-Alkyl, C₁₋₄-Alkoxy, C₂₋₄-Alkanoylamino oder Halogen, A₃ Phenylsulfonyl, A₄ C₁-C₄-Alkyl oder Phenyl und A₅ Wasserstoff oder C₁-C₈-Alkyl ist, 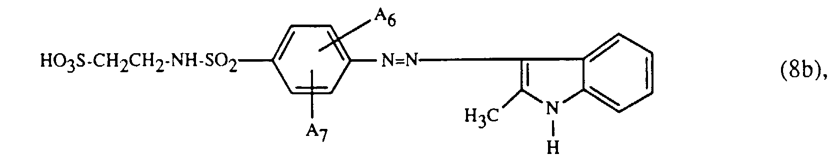 worin A₆ und A₇ Wasserstoff, C₁₋₄-Alkyl, C₁₋₄-Alkoxy, C₂₋₄-Alkanoylamino oder Halogen sind, 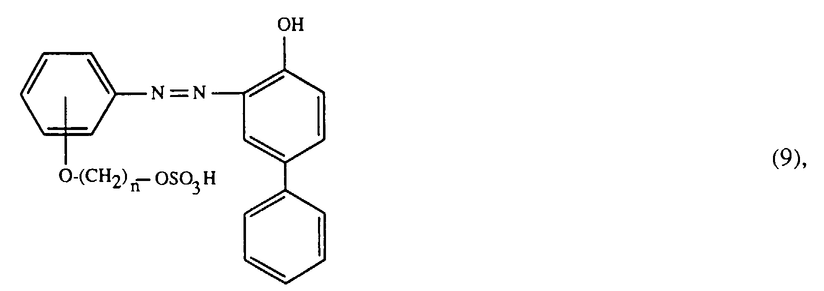 worin n die Zahl 1 bis 3 ist, 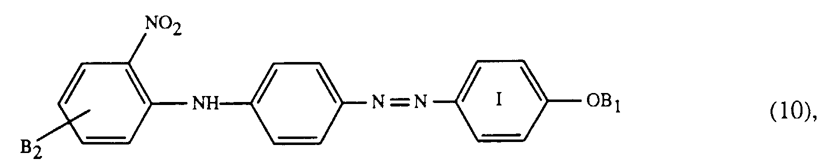 worin B₁ Wasserstoff oder gegebenenfalls durch C₁-C₄-Alkyl, C₁₋₄-Alkoxy oder Halogen substituiertes Phenylsulfonyl, B₂ Sulfo oder C₁-C₄-Alkylsulfonylaminosulfonyl ist und der Benzolring I gegebenenfalls durch C₁-C₄-Alkyl, C₁₋₄-Alkoxy oder Halogen substituiert ist, und 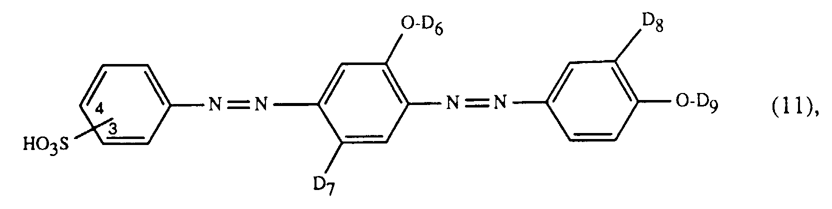 worin D₇ Wasserstoff oder Methyl, D₈ Wasserstoff oder Methyl und D₆ und D₉ unabhängig voneinander Wasserstoff, Methyl, Äthyl, β-Hydroxyäthyl, β-Hydroxypropyl, β-Hydroxybutyl oder α-Äthyl-β-hydroxyäthyl ist, und die Sulfogruppe in 3- oder 4-Stellung gebunden ist, enthält.

9. Farbstoffmischung gemäss einem der Ansprüche 1 bis 8, dadurch gekennzeichnet, dass sie einen Farbstoff der Formel (1) und mindestens einen Farbstoff der Formeln 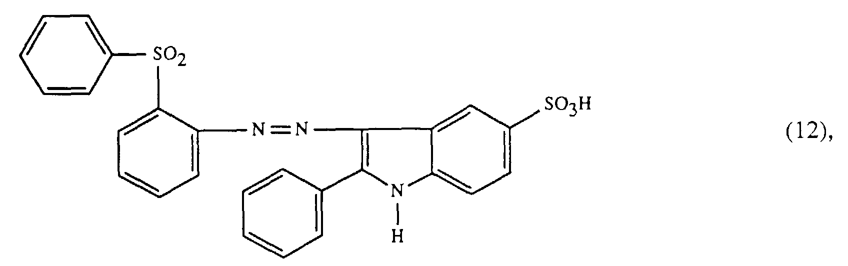 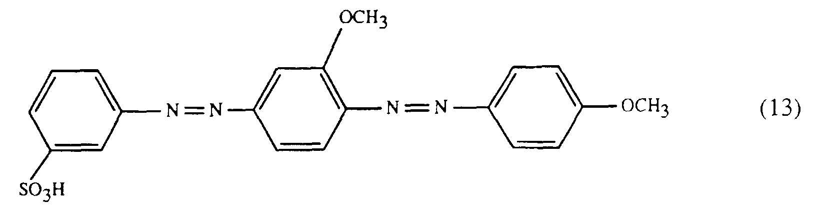 und 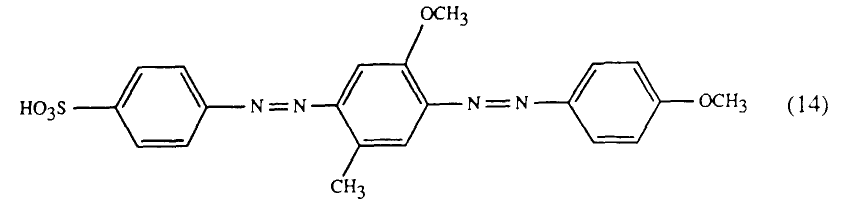 enthält.

10. Farbstoffmischung gemäss einem der Ansprüche 1 bis 9, dadurch gekennzeichnet, dass das Verhältnis der Farbstoffe der Formel (1) zu den Farbstoffen der Formeln (2) bis (6) 20:80 bis 80:20 und insbesondere 40:60 bis 60:40 ist.

11. Verfahren zum Färben und Bedrucken von natürlichen und synthetischen Polyamidfasermaterialien mit einer Farbstoffmischung, dadurch gekennzeichnet, dass man eine Farbstoffmischung gemäss einem der Ansprüche 1 bis 10 verwendet.

12. Verfahren zum Färben und Bedrucken von natürlichen und synthetischen Polyamidfasermaterialien unter Verwendung der Farbstoffmischung gemäss einem der Ansprüche 1 bis 10 in Kombination mit anderen Farbstoffen.

13. Verfahren gemäss Anspruch 12 zum Trichromie-Färben oder -Bedrucken, dadurch gekennzeichnet, dass man eine Farbstoffmischung gemäss einem der Ansprüche 1 bis 10 in Kombination mit mindestens einem roten Farbstoff und mindestens einem blauen Farbstoff verwendet.

## Patentansprüche (Patentansprüche für folgende(n) Vertragsstaat(en): ES)

1. Verfahren zur Herstellung von Farbstoffmischungen, dadurch gekennzeichnet, dass man mindestens einen Farbstoff der Formel 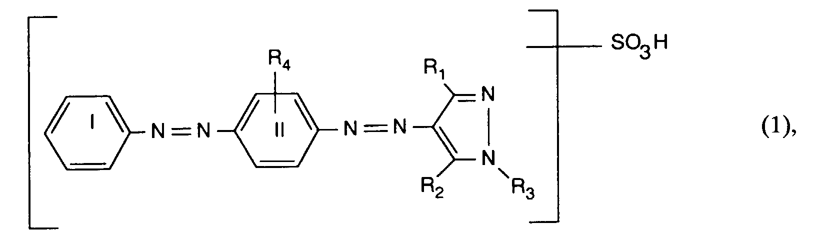 worin R₁ und R₂ unabhängig voneinander Wasserstoff oder gegebenenfalls substituiertes C₁-C₈-Alkyl oder Phenyl sind, R₃ Wasserstoff oder gegebenenfalls substituiertes C₁-C₈-Alkyl, C₅-C₇-Cycloalkyl oder Phenyl ist, R₄ Wasserstoff oder ein Rest der Formel 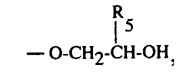 R₅ Wasserstoff oder gegebenenfalls substituiertes C₁-C₈-Alkyl oder Phenyl ist und die Benzolringe I und II gegebenenfalls weitersubstituiert sind, mit mindestens einem Farbstoff der Formeln (2) bis (6): 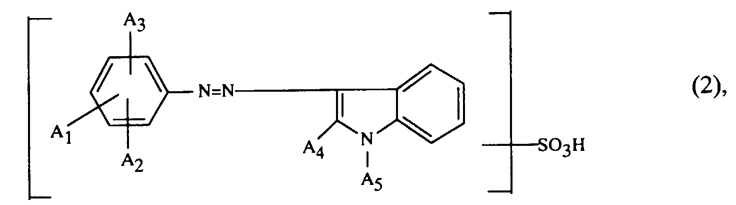 worin A₁ und A₂ Wasserstoff, Halogen, C₁₋₄-Alkoxy, C₂₋₄-Alkanoylamino oder gegebenenfalls substituiertes C₁₋₄-Alkyl, A₃ gegebenenfalls substituiertes Phenylsulfonyl, Naphthylsulfonyl oder C₁₋₄-Alkylaminosulfonyl, A₄ Wasserstoff, gegebenenfalls substituiertes C₁-C₄-Alkyl, Phenyl oder Naphthyl und A₅ Wasserstoff oder C₁-C₈-Alkyl ist, 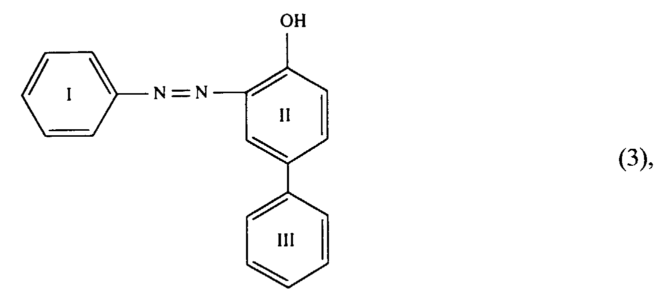 worin die Benzolringe I, II und III gegebenenfalls substituiert sind, 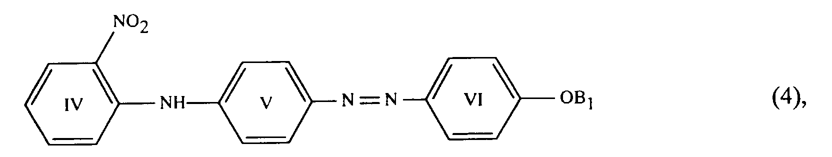 worin die Benzolringe IV, V und VI gegebenenfalls substituiert sind und B₁ Wasserstoff oder gegebenenfalls substituiertes Phenyl- oder Naphthylsulfonyl ist, 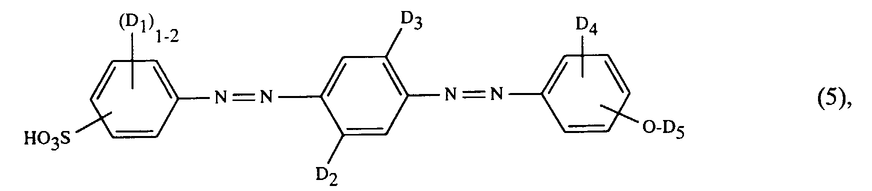 worin D₁, D₂ und D₃ Wasserstoff, C₁₋₄-Alkyl, C₁₋₄-Alkoxy, C₂₋₄-Hydroxyalkoxy, C₂-C₄-Alkanoylamino oder Carbamoyl und D₄ und D₅ Wasserstoff, C₁₋₄-Alkyl oder C₂₋₄-Hydroxylalkyl bedeuten und (D₁)₁₋₂ für einen oder zwei Substituenten D₁ steht, und 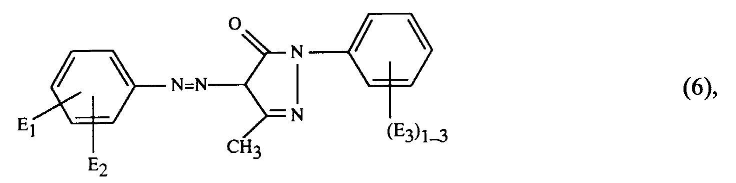 worin E₁ Wasserstoff, C₁₋₄-Alkyl, C₁₋₄-Alkoxy, C₂₋₄-Alkanoylamino, Sulfo oder Halogen, E₂ Wasserstoff, Halogen, Sulfo oder gegebenenfalls substituiertes Phenyl- oder Naphthylaminosulfonyl ist und (E₃)₁₋₃ für 1 bis 3 Substituenten E₃ steht und E₃ Wasserstoff, Halogen, C₁₋₄-Alkyl, C₁₋₄-Alkoxy oder Sulfo ist, mischt.

2. Verfahren gemäss Anspruch 1, dadurch gekennzeichnet, dass im Farbstoff der Formel (1) R₁ und R₂ unabhängig voneinander Wasserstoff, C₁-C₄-Alkyl oder Phenyl sind.

3. Verfahren gemäss einem der Ansprüche 1 und 2, dadurch gekennzeichnet, dass im Farbstoff der Formel (1) R₃ Wasserstoff, C₁-C₄-Alkyl oder Phenyl ist.

4. Verfahren gemäss einem der Ansprüche 1 bis 3, dadurch gekennzeichnet, dass im Farbstoff der Formel (1) R₄ Wasserstoff oder ein Rest der Formel 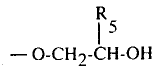 und R₅ Wasserstoff oder gegebenenfalls durch Hydroxy substituiertes C₁-C₄-Alkyl ist.

5. Verfahren gemäss einem der Ansprüche 1 bis 4, dadurch gekennzeichnet, dass im Farbstoff der Formel (1) R₁ und R₂ unabhängig voneinander Wasserstoff oder C₁-C₄-Alkyl sind, R₃ Wasserstoff, C₁-C₄-Alkyl oder Phenyl ist, R₄ Wasserstoff oder ein Rest der Formel 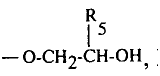 R₅ Wasserstoff oder gegebenenfalls durch Hydroxy substituiertes C₁-C₄-Alkyl ist, die Benzolringe I und II unabhängig voneinander gegebenenfalls durch C₁-C₄-Alkyl, C₁-C₄-Alkoxy, C₂-C₄-Alkanoylamino oder Halogen weitersubstituiert sind und die Sulfogruppe an den Benzolring I gebunden ist.

6. Verfahren gemäss einem der Ansprüche 1 bis 5, dadurch gekennzeichnet, dass im Farbstoff der Formel (1) R₁ und R₂ unabhängig voneinander Wasserstoff oder C₁-C₄-Alkyl sind und R₄ ein Rest der Formel 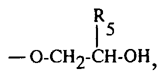 wobei R₅ Wasserstoff oder gegebenenfalls durch Hydroxy substituiertes C₁-C₄-Alkyl ist, oder im Farbstoff der Formel (1) R₁ Wasserstoff oder C₁-C₄-Alkyl, R₂ C₂-C₄-Alkyl und R₄ Wasserstoff ist.

7. Verfahren gemäss Anspruch 1, dadurch gekennzeichnet, dass als Farbstoff der Formel (1) mindestens ein Farbstoff der Formel 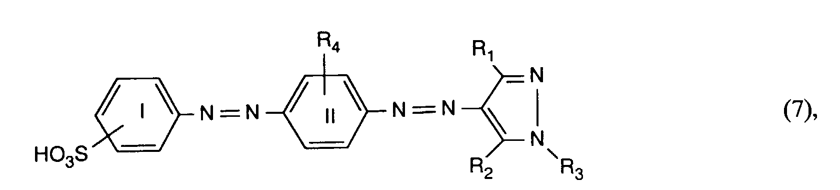 worin R₁ und R₂ unabhängig voneinander Methyl oder Aethyl sind, R₃ Wasserstoff, Methyl, Aethyl oder Phenyl, R₄ Wasserstoff oder ein Rest der Formel 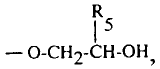 R₅ Methyl oder Aethyl ist und die Benzolringe I und II unabhängig voneinander gegebenenfalls durch Methyl, Methoxy, Acetylamino oder Chlor weitersubstituiert sind, verwendet wird.

8. Verfahren gemäss einem der Ansprüche 1 bis 7, dadurch gekennzeichnet, dass man mindestens einen Farbstoff der Formel (1) mit mindestens einem Farbstoff der Formeln (6), (8a), (8b), (9), (10) und (11): 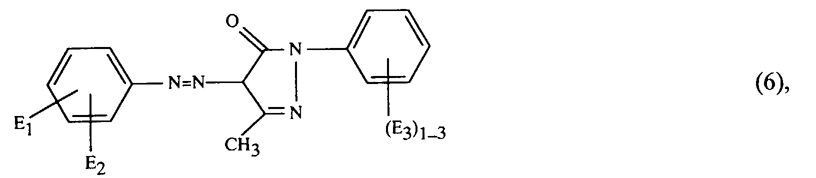 worin E₁ Wasserstoff oder Sulfo und E₂ Halogen oder Phenylaminosulfonyl ist, (E₃)₁₋₃ für 1 bis 3 Substituenten E₃ steht und E₃ Wasserstoff, Halogen oder Sulfo ist, 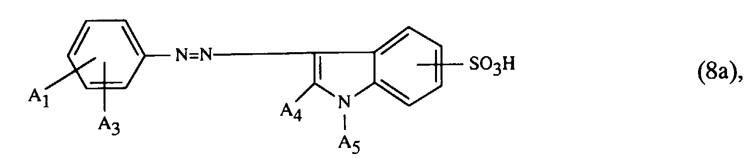 worin A₁ Wasserstoff, C₁₋₄-Alkyl, C₁₋₄-Alkoxy, C₂₋₄-Alkanoylamino oder Halogen, A₃ Phenylsulfonyl, A₄ C₁-C₄-Alkyl oder Phenyl und A₅ Wasserstoff oder C₁-C₈-Alkyl ist, 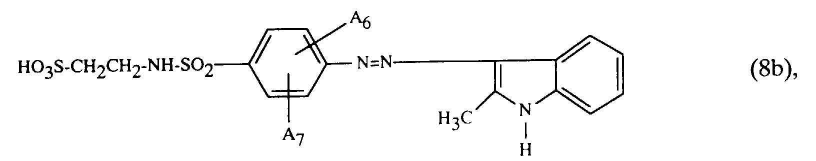 worin A₆ und A₇ Wasserstoff, C₁₋₄-Alkyl, C₁₋₄-Alkoxy, C₂₋₄-Alkanoylamino oder Halogen sind, 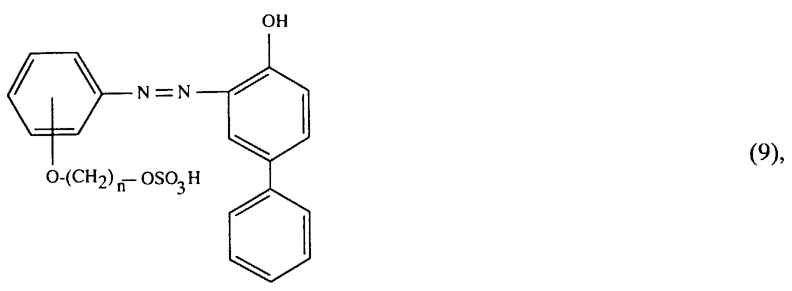 worin n die Zahl 1 bis 3 ist, 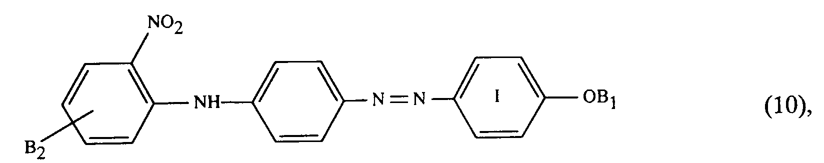 worin B₁ Wasserstoff oder gegebenenfalls durch C₁-C₄-Alkyl, C₁₋₄-Alkoxy oder Halogen substituiertes Phenylsulfonyl, B₂ Sulfo oder C₁-C₄-Alkylsulfonylaminosulfonyl ist und der Benzolring I gegebenenfalls durch C₁-C₄-Alkyl, C₁₋₄-Alkoxy oder Halogen substituiert ist, und 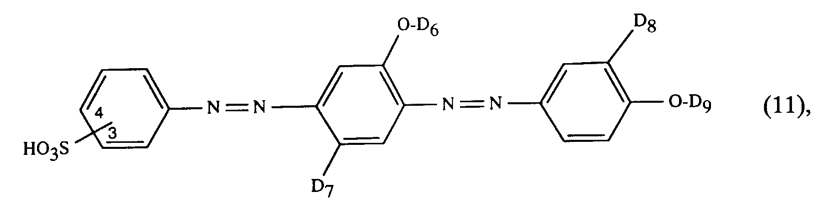 worin D₇ Wasserstoff oder Methyl, D₈ Wasserstoff oder Methyl und D₆ und D₉ unabhängig voneinander Wasserstoff, Methyl, Äthyl, β-Hydroxyäthyl, β-Hydroxypropyl, β-Hydroxybutyl oder α-Äthyl-β-hydroxyäthyl ist, und die Sulfogruppe in 3- oder 4-Stellung gebunden ist, mischt.

9. Verfahren gemäss einem der Ansprüche 1 bis 8, dadurch gekennzeichnet, dass man einen Farbstoff der Formel (1) mit mindestens einem Farbstoff der Formeln 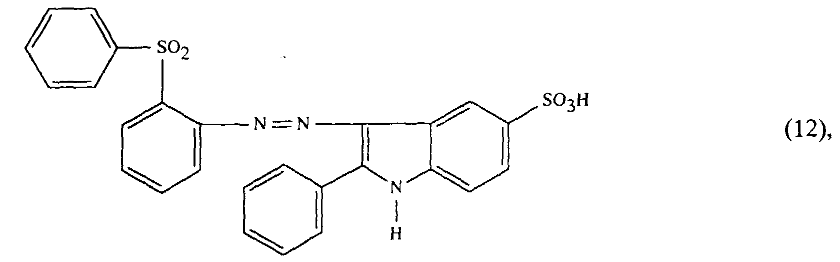 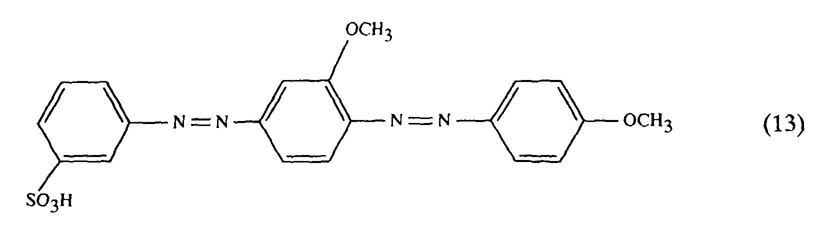 und 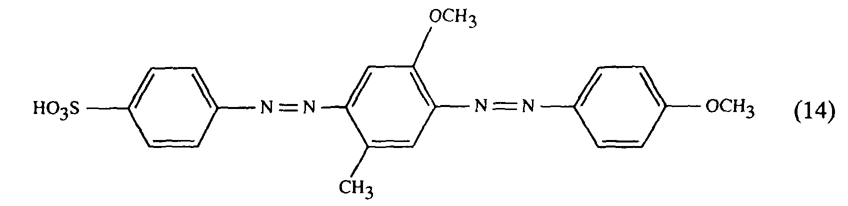 mischt.

10. Verfahren gemäss einem der Ansprüche 1 bis 9, dadurch gekennzeichnet, dass das Verhältnis der Farbstoffe der Formel (1) zu den Farbstoffen der Formeln (2) bis (6) 20:80 bis 80:20 und insbesondere 40:60 bis 60:40 ist.

11. Verfahren zum Färben und Bedrucken von natürlichen und synthetischen Polyamidfasermaterialien mit einer Farbstoffmischung, dadurch gekennzeichnet, dass man eine gemäss einem der Ansprüche 1 bis 10 erhaltene Farbstoffmischung verwendet.

12. Verfahren zum Färben und Bedrucken von natürlichen und synthetischen Polyamidfasermaterialien unter Verwendung der gemäss einem der Ansprüche 1 bis 10 erhaltenen Farbstoffmischung in Kombination mit anderen Farbstoffen.

13. Verfahren gemäss Anspruch 12 zum Trichromie-Färben oder -Bedrucken, dadurch gekennzeichnet, dass man eine gemäss einem der Ansprüche 1 bis 10 erhaltene Farbstoffmischung in Kombination mit mindestens einem roten Farbstoff und mindestens einem blauen Farbstoff verwendet.

## Claims (Claims for the following Contracting State(s): BE, CH, DE, FR, GB, IT, LU)

1. A dye mixture comprising at least one dye of the formula 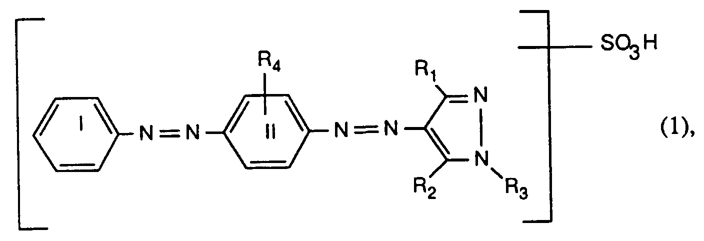 in which R₁ and R₂, independently of one another, are hydrogen or substituted or unsubstituted C₁-C₈alkyl or phenyl, R₃ is hydrogen or substituted or unsubstituted C₁-C₈alkyl, C₅-C₇cycloalkyl or phenyl, R₄ is hydrogen or a radical of the formula 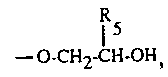 R₅ is hydrogen or substituted or unsubstituted C₁-C₈alkyl or phenyl, and benzene rings I and II may be further substituted, together with at least one dye of the formulae (2) to (6): 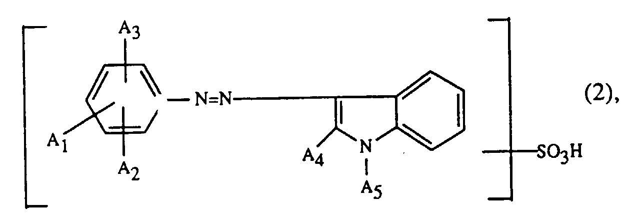 in which A₁ and A₂ are hydrogen, halogen, C₁₋₄alkoxy, C₂₋₄alkanoylamino or substituted or unsubstituted C₁₋₄alkyl, A₃ is substituted or unsubstituted phenylsulfonyl, naphthylsulfonyl or C₁₋₄alkylaminosulfonyl, A₄ is hydrogen, substituted or unsubstituted C₁-C₄alkyl, phenyl or naphthyl and A₅ is hydrogen or C₁-C₈alkyl, 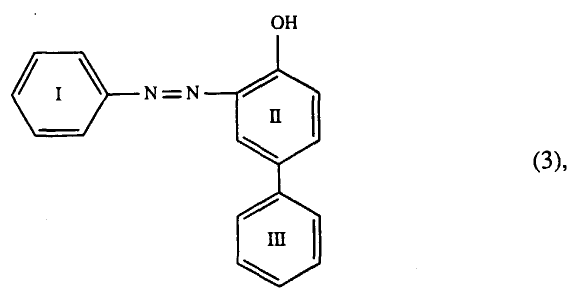 in which benzene rings I, II and III are substituted or unsubstituted, 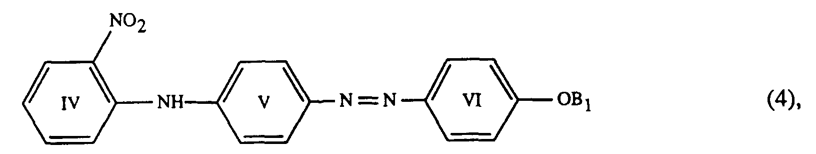 in which benzene rings IV, V and VI are substituted or unsubstituted and B₁ is hydrogen or substituted or unsubstituted phenyl- or naphthylsulfonyl, 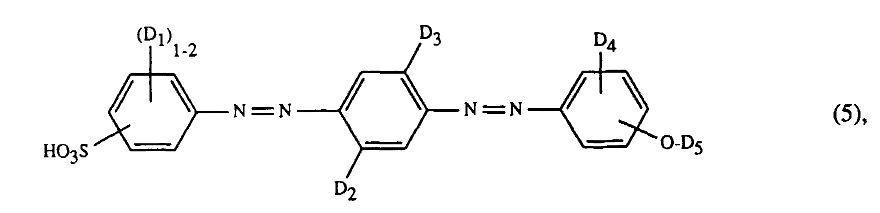 in which D₁, D₂ and D₃ are hydrogen, C₁₋₄alkyl, C₁₋₄alkoxy, C₂₋₄hydroxyalkoxy, C₂-C₄alkanoylamino or carbamoyl and D₄ and D₅ are hydrogen, C₁₋₄alkyl or C₂₋₄hydroxylalkyl and (D₁)₁₋₂ is one or two substituents D₁, and 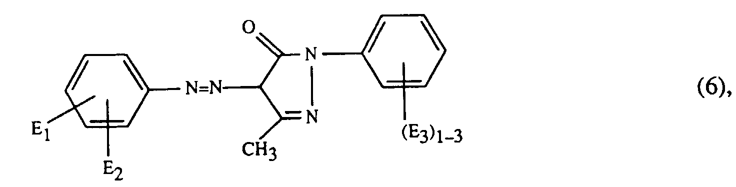 in which E₁ is hydrogen, C₁₋₄alkyl, C₁₋₄alkoxy, C₂₋₄alkanoylamino, sulfo or halogen, E₂ is hydrogen, halogen, sulfo or substituted or unsubstituted phenyl- or naphthylaminosulfonyl and (E₃)₁₋₃ is 1 to 3 substituents E₃ and E₃ is hydrogen, halogen, C₁₋₄alkyl, C₁₋₄alkoxy or sulfo.

2. A dye mixture according to claim 1, wherein in the dye of the formula (1) R₁ and R₂, independently of one another, are hydrogen, C₁-C₄alkyl or phenyl.

3. A dye mixture according to any one of claims 1 and 2, wherein in the dye of the formula (1) R₃ is hydrogen, C₁-C₄alkyl or phenyl.

4. A dye mixture according to any one of claims 1 to 3, wherein in the dye of the formula (1) R₄ is hydrogen or a radical of the formula 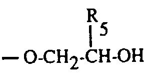 and R₅ is hydrogen or unsubstituted or hydroxyl-substituted C₁-C₄alkyl.

5. A dye mixture according to any one of claims 1 to 4, wherein in the dye of the formula (1) R₁ and R₂, independently of one another, are hydrogen or C₁-C₄alkyl, R₃ is hydrogen, C₁-C₄alkyl or phenyl, R₄ is hydrogen or a radical of the formula 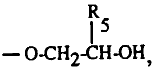 R₅ is hydrogen or unsubstituted or hydroxyl-substituted C₁-C₄alkyl, benzene rings I and II, independently of one another, may be further substituted by C₁-C₄alkyl, C₁-C₄alkoxy, C₂-C₄alkanoylamino or halogen and the sulfo group is bound to benzene ring I.

6. A dye mixture according to any one of claims 1 to 5, wherein in the dye of the formula (1) R₁ and R₂, independently of one another, are hydrogen or C₁-C₄alkyl and R₄ is a radical of the formula 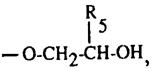 in which R₅ is hydrogen or unsubstituted or hydroxyl-substituted C₁-C₄alkyl, or in the dye of the formula (1) R₁ is hydrogen or C₁-C₄alkyl, R₂ is C₂-C₄alkyl and R₄ is hydrogen.

7. A dye mixture according to claim 1, which comprises, as dye of the formula (1), at least one dye of the formula 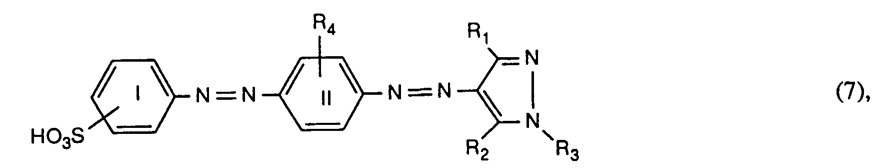 in which R₁ and R₂, independently of one another, are methyl or ethyl, R₃ is hydrogen, methyl, ethyl or phenyl, R₄ is hydrogen or a radical of the formula 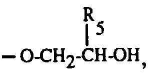 R₅ is methyl or ethyl and benzene rings I and II, independently of one another, may be further substituted by methyl, methoxy, acetylamino or chlorine.

8. A dye mixture according to any one of claims 1 to 7, which comprises at least one dye of the formula (1) together with at least one dye of the formulae (6), (8a), (8b), (9), (10) and (11): 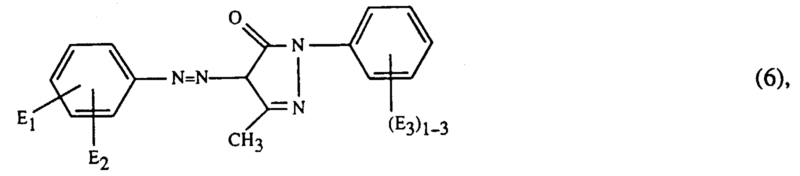 in which E₁ is hydrogen or sulfo and E₂ is halogen or phenylaminosulfonyl, (E₃)₁₋₃ is 1 to 3 substituents E₃ and E₃ is hydrogen, halogen or sulfo, 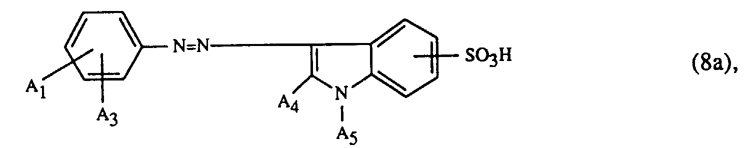 in which A₁ is hydrogen, C₁₋₄alkyl, C₁₋₄alkoxy, C₂₋₄alkanoylamino or halogen, A₃ is phenylsulfonyl, A₄ is C₁-C₄alkyl or phenyl and A₅ is hydrogen or C₁-C₈alkyl, 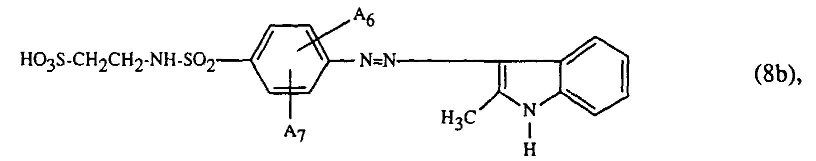 in which A₆ and A₇ are hydrogen, C₁₋₄alkyl, C₁₋₄alkoxy, C₂₋₄alkanoylamino or halogen, 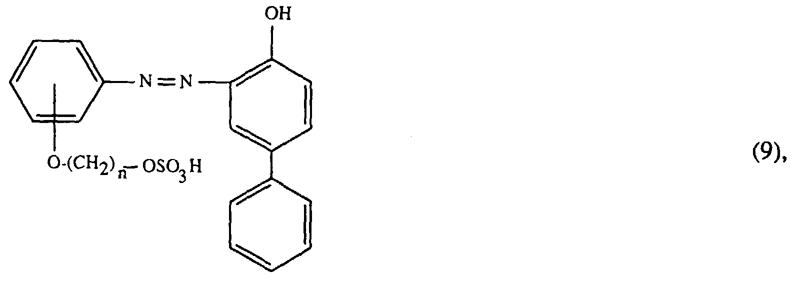 in which n is the number 1 to 3, 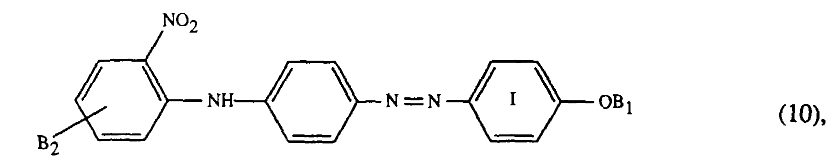 in which B₁ is hydrogen or unsubstituted or C₁-C₄alkyl-, C₁₋₄alkoxy- or halogen-substituted phenylsulfonyl, B₂ is sulfo or C₁-C₄alkylsulfonylaminosulfonyl and benzene ring I may be substituted by C₁-C₄alkyl, C₁₋₄alkoxy or halogen, and 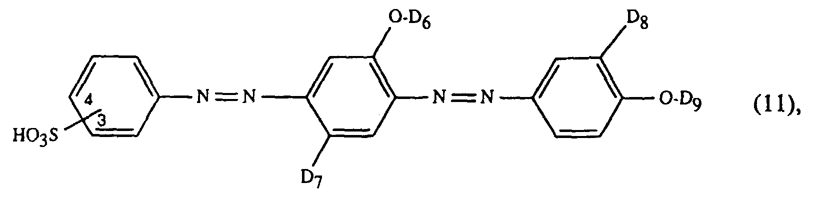 in which D₇ is hydrogen or methyl, D₈ is hydrogen or methyl and D₆ and D₉, independently of one another, are hydrogen, methyl, ethyl, β-hydroxyethyl, β-hydroxypropyl, β-hydroxybutyl or α-ethyl-β-hydroxyethyl, and the sulfo group is bound in the 3 or 4 position.

9. A dye mixture according to any one of claims 1 to 8, which comprises a dye of the formula (1) and at least one dye of the formulae 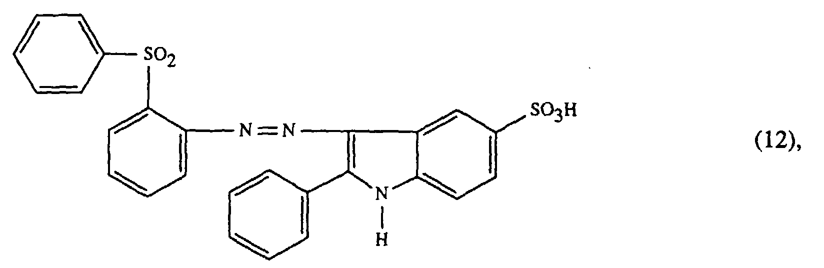 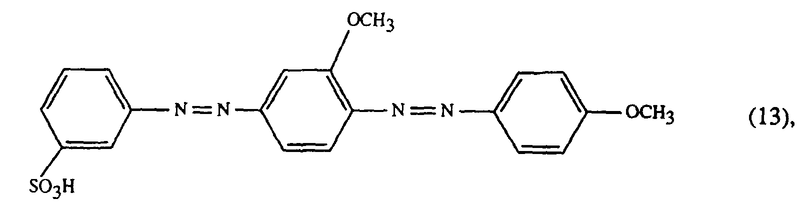 and

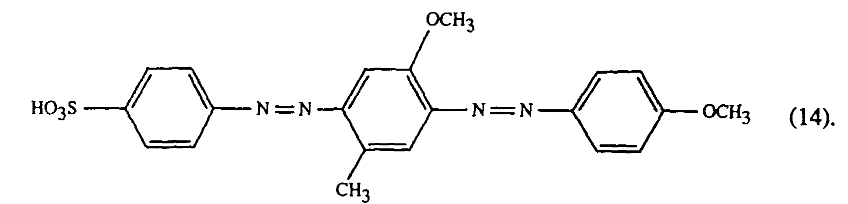

10. A dye mixture according to any one of claims 1 to 9, in which the ratio of the dyes of the formula (1) to the dyes of the formulae (2) to (6) is 20:80 to 80:20 and in particular 40:60 to 60:40.

11. A process for the dyeing and printing of natural and synthetic polyamide fibre materials with a dye mixture, wherein a dye mixture according to any one of claims 1 to 10 is used.

12. A process for the dyeing and printing of natural and synthetic polyamide fibre materials using a dye mixture according to any one of claims 1 to 10 in combination with other dyes.

13. A process according to claim 12 for trichromatic dyeing or printing, wherein a dye mixture according to any one of claims 1 to 10 is used in combination with at least one red dye and at least one blue dye.

## Claims (Claims for the following Contracting State(s): ES)

1. A process for the preparation of a dye mixture, characterized in that at least one dye of the formula 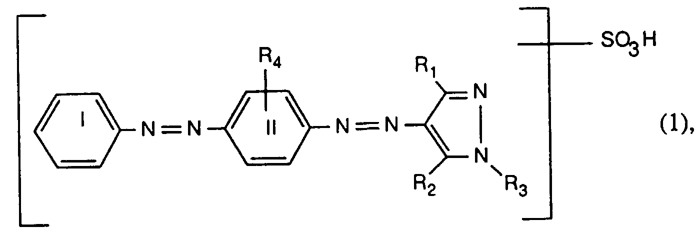 in which R₁ and R₂, independently of one another, are hydrogen or substituted or unsubstituted C₁-C₈alkyl or phenyl, R₃ is hydrogen or substituted or unsubstituted C₁-C₈alkyl, C₅-C₇cycloalkyl or phenyl, R₄ is hydrogen or a radical of the formula 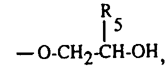 R₅ is hydrogen or substituted or unsubstituted C₁-C₈alkyl or phenyl, and benzene rings I and II may be further substituted, is mixed with at least one dye of the formulae (2) to (6): 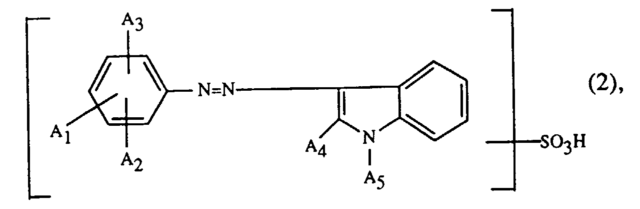 in which A₁ and A₂ are hydrogen, halogen, C₁₋₄alkoxy, C₂₋₄alkanoylamino or substituted or unsubstituted C₁₋₄alkyl, A₃ is substituted or unsubstituted phenylsulfonyl, naphthylsulfonyl or C₁₋₄alkylaminosulfonyl, A₄ is hydrogen, substituted or unsubstituted C₁-C₄alkyl, phenyl or naphthyl and A₅ is hydrogen or C₁-C₈alkyl, 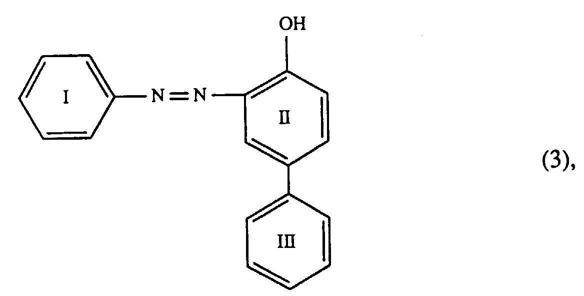 in which benzene rings I, II and III are substituted or unsubstituted, 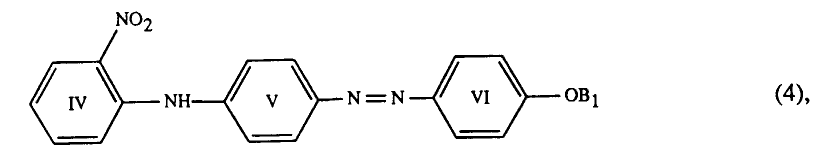 in which benzene rings IV, V and VI are substituted or unsubstituted and B₁ is hydrogen or substituted or unsubstituted phenyl- or naphthylsulfonyl, 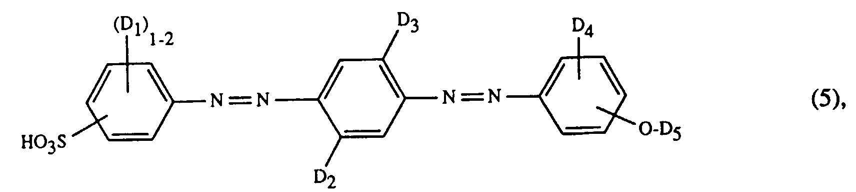 in which D₁, D₂ and D₃ are hydrogen, C₁₋₄alkyl, C₁₋₄alkoxy, C₂₋₄hydroxyalkoxy, C₂-C₄alkanoylamino or carbamoyl and D₄ and D₅ are hydrogen, C₁₋₄alkyl or C₂₋₄hydroxylalkyl and (D₁)₁₋₂ is one or two substituents D₁, and 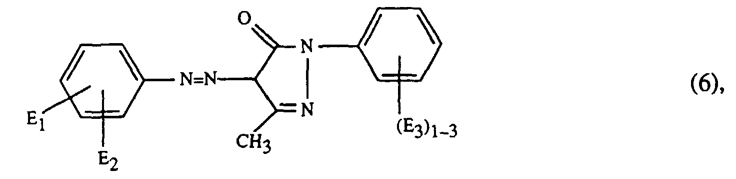 in which E₁ is hydrogen, C₁₋₄alkyl, C₁₋₄alkoxy, C₂₋₄alkanoylamino, sulfo or halogen, E₂ is hydrogen, halogen, sulfo or substituted or unsubstituted phenyl- or naphthylaminosulfonyl and (E₃)₁₋₃ is 1 to 3 substituents E₃ and E₃ is hydrogen, halogen, C₁₋₄alkyl, C₁₋₄alkoxy or sulfo.

2. A process according to claim 1, characterized in that in the dye of the formula (1) R₁ and R₂, independently of one another, are hydrogen, C₁-C₄alkyl or phenyl.

3. A process according to any one of claims 1 and 2, characterized in that in the dye of the formula (1) R₃ is hydrogen, C₁-C₄alkyl or phenyl.

4. A process according to any one of claims 1 to 3, characterized in that in the dye of the formula (1) R₄ is hydrogen or a radical of the formula 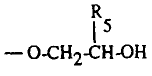 and R₅ is hydrogen or unsubstituted or hydroxyl-substituted C₁-C₄alkyl.

5. A process according to any one of claims 1 to 4, characterized in that in the dye of the formula (1) R₁ and R₂, independently of one another, are hydrogen or C₁-C₄alkyl, R₃ is hydrogen, C₁-C₄alkyl or phenyl, R₄ is hydrogen or a radical of the formula 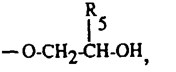 R₅ is hydrogen or unsubstituted or hydroxyl-substituted C₁-C₄alkyl, benzene rings I and II, independently of one another, may be further substituted by C₁-C₄alkyl, C₁-C₄alkoxy, C₂-C₄alkanoylamino or halogen and the sulfo group is bound to benzene ring I.

6. A process according to any one of claims 1 to 5, characterized in that in the dye of the formula (1) R₁ and R₂, independently of one another, are hydrogen or C₁-C₄alkyl and R₄ is a radical of the formula 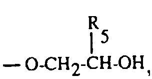 in which R₅ is hydrogen or unsubstituted or hydroxyl-substituted C₁-C₄alkyl, or in the dye of the formula (1) R₁ is hydrogen or C₁-C₄alkyl, R₂ is C₂-C₄alkyl and R₄ is hydrogen.

7. A process according to claim 1, characterized in that, as dye of the formula (1), at least one dye of the formula 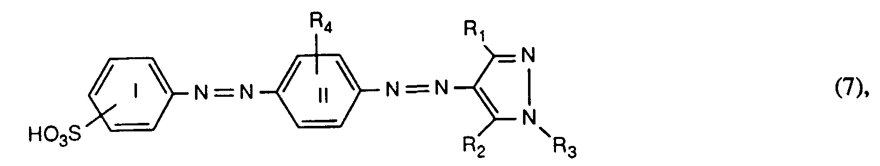 in which R₁ and R₂, independently of one another, are methyl or ethyl, R₃ is hydrogen, methyl, ethyl or phenyl, R₄ is hydrogen or a radical of the formula 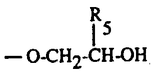 R₅ is methyl or ethyl and benzene rings I and II, independently of one another, may be further substituted by methyl, methoxy, acetylamino or chlorine, is used.

8. A process according to any one of claims I to 7, characterized in that at least one dye of the formula (1) is mixed with at least one dye of the formulae (6), (8a), (8b), (9), (10) and (11): 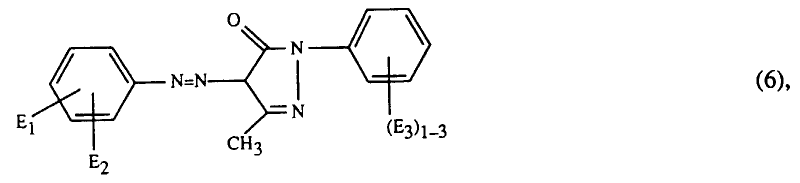 in which E₁ is hydrogen or sulfo and E₂ is halogen or phenylaminosulfonyl, (E₃)₁₋₃ is 1 to 3 substituents E₃ and E₃ is hydrogen, halogen or sulfo, 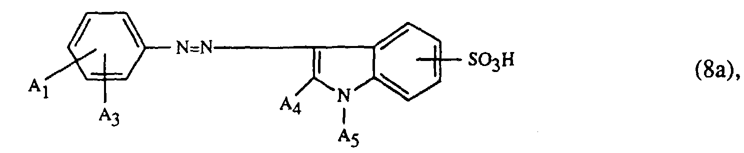 in which A₁ is hydrogen, C₁₋₄alkyl, C₁₋₄alkoxy, C₂₋₄alkanoylamino or halogen, A₃ is phenylsulfonyl, A₄ is C₁-C₄alkyl or phenyl and A₅ is hydrogen or C₁-C₈alkyl, 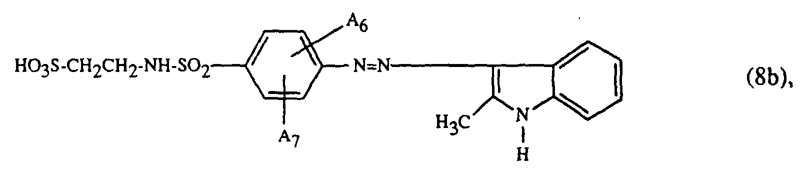 in which A₆ and A₇ are hydrogen, C₁₋₄alkyl, C₁₋₄alkoxy, C₂₋₄alkanoylnamino or halogen, 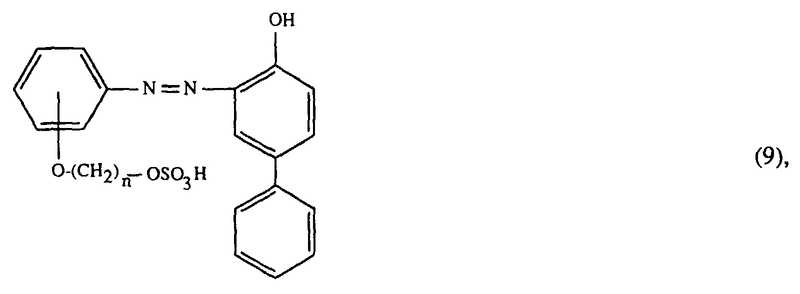 in which n is the number 1 to 3, 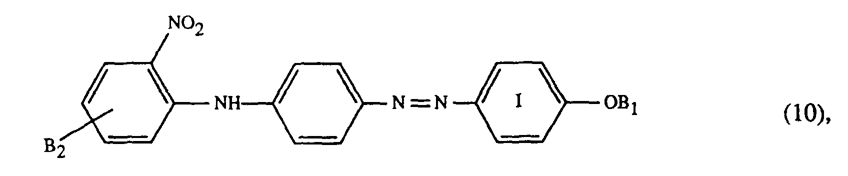 in which B₁ is hydrogen or unsubstituted or C₁-C₄alkyl-, C₁₋₄alkoxy- or halogen-substituted phenylsulfonyl, B₂ is sulfo or C₁-C₄alkylsulfonylaminosulfonyl and benzene ring I may be substituted by C₁-C₄alkyl, C₁₋₄alkoxy or halogen, and 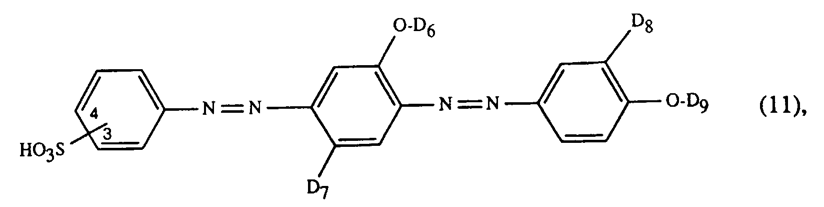 in which D₇ is hydrogen or methyl, D₈ is hydrogen or methyl and D₆ and D₉, independently of one another, are hydrogen, methyl, ethyl, β-hydroxyethyl, β-hydroxypropyl, β-hydroxybutyl or α-ethyl-β-hydroxyethyl, and the sulfo group is bound in the 3 or 4 position.

9. A process according to any one of claims 1 to 8, characterized in that a dye of the formula (1) is mixed with at least one dye of the formulae 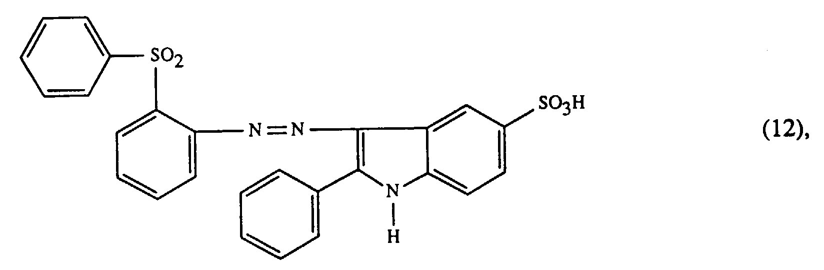 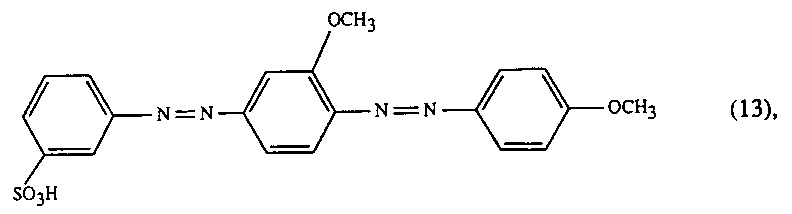 and

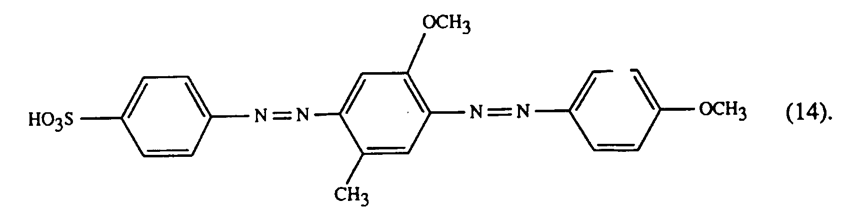

10. A process according to any one of claims 1 to 9, characterized in that the ratio of the dyes of the formula (1) to the dyes of the formulae (2) to (6) is 20:80 to 80:20 and in particular 40:60 to 60:40.

11. A process for the dyeing and printing of natural and synthetic polyamide fibre materials with a dye mixture, characterized in that a dye mixture obtained according to any one of claims 1 to 10 is used.

12. A process for the dyeing and printing of natural and synthetic polyamide fibre materials using a dye mixture obtained according to any one of claims 1 to 10 in combination with other dyes.

13. A process according to claim 12 for trichromatic dyeing or printing, wherein a dye mixture obtained according to any one of claims 1 to 10 is used in combination with at least one red dye and at least one blue dye.

## Revendications (Revendications pour l'(les) Etat(s) contractant(s) suivant(s): BE, CH, DE, FR, GB, IT, LU)

1. Mélange de colorants, caractérisé en ce qu'il contient au moins un colorant de formule 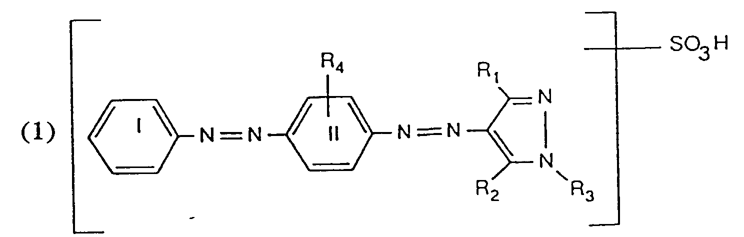 dans laquelle R₁ et R₂ représentent, indépendamment l'un de l'autre, un atome d'hydrogène ou un groupe alkyle en C₁₋₈ ou phényle éventuellement substitué, R₃ est un atome d'hydrogène ou un groupe alkyle en C₁₋₈, cycloalkyle en C₅₋₇ ou phényle éventuellement substitués, R₄ représente un atome d'hydrogène ou un résidu de formule -O-CH₂-CH(R₅)-OH, R₅ représente un atome d'hydrogène ou un groupe alkyle en C₁₋₈ ou phényle éventuellement substitués, et les noyaux benzéniques I et II sont éventuellement substitués à leur tour,
en conjonction avec au moins un colorant de formule (2) à (6) 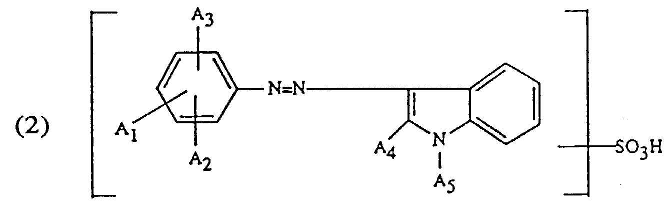 dans laquelle A₁ et A₂ représentent un atome d'hydrogène ou d'halogène, un résidu alcoxy en C₁₋₄, alcanoylamino en C₂₋₄ ou un groupe alkyle en C₁₋₄ pouvant être substitué, A₃ est un groupe phénylsulfonyle, naphtylsulfonyle ou (alkyle en C₁₋₄)-aminosulfonyle éventuellement substitués, A₄ est un atome d'hydrogène, un groupe alkyle en C₁₋₄, phényle ou naphtyle éventuellement substitués, et A₅ représente un atome d'hydrogène ou un groupe alkyle en C₁₋₈, 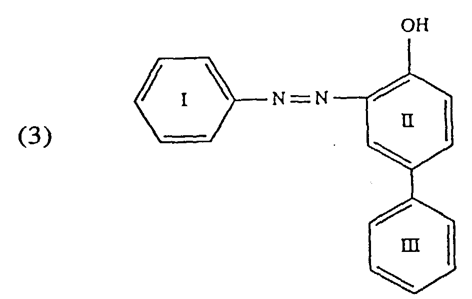 dans laquelle les noyaux benzéniques I, II et III sont éventuellement substitués, 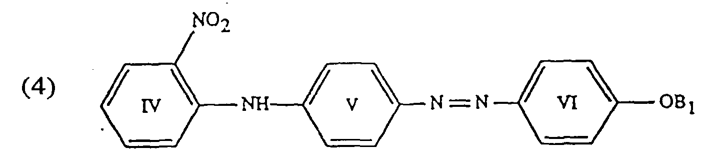 dans laquelle les noyaux benzéniques IV, V et VI sont éventuellement substitués, et B₁ représente un atome d'hydrogène ou un groupe phénylsulfonyle ou naphtylsulfonyle éventuellement substitués, 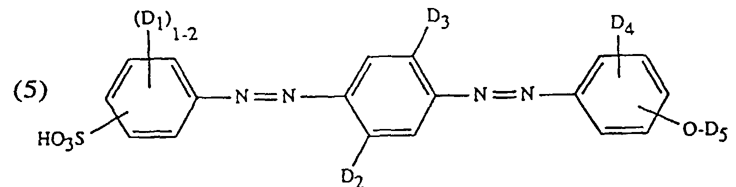 dans laquelle D₁, D₂ et D₃ sont des atomes d'hydrogène, des résidus alkyle en C₁₋₄, alcoxy en C₁₋₄, hydroxyalcoxy en C₂₋₄, alcanoylamino en C₂₋₄ ou carbamoyle et D₄ et D₅ représentent un atome d'hydrogène, un groupe alkyle en C₁₋₄ ou hydroxyalkyle en C₂₋₄, et (D₁)₁₋₂ représente un ou deux substituants D₁, et 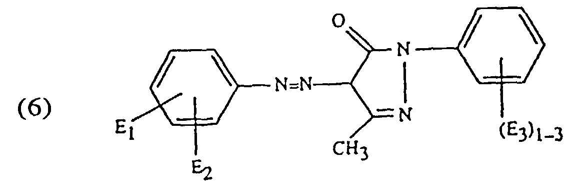 où E₁ est un atome d'hydrogène, un résidu alkyle en C₁₋₄, alcoxy en C₁₋₄, alcanoylamino en C₂₋₄, sulfo ou halogéno, E₂ est un atome d'hydrogène ou d'halogène, un groupe sulfo ou un groupe phénylsulfonyle ou naphtylsulfonyle éventuellement substitués, et (E₃)₁₋₃ représente de 1 à 3 substituants E₃, où E₃ est un atome d'hydrogène ou d'halogène, un alkyle en C₁₋₄, alcoxy en C₁₋₄ ou sulfo.

2. Mélange de colorants conforme à la revendication 1, caractérisé en ce que, dans le colorant de formule (1), R₁ et R₂ représentent, indépendamment l'un de l'autre, un atome d'hydrogène, un groupe alkyle en C₁₋₄ ou phényle.

3. Mélange de colorants conforme à une des revendications 1 et 2, caractérisé en ce que, dans le colorant de formule (1), R₃ représente un atome d'hydrogène, un résidu alkyle en C₁₋₄ ou un résidu phényle.

4. Mélange de colorants conforme à une des revendications 1 à 3, caractérisé en ce que, dans le colorant de formule (1), R₄ représente un atome d'hydrogène ou un résidu de formule -O-CH₂-CH(R₅)-OH et R₅ est un atome d'hydrogène ou un groupe alkyle en C₁₋₄ éventuellement hydroxylé.

5. Mélange de colorants conforme à une des revendications 1 à 4, caractérisé en ce que, dans le colorant de formule (1), R₁ et R₂ représentent, indépendamment l'un de l'autre, un atome d'hydrogène ou un groupe alkyle en C₁₋₄, R₃ représente un atome d'hydrogène, un groupe alkyle en C₁₋₄ ou phényle, R₄ est un atome d'hydrogène ou un résidu de formule -O-CH₂-CH(R₅)-OH où R₅ est un atome d'hydrogène ou un groupe alkyle en C₁₋₄ éventuellement hydroxylé, les noyaux benzéniques I et II sont substitués à leur tour indépendamment par un résidu alkyle en C₁₋₄, alcoxy en C₁₋₄, alcanoylamino en C₂₋₄ ou halogéno, et en ce que le groupe sulfo est lié au noyau benzénique I.

6. Mélange de colorants conforme à une des revendications 1 à 5, caractérisé en ce que, dans le colorant de formule (1), R₁ et R₂ représentent, indépendamment l'un de l'autre, un atome d'hydrogène ou un groupe alkyle en C₁₋₄, et R₄ est un résidu de formule -O-CH₂-CH(R₅)-OH où R₅ est un atome d'hydrogène ou un groupe alkyle en C₁₋₄ éventuellement hydroxylé, ou en ce que, dans le colorant de formule (1), R₁ est un atome d'hydrogène ou un groupe alkyle en C₁₋₄, R₂ est un groupe alkyle en C₂₋₄, et R₄ est un atome d'hydrogène.

7. Mélange de colorants conforme à la revendication 1, caractérisé en ce que qu'il contient, comme colorant de formule (1), au moins un colorant de formule 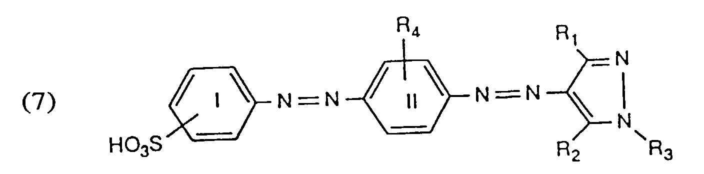 dans laquelle R₁ et R₂ représentent, indépendamment l'un de l'autre, un groupe méthyle ou éthyle, R₃ est un atome d'hydrogène, un résidu méthyle, éthyle ou phényle, R₄ est un atome d'hydrogène ou un résidu de formule -O-CH₂-CH(R₅)-OH, R₅ est un groupe méthyle ou éthyle et les noyaux benzéniques I et II peuvent être substitués, indépendamment l'un de l'autre, par un résidu méthyle, méthoxy, acétylamino ou chloro.

8. Mélange de colorants conforme à une des revendications 1 à 7, caractérisé en ce qu'il contient au moins un colorant de formule (1) en conjonction avec au moins un des colorants de formule (6), (8a), (8b), (10) et (11) : 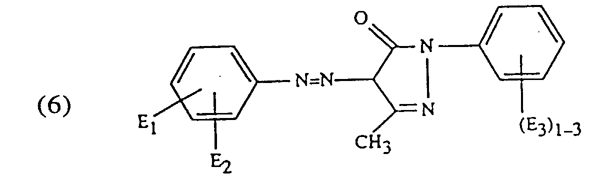 dans laquelle E₁ représente un atome d'hydrogène ou un groupe sulfo et E₂ représente un atome d'halogène ou un résidu phénylaminosulfonyle, (E₃)₁₋₃ représente de 1 à 3 substituants E₃ et E₃ représente un atome d'hydrogène ou d'halogène ou un résidu sulfo; 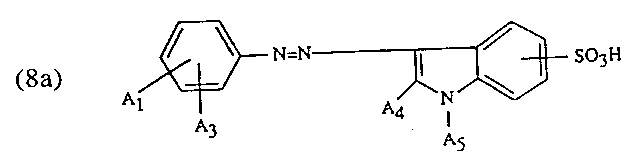 dans laquelle A₁ est un atome d'hydrogène, un groupe alkyle en C₁₋₄, alcoxy en C₁₋₄, alcanoylamino en C₂₋₄ ou halogéno, A₃ est un groupe phénylsulfonyle, A₄ un groupe alkyle en C₁₋₄ ou phényle et A₅ un atome d'hydrogène ou un groupe alkyle en C₁₋₈; 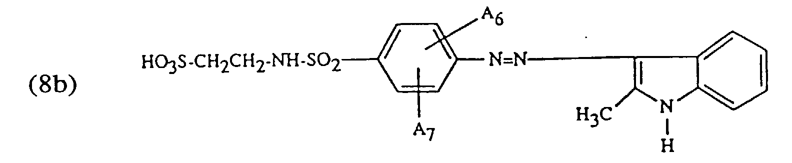 dans laquelle A₆ et A₇ représentent un atome d'hydrogène, un groupe alkyle en C₁₋₄, alcoxy en C₁₋₄, alcanoylamino ou halogéno; 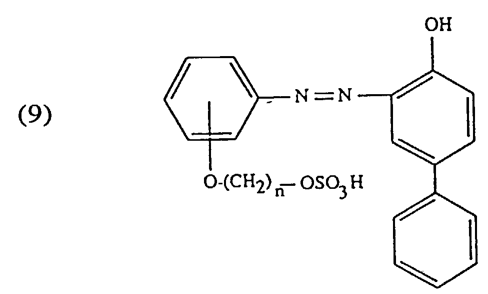 où n vaut entre 1 et 3; 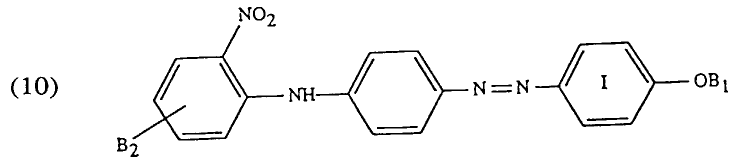 dans laquelle B₁ est un atome d'hydrogène ou un groupe phénylsulfonyle pouvant être substitué par un résidu alkyle en C₁₋₄, alcoxy en C₁₋₄ ou halogéno, B₂ est un groupe sulfo ou (alkyle en C₁₋₄)-sulfonylaminosulfonyle et le noyau benzénique I peut être substitué par un résidu alkyle en C₁₋₄, alcoxy en C₁₋₄ ou halogéno; 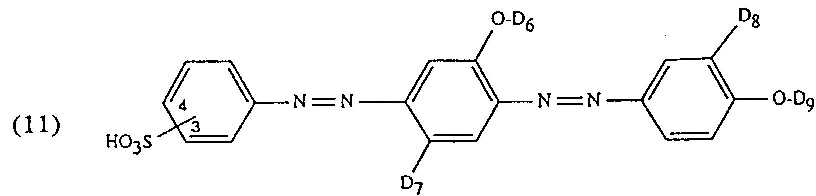 dans laquelle D₇ est un atome d'hydrogène ou un groupe méthyle, D₈ est un atome d'hydrogène ou un groupe méthyle et D₆ et D₉ représentent, indépendamment l'un de l'autre, un atome d'hydrogène, un résidu méthyle, éthyle, β-hydroxyéthyle, β-hydroxypropyle, β-hydroxybutyle ou α-éthyl-β-hydroxyéthyle, et le groupe sulfo est lié en position 3 ou 4 .

9. Mélange de colorants conforme à une des revendications 1 à 8, caractérisé en ce qu'ils contient un colorant de formule (1) et au moins un colorant de formule 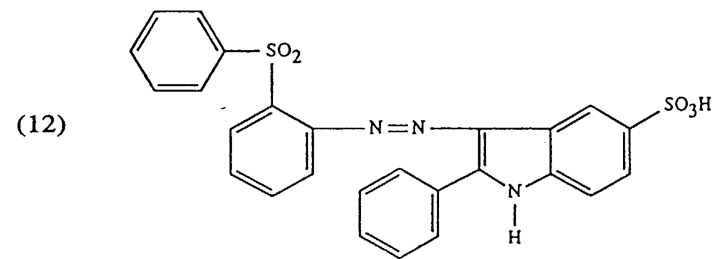 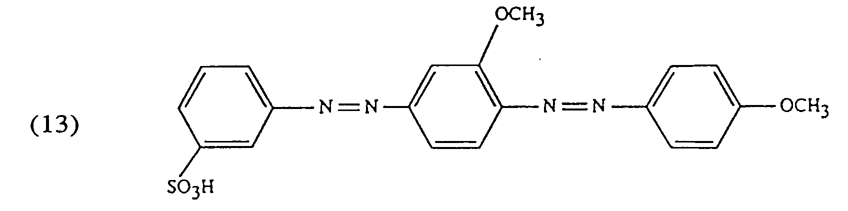 et

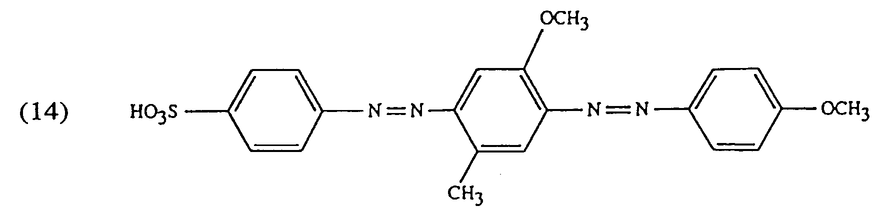

10. Mélange de colorants conforme à une des revendications 1 à 9, caractérisé en ce que le rapport des colorants de formule (1) aux colorants de formule (2) à (6) est compris entre 20:80 et 80:20, et en particulier entre 40:60 et 60:40.

11. Procédé pour la teinture et l'impression de matériaux fibreux en polyamide naturel ou synthétique avec un mélange de colorants, caractérisé en ce que l'on utilise un mélange de colorants conforme à une des revendications 1 à 10.

12. Procédé pour la teinture et l'impression de matériaux fibreux en polyamide naturel ou synthétique utilisant un mélange de colorants conforme à une des revendications 1 à 20 en combinaison avec d'autres colorants.

13. Procédé conforme à la revendication 12 pour la teinture ou l'impression en trichromie, caractérisé en ce que l'on utilise un mélange de colorants conforme à une des revendications 1 à 10 en combinaison avec au moins un colorant rouge et au moins un colorant bleu.

## Revendications (Revendications pour l'(les) Etat(s) contractant(s) suivant(s): ES)

1. Procédé pour la préparation de mélanges de colorants, caractérisé en ce que l'on mélange au moins un colorant de formule 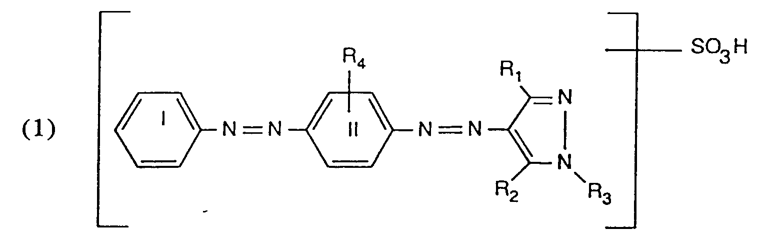 dans laquelle R₁ et R₂ représentent, indépendamment l'un de l'autre, un atome d'hydrogène ou un groupe alkyle en C₁₋₈ ou phényle éventuellement substitués, R₃ est un atome d'hydrogène ou un groupe alkyle en C₁₋₈, cycloalkyle en C₅₋₇ ou phényle éventuellement substitués, R₄ représente un atome d'hydrogène ou un résidu de formule -O-CH₂-CH(R₅)-OH, R₅ représente un atome d'hydrogène ou un groupe alkyle en C₁₋₈ ou phényle éventuellement substitués, et les noyaux benzéniques I et II sont éventuellement substitués à leur tour,
avec au moins un colorant de formule (2) à (6) 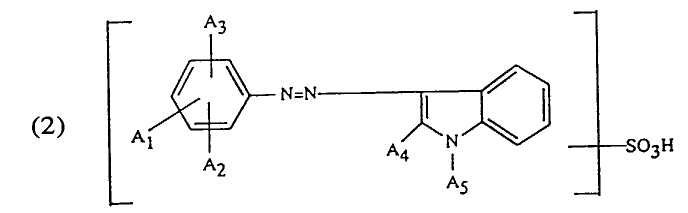 dans laquelle A₁ et A₂ représentent un atome d'hydrogène ou d'halogène, un résidu alcoxy en C₁₋₄, alcanoylamino en C₂₋₄ ou un groupe alkyle en C₁₋₄ pouvant être substitué, A₃ est un groupe phénylsulfonyle, naphtylsulfonyle ou (alkyle en C₁₋₄)-aminosulfonyle éventuellement substitués, A₄ est un atome d'hydrogène, un groupe alkyle en C₁₋₄, phényle ou naphtyle éventuellement substitués, et A₅ représente un atome d'hydrogène ou un groupe alkyle en C₁₋₈, 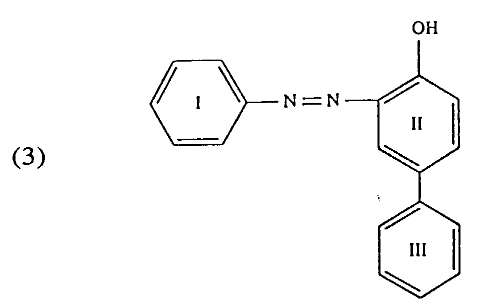 dans laquelle les noyaux benzéniques I, II et III sont éventuellement substitués, 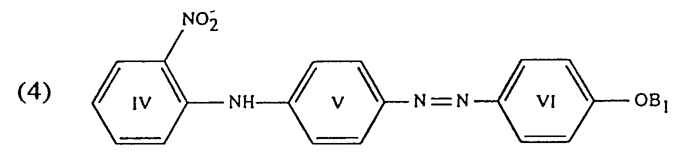 dans laquelle les noyaux benzéniques IV, V et VI sont éventuellement substitués, et B₁ représente un atome d'hydrogène ou un groupe phénylsulfonyle ou naphtylsulfonyle éventuellement substitués, 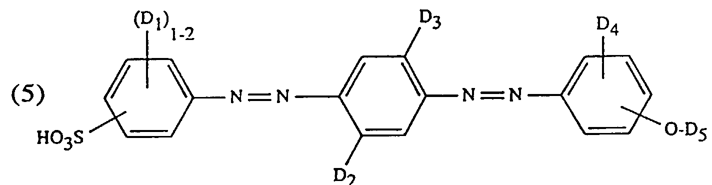 dans laquelle D₁, D₂ et D₃ sont des atomes d'hydrogène, des résidus alkyle en C₁₋₄, alcoxy en C₁₋₄, hydroxyalcoxy en C₂₋₄, alcanoylamino en C₂₋₄ ou carbamoyle et D₄ et D₅ représentent un atome d'hydrogène, un groupe alkyle en C₁₋₄ ou hydroxyalkyle en C₂₋₄, et (D₁)₁₋₂ représente un ou deux substituants D₁, et 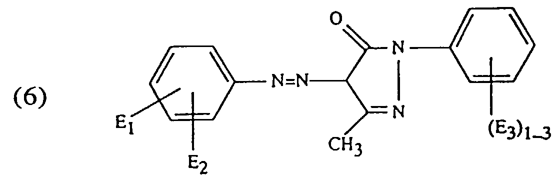 où E₁ est un atome d'hydrogène, un résidu alkyle en C₁₋₄, alcoxy en C₁₋₄, alcanoylamino en C₂₋₄, sulfo ou halogéno, E₂ est un atome d'hydrogène ou d'halogène, un groupe sulfo ou un groupe phénylsulfonyle ou naphtylsulfonyle éventuellement substitués, et (E₃)₁₋₃ représente de 1 à 3 substituants E₃, où E₃ est un atome d'hydrogène ou d'halogène, un alkyle en C₁₋₄, alcoxy en C₁₋₄ ou sulfo.

2. Procédé conforme à la revendication 1, caractérisé en ce que, dans le colorant de formule (1), R₁ et R₂ représentent, indépendamment l'un de l'autre, un atome d'hydrogène, un groupe alkyle en C₁₋₄ ou phényle.

3. Procédé conforme à une des revendication 1 et 2, caractérisé en ce que, dans le colorant de formule (1), R₃ représente un atome d'hydrogène, un résidu alkyle en C₁₋₄ ou un résidu phényle.

4. Procédé conforme à une des revendications 1 à 3, caractérisé en ce que, dans le colorant de formule (1), R₄ représente un atome d'hydrogène ou un résidu de formule -O-CH₂-CH(R₅)-OH et R₅ est un atome d'hydrogène ou un groupe alkyle en C₁₋₄ éventuellement hydroxylé.

5. Procédé conforme à une des revendications 1 à 4, caractérisé en ce que, dans le colorant de formule (1), R₁ et R₂ représentent, indépendamment l'un de l'autre, un atome d'hydrogène ou un groupe alkyle en C₁₋₄, R₃ représente un atome d'hydrogène, un groupe alkyle en C₁₋₄ ou phényle, R₄ est un atome d'hydrogène ou un résidu de formule -O-CH₂-CH(R₅)-OH où R₅ est un atome d'hydrogène ou un groupe alkyle en C₁₋₄ éventuellement hydroxylé, les noyaux benzéniques I et II sont substitués à leur tour indépendamment par un résidu alkyle en C₁₋₄, alcoxy en C₁₋₄, alcanoylamino en C₂₋₄ ou halogéno, et le groupe sulfo est lié au noyau benzénique I.

6. Procédé conforme à une des revendications 1 à 5, caractérisé en ce que, dans le colorant de formule (1), R₁ et R₂ représentent, indépendamment l'un de l'autre, un atome d'hydrogène ou un groupe alkyle en C₁₋₄, et R₄ est un résidu de formule -O-CH₂-CH(R₅)-OH où R₅ est un atome d'hydrogène ou un groupe alkyle en C₁₋₄ éventuellement hydroxylé, ou en ce que, dans le colorant de formule (1), R₁ est un atome d'hydrogène ou un groupe alkyle en C₁₋₄, R₂ est un groupe alkyle en C₂₋₄, et R₄ est un atome d'hydrogène.

7. Procédé conforme à la revendication 1, caractérisé en ce que que l'on utilise, comme colorant de formule (1), au moins un colorant de formule 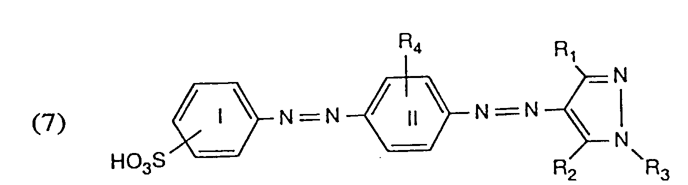 dans laquelle R₁ et R₂ représentent, indépendamment l'un de l'autre, un groupe méthyle ou éthyle, R₃ est un atome d'hydrogène, un résidu méthyle, éthyle ou phényle, R₄ est un atome d'hydrogène ou un résidu de formule -O-CH₂-CH(R₅)-OH, R₅ est un groupe méthyle ou éthyle et les noyaux benzéniques I et II peuvent être substitués, indépendamment l'un de l'autre, par un résidu méthyle, méthoxy, acétylamino ou chloro.

8. Procédé conforme à une des revendications 1 à 7, caractérisé en ce que l'on mélange au moins un colorant de formule (1) avec au moins un des colorants de formule (6), (8a), (8b), (10) et (11) : 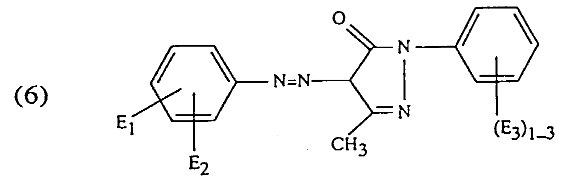 dans laquelle E₁ représente un atome d'hydrogène ou un groupe sulfo et E₂ représente un atome d'halogène ou un résidu phénylaminosulfonyle, (E₃)₁₋₃ représente de 1 à 3 substituants E₃ et E₃ représente un atome d'hydrogène ou d'halogène ou un résidu sulfo; 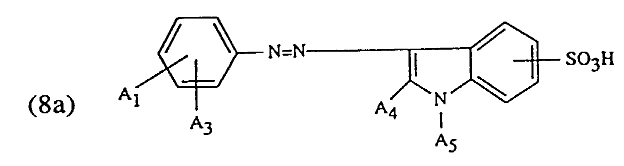 dans laquelle A₁ est un atome d'hydrogène, un groupe alkyle en C₁₋₄, alcoxy en C₁₋₄, alcanoylamino en C₂₋₄ ou halogéno, A₃ est un groupe phénylsulfonyle, A₄ un groupe alkyle en C₁₋₄ ou phényle et A₅ un atome d'hydrogène ou un groupe alkyle en C₁₋₈; 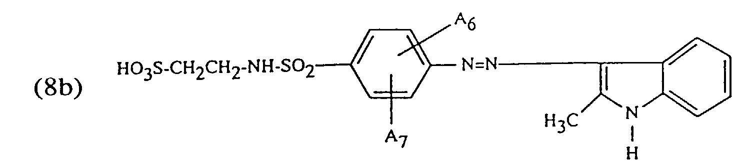 dans laquelle A₆ et A₇ représentent un atome d'hydrogène, un groupe alkyle en C₁₋₄, alcoxy en C₁₋₄, alcanoylamino ou halogéno; 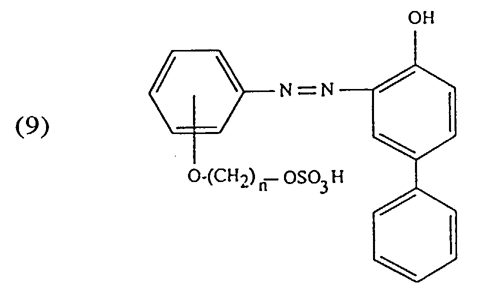 où n vaut entre 1 et 3; 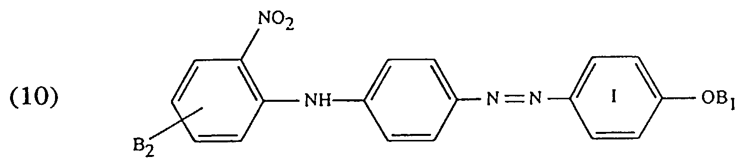 dans laquelle B₁ est un atome d'hydrogène ou un groupe phénylsulfonyle pouvant être substitué par un résidu alkyle en C₁₋₄, alcoxy en C₁₋₄ ou halogéno, B₂ est un groupe sulfo ou (alkyle en C₁₋₄)-sulfonylaminosulfonyle et le noyau benzénique I peut être substitué par un résidu alkyle en C₁₋₄, alcoxy en C₁₋₄ ou halogéno; et 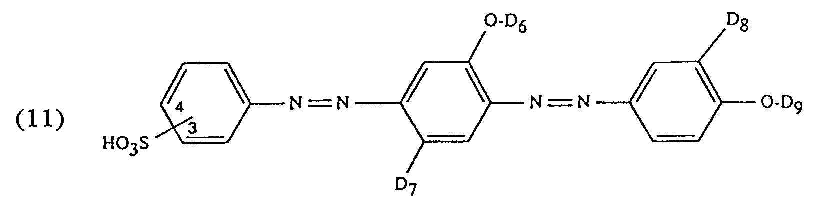 dans laquelle D₇ est un atome d'hydrogène ou un groupe méthyle, D₈ est un atome d'hydrogène ou un groupe méthyle et D₆ et D₉ représentent, indépendamment l'un de l'autre, un atome d'hydrogène, un résidu méthyle, éthyle, β-hydroxyéthyle, β-hydroxypropyle, β-hydroxybutyle ou α-éthyl-β-hydroxyéthyle, et le groupe sulfo est lié en position 3 ou 4 .

9. Procédé conforme à une des revendications 1 à 8, caractérisé en ce l'on mélange un colorant de formule (1) avec au moins un colorant de formule 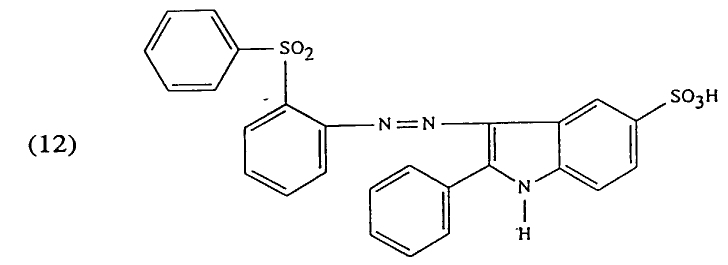 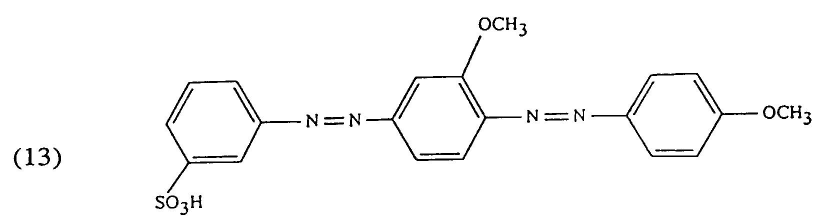 et

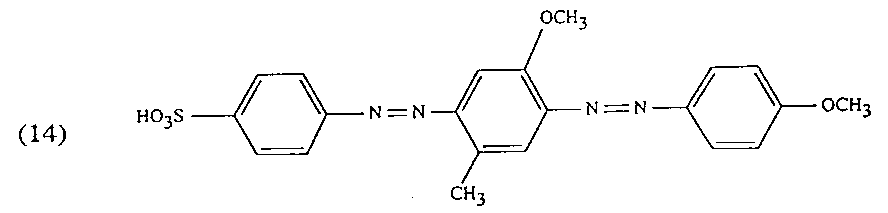

10. Procédé conforme à une des revendications 1 à 9, caractérisé en ce que le rapport des colorants de formule (1) aux colorants de formule (2) à (6) est compris entre 20:80 et 80:20, et en particulier entre 40:60 et 60:40.

11. Procédé pour la teinture et l'impression de matériaux fibreux en polyamide naturel ou synthétique avec un mélange de colorants, caractérisé en ce que l'on utilise un mélange de colorants obtenu conformément à une des revendications 1 à 10.

12. Procédé pour la teinture et l'impression de matériaux fibreux en polyamide naturel ou synthétique utilisant un mélange de colorants obtenu conformément à une des revendications 1 à 10 en combinaison avec d'autres colorants.

13. Procédé conforme à la revendication 12 pour la teinture ou l'impression en trichromie, caractérisé en ce que l'on utilise un mélange de colorants obtenu conformément à une des revendications 1 à 10 en combinaison avec au moins un colorant rouge et au moins un colorant bleu.
